(19) **Europäisches Patentamt European Patent Office Office européen des brevets**

(11) **EP 3 903 445 B1**

(12) **FASCICULE DE BREVET EUROPEEN**

(45) Date de publication et mention de la délivrance du brevet:
**27.08.2025 Bulletin 2025/35**

(21) Numéro de dépôt: **19848867.8**

(22) Date de dépôt: **17.12.2019**

(51) Classification Internationale des Brevets (IPC):
**H04L 9/32** *(2006.01)* **H04L 9/08** *(2006.01)*
**G07C 13/00** *(2006.01)*

(52) Classification Coopérative des Brevets (CPC):
**G07C 13/00; H04L 9/085; H04L 9/3255;**
H04L 2209/42; H04L 2209/463

(86) Numéro de dépôt international:
**PCT/FR2019/053113**

(87) Numéro de publication internationale:
**WO 2020/136319 (02.07.2020 Gazette 2020/27)**

(54) **PROCÉDÉ ET SYSTÈME DE VOTE ÉLECTRONIQUE**

VERFAHREN UND SYSTEME ZUR ELEKTRONISCHEN ABSTIMMUNG

METHOD AND SYSTEM FOR ELECTRONIC VOTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2018 FR 1874114**

(43) Date de publication de la demande:
**03.11.2021 Bulletin 2021/44**

(73) Titulaire: **Orange**
**92130 Issy-les-Moulineaux (FR)**

(72) Inventeurs:
- **TRAORE, Jacques**
  **92326 CHÂTILLON CEDEX (FR)**
- **DESMOULINS, Nicolas**
  **92326 CHÂTILLON CEDEX (FR)**
- **ODRIOSOLO, Guillaume**
  **92326 CHÂTILLON CEDEX (FR)**
- **OUOROU, Adam**
  **92326 CHÂTILLON CEDEX (FR)**

(74) Mandataire: **Cabinet Beau de Loménie**
**103, rue de Grenelle**
**75340 Paris Cedex 07 (FR)**

(56) Documents cités:
- **WEI HAN ET AL: "Filling the Gap between Voters and Cryptography in e-Voting", IACR, INTERNATIONAL ASSOCIATION FOR CRYPTOLOGIC RESEARCH, vol. 20070711:101017, 11 July 2007 (2007-07-11), pages 1 - 12, XP061002384, [retrieved on 20070711]**
- **PATACHI STEFAN ET AL: "Eos a Universal Verifiable and Coercion Resistant Voting Protocol", 6 October 2017, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 210 - 227, ISBN: 978-3-540-74549-5, XP047450605**
- **SHERMAN S M CHOW ET AL: "Escrowed Linkability of Ring Signatures and Its Applications", 1 January 2007, PROGRESS IN CRYPTOLOGY - VIETCRYPT 2006 LECTURE NOTES IN COMPUTER SCIENCE;;LNCS, SPRINGER, BERLIN, DE, PAGE(S) 175 - 192, ISBN: 978-3-540-68799-3, XP019053250**

- JOSEPH K LIU ET AL: "Ring Signature with Designated Linkability", 1 January 2006, ADVANCES IN INFORMATION AND COMPUTER SECURITY LECTURE NOTES IN COMPUTER SCIENCE;;LNCS, SPRINGER, BERLIN, DE, PAGE(S) 104 - 119, ISBN: 978-3-540-47699-3, XP019047459
- GUOMIN CHEN ET AL: "A New Receipt-Free Voting Scheme Based on Linkable Ring Signature for Designated Verifiers", EMBEDDED SOFTWARE AND SYSTEMS SYMPOSIA, 2008. ICESS SYMPOSIA '08. INTERNATIONAL CONFERENCE ON, IEEE, PISCATAWAY, NJ, USA, 29 July 2008 (2008-07-29), pages 18 - 23, XP031322200, ISBN: 978-0-7695-3288-2
- AGGELOS KIAYIAS ET AL: "Traceable Signatures", INTERNATIONAL ASSOCIATION FOR CRYPTOLOGIC RESEARCH,, vol. 20040112:065139, 12 January 2004 (2004-01-12), pages 1 - 35, XP061001125

**Description**

<u>Technique antérieure</u>

L'invention se situe dans le contexte du vote électronique.

Le vote électronique peut notamment être envisagé pour juguler l'abstention, automatiser le dépouillement et réduire le coût d'organisation des élections. Toutefois le vote électronique ne peut se développer que si les systèmes de vote proposés présentent de solides garanties de sécurité et sont ouverts à une vérification indépendante et aisément accessible aux électeurs.

La mise en place d'un système de vote électronique sûr pose de nombreuses difficultés inhérentes à la multiplicité des exigences de sécurité souvent antinomiques. Par exemple, l'électeur doit être authentifié, pour vérifier qu'il est bien inscrit sur les listes électorales, mais son vote doit rester secret (pour l'éternité). Il doit pouvoir s'assurer non seulement que son bulletin, ainsi que ceux des autres votants, est bien présent dans l'urne ; c'est la vérifiabilité individuelle. Il doit pouvoir s'assurer également que le résultat de l'élection correspond bien aux votes exprimés par des électeurs légitimes ; c'est la vérifiabilité universelle. Il doit aussi être incapable de prouver à autrui pour qui il a voté, de manière à décourager toute tentative de corruption ou d'extorsion sous la menace ; c'est l'exigence « receipt-freeness » en anglais, ou « sans reçu » en français.

Un article de Benoît Chevallier-Mames, Pierre-Alain Fouque, David Pointcheval, Julien Stern, Jacques Traoré : "On Some Incompatible Properties of Voting Schemes", Towards Trustworthy Elections - New Directions in Electronic Voting. Lecture Notes in Computer Science 6000, Springer 2010, ISBN 978-3-642-12979-7, pages 191-199. » a démontré qu'il est impossible, pour un protocole de vote en ligne, de concilier la vérifiabilité du décompte des voix, ou vérifiabilité universelle, et le secret absolu du vote : un protocole qui garantirait l'une de ces propriétés le ferait nécessairement au détriment de l'autre.

Au niveau académique, plusieurs protocoles de vote en ligne ont été élaborés au cours de ces dernières années. Ils ont le plus souvent recours de manière importante à la cryptographie pour garantir à la fois le secret souvent calculatoire du vote et/ou la vérifiabilité individuelle voire universelle des résultats.

On connait en particulier le protocole Helios développé par des chercheurs de l'Université d'Harvard et de l'Université catholique de Louvain et le protocole Belenios proposé par des chercheurs de l'INRIA et du CNRS.

L'un comme l'autre assure la vérifiabilité universelle des résultats et le secret calculatoire du vote. Mais ces protocoles rendent publique la liste d'émargement et permettent, de manière indirecte, la mise en relation de l'identité de l'électeur avec l'expression de son vote.

La présente invention vise une solution de vote électronique qui ne présente pas cet inconvénient.

<u>Objet et résumé de l'invention</u>

Selon un premier aspect, l'invention concerne un procédé de préparation d'un scrutin dans un système de vote électronique, ce procédé comportant :

- une étape de génération, par chaque module d'une pluralité de modules assesseurs d'un bureau de vote virtuel, d'une clé privée de déchiffrement partiel pour au moins un algorithme de chiffrement à seuil ;
- une étape de génération d'une clé publique pour chaque algorithme de chiffrement et de la clé privée correspondante;
- une étape de calcul, pour au moins une entité électeur autorisée à participer au scrutin, d'une valeur publique à partir d'une paire de clés d'un algorithme de signatures anonymes traçables, ladite valeur publique étant destinée à être utilisée par ladite entité électeur en association avec une clé privée de ladite entité électeur pour générer une clé publique anonyme, ladite clé privée étant destinée à être utilisée par ladite entité électeur pour calculer au moins une signature dans le cadre du scrutin, l'anonymat d'une signature ainsi obtenue ne pouvant être révoqué que par une entité de confiance, ladite entité électeur étant configurée pour obtenir sa dite clé publique anonyme de manière aveugle.

Corrélativement, l'invention vise un système de préparation d'un scrutin dans un système de vote électronique, ce système comportant :

- un module de génération, par chaque module assesseur d'un bureau de vote virtuel, d'une clef privée de déchiffrement partiel pour au moins un algorithme de chiffrement à seuil ;
- un module de génération d'une clé publique pour chaque algorithme de chiffrement et de la clé privée correspondante;
- un module de calcul, pour au moins une entité électeur autorisée à participer au scrutin, d'une valeur publique à partir d'une paire de clés d'un algorithme de signatures anonymes traçables, ladite valeur publique étant destinée à être utilisée par ladite entité électeur en association avec une clé privée de ladite entité électeur pour générer une clé publique anonyme, ladite clé privée étant destinée à être utilisée par ladite entité électeur pour calculer au moins une signature dans le cadre du scrutin, l'anonymat d'une signature ainsi obtenue ne pouvant être révoqué que par une entité de confiance, ladite entité électeur étant configurée pour obtenir sa dite clé publique anonyme de manière aveugle.

L'invention propose ainsi d'utiliser un schéma, ou algorithme, de signatures anonymes traçables dans un contexte de vote électronique. Elle garantit ainsi, à un utilisateur d'une entité électeur, le secret absolu de son vote sauf pour les administrateurs de l'entité de confiance, seuls aptes à révoquer ou lever l'anonymat du votant, par exemple dans le cas d'une procédure de recours.

En particulier, l'entité électeur obtient sa clé publique anonyme de manière aveugle. Ceci implique en particulier que les autorités de confiance qui produisent ces clés n'en ont pas connaissance. Un électeur ne peut donc pas soupçonner qu'une autorité de confiance ait utilisé sa clé pour voter à sa place.

Pour obtenir de manière aveugle sa clé publique anonyme, une entité électeur peut par exemple :

- dans un premier mode de réalisation, obtenir un générateur publié par une autorité de confiance, et calculer sa clé publique anonyme à partir de ce générateur et d'une clé privée de cette entité électeur, par exemple en élevant le générateur à une puissance obtenue à partir de cette clé privée ; et
- dans un deuxième mode de réalisation, recevoir des données d'une autorité de confiance, et calculer sa clé publique anonyme à partir de ces données et d'une clé privée de cette entité électeur.

On rappelle qu'un schéma de signatures anonymes est une variante d'un schéma de signature de groupe. La signature anonyme traçable utilisée dans l'invention peut permettre à une entité électeur de prouver son appartenance à un groupe, par exemple aux groupes des entités électeurs légitimes sans qu'elle ait à révéler son identité.

La signature anonyme utilisée dans l'invention est traçable ; par conséquent, il est possible, dans le contexte de l'invention de déterminer si deux signatures ont été émises par la même entité électeur ou par deux entités électeurs distinctes. La validité d'une signature peut être vérifiée par quiconque grâce à une clé publique caractérisant le groupe. Dans un premier exemple de réalisation la clé publique caractérisant le groupe est un ensemble de clés publiques anonymes. Dans un deuxième exemple de réalisation, cette clé est commune à l'ensemble des entités électeurs et est appelée "clé publique de groupe". Cette traçabilité peut être utilisée pour s'assurer qu'une entité électeur ne vote qu'une seule fois dans le cadre d'un scrutin.

Dans un mode particulier de réalisation, l'algorithme de signatures anonymes traçables utilisé dans l'invention est l'algorithme de signature ECDSA (pour « Elliptic Curve Digital Signature Algorithm ») ou la variante sur courbe elliptique de l'algorithme de signature de Schnorr.

L'invention utilise un algorithme de chiffrement à seuil pour chiffrer les votes électroniques, de sorte que la clé privée de déchiffrement est un secret réparti entre plusieurs modules assesseurs, les clés privées de chacun des modules assesseurs ne lui permettant de n'effectuer que des déchiffrements partiels d'un vote. Pour déchiffrer un vote, la coopération d'un nombre prédéfini, ou seuil, de ces modules assesseurs est donc requise. En notant $s$ le seuil et $n$ le nombre de modules assesseurs entre lesquels le secret est réparti, on ne peut déchiffrer un vote que si au moins $s$ modules assesseurs sur les $n$ coopèrent, et ce sans qu'il soit nécessaire de reconstituer la clé privée de déchiffrement.

Dans un mode particulier de réalisation, le bureau de vote virtuel comporte au moins trois assesseurs virtuels, indépendants. Dans un mode de réalisation, seuls ces modules assesseurs peuvent procéder au dépouillement du scrutin. Dans un mode particulier de réalisation, chaque module assesseur du bureau dispose d'une clé de déchiffrement partiel et il faut en réunir au moins deux sur les trois pour procéder au dépouillement d'un bulletin.

Dans un mode particulier de réalisation du procédé de préparation d'un scrutin selon l'invention, les clés publiques anonymes sont obtenues par au moins une permutation et au moins une anonymisation de clés publiques propres aux entités électeurs, l'anonymisation étant obtenue en utilisant une clé secrète d'une paire de clés, pour l'algorithme de signatures anonymes traçables, d'au moins une entité de confiance.

Dans un mode de réalisation, ce procédé comporte une étape de publication :

- d'une liste électorale comportant les identifiants des entités électeurs et leurs clés publiques propres ; et
- d'une liste des clés publiques anonymes.

Dans un mode particulier de réalisation, on utilise deux entités de confiance, à savoir :

- une entité organisateur dont un rôle principal consiste à préparer et fournir la liste électorale et à recevoir les résultats et ;
- une entité d'enregistrement, celle-ci pouvant être en charge de la fourniture du matériel de vote et de l'envoi de ce matériel aux entités électeurs. Cette entité peut aussi être chargée, en collaboration avec l'entité organisateur,

d'anonymiser la liste électorale et/ou de fournir les clés privées de groupe aux électeurs dûment enregistrés sur la liste électorale. Elle peut produire, en collaboration avec l'entité organisateur, et par exemple à la demande d'un juge, la liste d'émargement. Ce rôle d'enregistrement peut être exercé, pour plus de sécurité, par plusieurs entités et non une seule.

Dans un mode particulier de réalisation de l'invention, l'algorithme de chiffrement à seuil utilisé est un algorithme de chiffrement homomorphe additif à seuil. On rappelle qu'un tel mécanisme permet à partir d'un chiffré d'un message $m_1$ et d'un chiffré d'un message $m_2$ d'obtenir un chiffré du message $m_1+ m_2$.

Plus précisément, dans un mode de réalisation de l'invention, le schéma de chiffrement homomorphe additif à seuil utilisé dans l'invention est une variante du schéma de chiffrement d'El Gamal.

On rappelle que le principe de fonctionnement du schéma de chiffrement d'El Gamal est le suivant. Soient $G$ un groupe cyclique d'ordre premier $p$ et $g_T$ un générateur de $G$. Ce schéma utilise des clés dans lesquelles la clé privée est un élément $x_T \in Z_p^*$ et la clé publique est la paire ( $g_T, h_T = g_T^{x_T}$ ). Pour chiffrer un message $m \in G$, on choisit aléatoirement un élément $r \in Z_p^*$ puis on calcule ( $C_1 = g_T^r, C_2 = m \times h_T^r$ ). Le chiffré du message m est la paire $(C_1, C_2)$.

Le déchiffrement s'effectue en calculant : $m = \frac{C_2}{C_1^x}$.

Dans un mode de réalisation, l'invention utilise un schéma dans lequel pour chiffrer un message $m \in Z_p^*$ : on choisit aléatoirement un élément $r \in Z_p^*$ puis on calcule ( $C_1 = g_T^r, C_2 = g^m \times h_T^r$ ) où g est un générateur additionnel, choisi aléatoirement, de G, qui fait partie des paramètres publics du système. Nous supposerons en particulier que le logarithme discret de g en base $h_T$ est inconnu de tous. Le chiffré du message m est la paire $(C_1, C_2)$. Le déchiffrement du message s'effectue en calculant $g^m = \frac{C_2}{C_1^{x_T}}$, puis par recherche exhaustive, on retrouve m à partir de $g^m$. Si m est « petit », ce qui est le cas dans le contexte du protocole de vote car la valeur de m sera en fait bornée par le nombre de votants, le message pourra être retrouvé de manière quasi instantanée en utilisant l'algorithme de Shanks.

L'invention n'impose pas d'utiliser un schéma de chiffrement homomorphe. En variante, on peut utiliser un réseau de mélangeurs pour brasser les bulletins. On rappelle que le concept de réseaux de mélangeurs, ou « mix-networks » en anglais, permet de garantir la confidentialité des votes dans un système de vote électronique. Un mélangeur est un serveur qui prend en entrée un nombre arbitraire de données et qui a pour but de cacher la correspondance entre ces données et celles qu'il produira en sortie. L'utilisation de plusieurs mélangeurs en série (on parle dans ce cas de réseaux de mélangeurs) permet d'être sûr du résultat final dès lors qu'un des mélangeurs a réellement brassé les données. En pratique les données reçues en entrée du réseau de mélangeurs peuvent être des données chiffrées, en l'espèce les votes des électeurs, et le brassage effectué par le réseau permet de ne plus pouvoir tracer qui a chiffré quoi. On exige généralement des mélangeurs qu'ils prouvent qu'ils ont bien fait leur travail, c'est-à-dire que le brassage a bien été effectué et que des chiffrés n'ont pas été modifiés, rajoutés ou supprimés. La technique proposée par Jakobsson, Juels, et Rivest, connue sous le nom de RPC (Random Partial Checking) peut être utilisée pour réaliser ce type de preuve à divulgation nulle de connaissance.

A ce sujet, on rappelle qu'une preuve de connaissance dite à divulgation nulle de connaissance permet à un vérifieur de se convaincre qu'un certain prouveur connaît un secret satisfaisant un prédicat donné. La preuve ne révèle au vérifieur aucune information sur le secret en question.

Selon un deuxième aspect, l'invention vise un procédé de vote électronique mis en œuvre par une entité électeur dans le cadre d'un scrutin, ce procédé comportant :

- une étape d'obtention d'une clé publique pour au moins un algorithme de chiffrement à seuil ;
- une étape d'obtention d'une paire de clés d'un algorithme de signatures anonymes traçables, cette paire de clés comportant une clé publique anonyme obtenue de manière aveugle et une clé privée destinée à être utilisée par ladite entité électeur pour calculer au moins une signature dans le cadre du scrutin, l'anonymat d'une signature anonyme ainsi obtenue ne pouvant être révoqué que par au moins une entité de confiance ;
- une étape de choix d'un vote ;
- une étape de calcul d'un engagement sur ce vote ;
- une étape de calcul d'un chiffré de ce vote, ce chiffré étant calculé en utilisant ledit algorithme de chiffrement à seuil ;
- une étape de calcul d'une signature anonyme traçable dudit engagement en utilisant la clef privée de l'algorithme de signatures anonymes traçables ;

- une étape d'envoi d'un bulletin de vote comportant au moins cet engagement, le chiffré, et la signature anonyme traçable de l'entité électeur à une urne privée virtuelle.

Corrélativement, l'invention vise aussi une entité électeur pouvant être utilisée dans le cadre d'un scrutin comportant :

- un module d'obtention d'une clé publique pour au moins un algorithme de chiffrement à seuil ;
- un module d'obtention d'une paire de clés d'un algorithme de signatures anonymes traçables, cette paire de clés comportant une clé publique anonyme obtenue de manière aveugle et une clé privée destinée à être utilisée par cette entité électeur pour calculer au moins une signature dans le cadre du scrutin, l'anonymat d'une signature anonyme ainsi obtenue ne pouvant être révoqué que par au moins une entité de confiance;
- un module d'obtention d'un choix d'un vote ;
- un module de calcul d'un engagement sur le vote ;
- un module de calcul d'un chiffré du vote en utilisant ledit algorithme de chiffrement à seuil ;
- un module de calcul d'une signature anonyme traçable de cet engagement en utilisant la clef privée de l'algorithme de signatures anonymes traçables ;
- un module d'envoi d'un bulletin de vote comportant cet engagement, le chiffré, et la signature anonyme traçable de l'entité électeur à une urne privée virtuelle.

Dans le mode de réalisation décrit ici, l'urne privée virtuelle peut être un serveur administré par le bureau de vote. Son rôle peut être de collecter les bulletins émis par les entités électeurs, de les vérifier et de ne conserver que les bulletins valides.

Dans un mode de réalisation, chaque bulletin de vote valide peut comporter trois éléments : un engagement sur le vote, un chiffré de ce vote et une signature anonyme de l'entité électeur sur l'engagement.

Dans un mode de réalisation, chaque bulletin de vote valide peut comporter quatre éléments : un engagement sur le vote ainsi que sur une valeur aléatoire, un chiffré du vote, un chiffré de la valeur aléatoire, et une signature anonyme de l'entité électeur sur l'engagement. Ce mode de réalisation peut en particulier être mis en œuvre lorsque l'engagement utilise une fonction de hachage, le condensé étant calculé sur le vote et sur une variable aléatoire.

Dans un mode de réalisation, chaque bulletin de vote valide peut comporter cinq éléments : un engagement sur le vote ainsi que sur une valeur aléatoire, un chiffré du vote, un chiffré de la valeur aléatoire, une preuve que le vote correspond à un vote pour un des candidats en lice et une signature anonyme de l'entité électeur sur l'engagement et sur la preuve.

Dans un mode de réalisation, chaque bulletin de vote valide peut comporter six éléments : un engagement sur le vote ainsi que sur une valeur aléatoire, un chiffré du vote, un chiffré de la valeur aléatoire, une première preuve que le vote correspond à un vote pour un des candidats en lice, une deuxième preuve que les textes clairs associés aux chiffrés, à savoir le vote et la variable aléatoire, sont ceux qui ont été mis en gage dans l'engagement, et une signature anonyme de l'entité électeur sur l'engagement et sur la première preuve.

Dans un mode particulier de réalisation de l'invention, l'urne privée virtuelle est administrée de manière décentralisée, par exemple selon le principe d'une chaîne de blocs privée.

Dans un mode particulier de réalisation, l'urne privée virtuelle peut transmettre, pour chaque bulletin valide :

- l'engagement sur le vote ou sur le vote et sur la valeur aléatoire ;
- la signature anonyme ; et éventuellement
- la preuve que le vote correspond à un vote pour un des candidats en lice.

L'engagement, ou mise en gage, sur le vote permet à l'entité électeur de s'engager sur le vote sans le dévoiler a priori et que cet engagement ne soit plus modifiable a posteriori. Ainsi, l'entité urne privée virtuelle a l'assurance que l'entité électeur ne peut plus changer son vote.

Dans un mode de réalisation de l'invention, l'engagement est réalisé en utilisant une fonction de hachage. Une telle fonction est difficile à inverser de sorte que personne n'est en mesure d'obtenir le vote lui-même.

Dans un mode de réalisation, l'invention utilise le schéma de mise en gage proposé de Pedersen. Ce schéma a la particularité de produire des engagements parfaitement non distinguables (« perfectly hiding » en anglais), d'être résistants aux collisions et d'être homomorphe pour l'addition.

Dans un mode particulier de réalisation, le procédé de vote selon l'invention comporte :

- une étape de génération d'une valeur aléatoire, l'engagement portant sur le vote et sur la valeur aléatoire ;
- une étape de calcul d'un chiffré de la valeur aléatoire, en utilisant ledit algorithme de chiffrement à seuil ; et dans lequel
- ledit bulletin de vote comporte en outre ce chiffré.

Dans un mode particulier de réalisation, le procédé de vote selon l'invention comporte :

- une étape de génération d'une première preuve à divulgation nulle de connaissance prouvant que le vote mis en gage au travers de l'engagement porte sur des candidats en lice ; et/ou
- une étape de génération d'une deuxième preuve à divulgation nulle de connaissance prouvant que les textes clairs associés auxdits chiffrés sont ceux qui ont été mis en gage dans l'engagement ; et dans lequel
- ledit bulletin de vote comporte en outre au moins une de ces preuves.

Dans un mode particulier de réalisation, l'invention utilise un premier algorithme de chiffrement à seuil pour calculer un chiffré sur un vote et un deuxième algorithme de chiffrement à seuil pour calculer un chiffré sur une valeur aléatoire utilisée dans un engagement sur ledit vote, une clé privée de déchiffrement partiel étant générée pour chaque module assesseur et pour chacun des algorithmes.

L'invention vise aussi un procédé de validation et d'archivage d'un vote électronique dans le cadre d'un scrutin, ce procédé étant mis en œuvre par urne privée virtuelle et comportant :

- une étape de réception d'un bulletin de vote comportant au moins un engagement sur un vote, un chiffré du vote, un chiffré d'une valeur aléatoire utilisée dans l'engagement du vote et une signature anonyme traçable d'une entité électeur ;
- une étape de vérification de la signature anonyme traçable ;
- une étape de vérification de l'absence dans l'urne privée virtuelle d'au moins deux bulletins de vote comportant des signatures anonymes traçables associées à une même clé publique anonyme ;
- si le résultat desdites vérifications est positif, une étape d'envoi à une urne publique virtuelle d'un bulletin de vote tronqué comportant l'engagement et la signature anonyme traçable ;
- une étape de stockage des bulletins de vote jusqu'à l'expiration d'un délai de recours.

Corrélativement, l'invention concerne un dispositif de validation et d'archivage d'un vote électronique dans le cadre d'un scrutin, ce dispositif étant associé à une urne privée virtuelle et comportant :

- un module de réception d'un bulletin de vote comportant au moins un engagement sur un vote, un chiffré du vote, un chiffré d'une valeur aléatoire utilisée dans l'engagement du vote et une signature anonyme traçable d'une entité électeur ;
- un module de vérification de ladite signature anonyme traçable ;
- un module de vérification de l'absence dans l'urne privée virtuelle d'au moins deux bulletins de vote comportant des signatures anonymes traçables associées à une même clé publique anonyme;
- un module configuré pour envoyer, si le résultat desdites vérifications est positif, à une urne publique virtuelle, un bulletin de vote tronqué comportant cet engagement et ladite signature anonyme traçable;
- un module de stockage des bulletins de vote jusqu'à l'expiration d'un délai de recours.

Dans un mode de réalisation, les bulletins de vote sont détruits à l'expiration de ce délai de recours.

Comme mentionné précédemment, les bulletins de vote peuvent aussi comporter une première preuve à divulgation nulle de connaissance prouvant que le vote mis en gage au travers de l'engagement porte sur des candidats en lice et/ou une deuxième preuve à divulgation nulle de connaissance prouvant que les textes clairs associés aux chiffrés sont ceux qui ont été mis en gage dans l'engagement.

Dans un mode particulier de réalisation, l'invention utilise un premier algorithme de chiffrement à seuil pour calculer un chiffré sur un vote et un deuxième algorithme de chiffrement à seuil pour calculer un chiffré sur une valeur aléatoire utilisée dans un engagement sur ledit vote, une clé privée de déchiffrement partiel étant générée pour chaque module assesseur et pour chacun des algorithmes.

L'invention vise aussi un procédé de validation et d'archivage d'un vote électronique dans le cadre d'un scrutin, ce procédé étant mis en œuvre par urne privée virtuelle et comportant :

- une étape de réception d'un bulletin de vote comportant au moins un engagement sur un vote, un chiffré du vote, un chiffré d'une valeur aléatoire utilisée dans l'engagement du vote et une signature anonyme traçable d'une entité électeur ;
- une étape de vérification de la signature anonyme traçable ;
- une étape de vérification de l'absence dans l'urne privée virtuelle d'au moins deux bulletins de vote comportant des signatures anonymes traçables associées à une même clé publique anonyme ;
- si le résultat desdites vérifications est positif, une étape d'envoi à une urne publique virtuelle d'un bulletin de vote tronqué comportant l'engagement et la signature anonyme traçable ;

- une étape de stockage des bulletins de vote jusqu'à l'expiration d'un délai de recours.

Corrélativement, l'invention concerne un dispositif de validation et d'archivage d'un vote électronique dans le cadre d'un scrutin, ce dispositif étant associé à une urne privée virtuelle et comportant :

- un module de réception d'un bulletin de vote comportant au moins un engagement sur un vote, un chiffré du vote, un chiffré d'une valeur aléatoire utilisée dans l'engagement du vote et une signature anonyme traçable d'une entité électeur ;
- un module de vérification de ladite signature anonyme traçable ;
- un module de vérification de l'absence dans l'urne privée virtuelle d'au moins deux bulletins de vote comportant des signatures anonymes traçables associées à une même clé publique anonyme;
- un module configuré pour envoyer, si le résultat desdites vérifications est positif, à une urne publique virtuelle, un bulletin de vote tronqué comportant cet engagement et ladite signature anonyme traçable;
- un module de stockage des bulletins de vote jusqu'à l'expiration d'un délai de recours.

Dans un mode de réalisation, les bulletins de vote sont détruits à l'expiration de ce délai de recours.
Dans un mode de réalisation, le bulletin de vote comporte en outre une première preuve à divulgation nulle de connaissance prouvant que le vote mis en gage au travers de l'engagement porte sur des candidats en lice et/ou une deuxième preuve à divulgation nulle de connaissance prouvant que les textes clairs associés aux chiffrés sont ceux qui ont été mis en gage dans l'engagement ;

- ledit procédé de validation et d'archivage comportant en outre une étape de vérification de ces preuves à divulgation nulle de connaissance ;
- le bulletin de vote tronqué envoyé à l'urne publique virtuelle si le résultat des vérifications est positif, comportant la première preuve.

Dans un mode de réalisation de l'invention, le rôle de l'urne publique virtuelle est de conserver les « éléments de preuve », c'est-à-dire les engagements et les signatures transmises par l'urne privée, qui permettront d'auditer l'élection.
Cette urne publique virtuelle permet à chaque entité électeur de vérifier à tout moment, comme pour une élection traditionnelle, que son bulletin électronique figure bien dans l'urne publique virtuelle, qu'il n'a pas été modifié et que seules les entités électeurs légitimes ont voté. Cependant, l'urne publique ne permet pas de connaître l'identité des entités électeurs ayant participé au vote.
Dans un mode de réalisation, une blockchain publique pourrait faire office d'urne publique afin d'offrir plus de transparence aux électeurs et de garantir la sincérité du scrutin.
En effet, conformément à l'invention, le résultat de l'élection est vérifiable par tous, dans le cadre d'une procédure d'audit. En particulier, conformément à cette procédure, un observateur peut vérifier grâce aux signatures et aux engagements que tous les bulletins tronqués publiés sur l'urne virtuelle publique proviennent bien d'électeurs légitimes et que ceux-ci n'ont voté qu'une seule fois.
Par conséquent, l'invention vise aussi un procédé d'audit d'un scrutin dans lequel:

- les bulletins de vote sont stockés dans une urne privée virtuelle, chaque bulletin de vote comportant un engagement sur un vote et sur une valeur aléatoire, un chiffré du vote, un chiffré de ladite valeur aléatoire et une signature anonyme traçable d'une entité électeur;
- des bulletins de vote tronqués obtenus à partir de ces bulletins de vote sont stockés dans une urne publique virtuelle, chaque bulletin de vote tronqué comportant ledit engagement et la signature anonyme traçable,

ledit procédé comportant :

- une étape d'obtention, à l'issue d'un dépouillement des bulletins de vote, d'un résultat du scrutin et d'une valeur correspondant à la somme des valeurs aléatoires ;
- une étape d'obtention des bulletins de vote tronqués stockés dans l'urne publique virtuelle ;
- une étape de vérification des signatures anonymes traçables, des bulletins de vote tronqués et de vérification que l'urne publique ne comporte pas au moins deux bulletins de vote tronqués comportant des signatures anonymes traçables associées à une même clé publique anonyme ;
- une étape de calcul d'un engagement d'audit à partir des engagements de tous les bulletins de vote tronqués,
- une étape de détermination d'un résultat d'audit en comparant l'engagement d'audit avec un engagement calculé sur le résultat et sur la valeur.

Corrélativement, l'invention concerne un dispositif d'audit d'un scrutin dans lequel :

- les bulletins de vote sont stockés dans une urne privée virtuelle, chaque bulletin de vote comportant un engagement sur un vote et sur une valeur aléatoire, un chiffré du vote, un chiffré de la valeur aléatoire et une signature anonyme traçable d'une entité électeur ;
- des bulletins de vote tronqués obtenus à partir des bulletins de vote sont stockés dans une urne publique virtuelle, chaque bulletin de vote tronqué comportant l'engagement et la signature anonyme traçable,

ce dispositif comportant :

- un module d'obtention, à l'issue d'un dépouillement des bulletins de vote, d'un résultat du scrutin et d'une valeur correspondant à la somme des valeurs aléatoires ;
- un module d'obtention des bulletins de vote tronqués stockés dans l'urne publique virtuelle ;
- un module de vérification des signatures anonymes traçables desdits bulletins de vote tronqués et de vérification de l'absence dans ladite urne publique d'au moins deux bulletins de vote tronqués comportant des signatures anonymes traçables associées à une même clé publique anonyme ;
- un module de calcul d'un engagement d'audit à partir des engagements de tous les bulletins de vote tronqués,
- un module de détermination d'un résultat d'audit en comparant l'engagement d'audit avec un engagement calculé sur ledit résultat et sur ladite valeur.

Dans un mode de réalisation, les bulletins de vote comportent en outre une première preuve à divulgation nulle de connaissance prouvant que le vote mis en gage au travers de l'engagement porte sur des candidats en lice et/ou une deuxième preuve à divulgation nulle de connaissance prouvant que les textes clairs associés aux chiffrés sont ceux qui ont été mis en gage dans l'engagement et les bulletins de vote tronqués comportant en outre cette première preuve.

L'invention garantit à un utilisateur le secret absolu de son vote sauf pour les entités assesseurs qui, si elles agissent conjointement, sont les seules aptes à lever l'anonymat d'un vote, par exemple dans le cas d'une procédure de recours.

Par ailleurs, l'invention vise aussi un procédé de recours mis en œuvre par un système de recours à l'issue d'un scrutin auquel ont participé des entités électeurs, des identifiants et des clés publiques propres respectives de ces entités électeurs étant enregistrés dans une liste électorale, les clés publiques propres étant conformes à un schéma de signatures anonymes traçables, le procédé comportant :

- une étape d'obtention d'une liste des clés publiques anonymes utilisées par les entités électeurs, pour produire des signatures conformes audit schéma et comprises dans des bulletins de vote ;
- une étape de génération, par au moins une entité de confiance, d'une liste de recours dont les éléments sont des clés publiques ré-identifiées obtenues en levant l'anonymat des clés publiques de cette liste; et
- une étape de vérification que les clés publiques ré-identifiées de la liste de recours sont toutes comprises dans la liste électorale.

Corrélativement, l'invention vise un système de recours configuré pour procéder à un recours à l'issue d'un scrutin auquel ont participé des entités électeurs, des identifiants et des clés publiques propres respectives des entités électeurs étant enregistrés dans une liste électorale, les clés publiques propres étant conformes à un schéma de signatures anonymes traçables, dans lequel :

- au moins une entité de confiance est configurée pour générer une liste de recours dont les éléments sont des clés publiques ré-identifiées obtenues en levant l'anonymat de clés publiques contenues dans une liste de clés publiques anonymes utilisées par les entités électeurs pour produire des signatures conformes audit schéma et comprises dans des bulletins de vote ;
- ledit système comportant un module de contrôle configuré pour vérifier que les clés publiques ré-identifiées de la liste de recours sont toutes comprises dans ladite liste électorale.

Dans un mode particulier de réalisation, le procédé de recours selon l'invention comporte une étape d'établissement d'une liste d'émargement établissant l'identité des entités électeurs ayant participé au scrutin, en rapprochant la liste de recours et la liste électorale.

L'invention vise aussi un procédé de vote électronique comportant :

- la mise en œuvre d'un procédé de préparation d'un scrutin tel que mentionné ci-dessus ;
- la mise en œuvre d'un procédé de vote tel que mentionné ci-dessus ;

- la mise en œuvre d'un procédé de dépouillement comportant :

    - une étape d'obtention, par chacun d'une pluralité de modules assesseurs d'un bureau de vote virtuel, d'une clé privée de déchiffrement partiel pour au moins un algorithme de chiffrement à seuil ;
    - une étape d'obtention, après la clôture du scrutin, et par chacun de la pluralité de modules assesseurs, d'au moins un bulletin de vote collecté par une urne privée virtuelle, chaque bulletin de vote comportant au moins un engagement sur un vote, un chiffré dudit vote, et une signature anonyme traçable d'une entité électeur ;
    - une étape d'obtention par chacun desdits modules assesseurs, d'un chiffré du résultat du scrutin ;
    - une étape, mise en œuvre par chacun desdits modules assesseurs, de déchiffrement partiel dudit chiffré du résultat du scrutin à l'aide de sa clé privée de déchiffrement partiel ;
    - lorsqu'un nombre prédéterminé de modules assesseurs correspondant audit seuil ont procédé audit déchiffrement partiel dudit chiffré du résultat du scrutin, une étape d'obtention conjointe d'un résultat dudit scrutin ; et
    - une étape de publication dudit résultat ;

- la mise en œuvre d'un procédé de validation et d'archivage tel que mentionné ci-dessus;
- éventuellement la mise en œuvre d'un procédé d'audit tel que mentionné ci-dessus; et
- éventuellement la mise en œuvre d'un procédé de recours tel que mentionné ci-dessus.

L'invention vise aussi un système de vote électronique comportant au moins un dispositif de préparation d'un scrutin, une entité électeur, un système de dépouillement électronique, un dispositif de validation et d'archivage, un dispositif d'audit et un système de recours tels que mentionnés ci-dessus.

Dans un mode particulier de réalisation, les différentes étapes des procédés selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre d'au moins un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, ce document divulgue également un deuxième procédé de génération de clés pour un schéma de signatures anonymes $SigA_2$, ce procédé comportant :

- une étape de calcul, par au moins une entité de révocation, d'une paire de clés de révocation comportant une clé publique et une clé privée, cette, clé privée pouvant être utilisée par cette entité de révocation pour révoquer l'anonymat d'une signature anonyme conforme audit schéma $SigA_2$ ;
- une étape d'enregistrement, par une entité d'administration d'un groupe, d'au moins une entité membre auprès du groupe;
- une étape de calcul, à partir de la clé publique de la paire de clé de révocation, d'un générateur de trace, ledit générateur de trace étant destiné à être utilisé par chaque entité membre enregistrée dans le groupe pour générer une trace représentative de cette entité membre et invariante par rapport aux signatures anonymes générées par cette entité membre conformément au schéma $SigA_2$ ;
- chaque entité membre étant configurée pour obtenir de façon aveugle une clé privée de groupe, cette clé privée étant utilisée par cette entité membre pour générer des signatures anonymes conformes au schéma $SigA_2$, ces signatures anonymes comportant la trace.

Corrélativement, ce document divulgue un système de génération de clés pour le schéma de signatures anonymes $SigA_2$, ce système comportant :

- au moins une entité de révocation configurée pour calculer une paire de clés de révocation comprenant une clé publique et une clé privée, cette clé privée pouvant être utilisée par l'entité de révocation pour révoquer l'anonymat d'une signature anonyme conforme audit schéma SigA$_2$;

- une entité d'administration de groupe configurée pour enregistrer au moins une entité membre auprès dudit groupe;
- l'entité de révocation étant configurée pour calculer, à partir d'une clé publique de la paire de clés de révocation, un générateur de trace, ce générateur de trace étant destiné à être utilisé par chaque entité membre pour générer une trace représentative de cette entité membre, cette trace étant invariante par rapport aux signatures anonymes générées par cette entité membre conformément audit schéma SigA$_2$;
- chaque entité membre étant configurée pour obtenir de façon aveugle une clé privée de groupe, cette clé privée étant utilisée par l'entité membre pour générer des signatures anonymes conformes au schéma SigA$_2$, ces signatures anonymes comportant la trace.

Le schéma SigA$_2$ est un schéma de signatures anonymes dans lequel les signatures de groupe sont traçables.

De façon avantageuse, et contrairement aux attestations anonymes directes, l'anonymat d'une signature anonyme générée par les membres du groupe conformément au schéma SigA$_2$ peut être levé par les entités de révocation.

Ce schéma SigA$_2$ s'avère par ailleurs plus efficace, en particulier en termes de temps de calcul, que les schémas d'attestations anonymes directes DAA ou de signatures de groupe de l'état de la technique. La sécurité de ce schéma de signatures anonymes s'appuie par ailleurs sur une hypothèse de sécurité dite « non-interactive » considérée comme plus « standard » par la communauté cryptographique qu'une hypothèse de sécurité dite « interactive » (par exemple faisant appel à un oracle) sur lesquelles s'appuient les schémas d'attestations anonymes directes les plus efficaces de l'état de la technique. Un tel schéma de signatures anonymes offre ainsi une meilleure sécurité.

Dans un mode particulier de réalisation, ce deuxième procédé de génération de clés proposé comporte :

- une étape de génération d'une paire de clés du schéma SigA$_2$ pour l'entité d'administration du groupe ;
- la clé publique de la paire de clé de révocation étant calculée à partir d'une clé publique de cette paire de clés.

Dans un mode particulier de réalisation de ce deuxième procédé de génération de clés, le générateur de trace est renouvelé périodiquement.

Dans un mode particulier de réalisation de ce deuxième procédé de génération de clé, le générateur de trace est spécifique à un service donné. Le service correspond par exemple à un scrutin spécifique.

En effet, de par ces fonctionnalités, le deuxième procédé de génération de clés proposé peut s'appliquer au vote électronique. Il offre en effet un schéma de signature :

- anonyme ce qui permet d'assurer le secret du vote ;
- traçable ce qui permet de s'assurer qu'un électeur ne vote pas deux fois ;
- dans lequel les anonymats des signatures sont révocables, permettant ainsi à des entités de révocation, en cas de recours par exemple, d'établir une liste d'émargement du scrutin.

L'invention vise aussi un deuxième procédé de signature anonyme d'un message, ce procédé étant mis en œuvre par une entité membre d'un groupe et comportant :

- une étape d'enregistrement de ce membre auprès d'une entité d'administration du groupe ;
- une étape de génération d'une trace à partir d'un générateur de trace calculé par au moins une entité de révocation et compris dans une clé publique du groupe, cette trace étant invariante par rapport aux signatures anonymes générées par cette entité membre conformément au schéma ;
- une étape d'obtention, de manière aveugle d'une clé privée de groupe ;
- une étape de génération d'au moins une signature conformément au schéma de signatures anonymes SigA$_2$ en utilisant la clé privée de groupe, la signature comportant la trace.

Corrélativement, l'invention vise un dispositif de signature anonyme d'un message mis en œuvre par une entité membre d'un groupe et comportant :

- un module d'enregistrement de cette entité membre auprès d'une entité d'administration du groupe ;
- un module de génération d'une trace à partir d'un générateur de trace calculé par au moins une entité de révocation et compris dans une clé publique du groupe, cette trace étant invariante par rapport aux signatures anonymes générées par cette entité membre conformément au schéma SigA$_2$;
- un module d'obtention, de manière aveugle, d'une clé privée de groupe ;
- une étape de génération d'au moins une signature en utilisant cette clé privée de groupe, cette signature comportant la trace.

Dans un mode particulier de réalisation, les différentes étapes du deuxième procédé de génération de clés et du procédé de vote selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre d'au moins un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les instructions de ce programme peuvent être comprises dans un support d'informations lisible par un ordinateur tel que mentionné précédemment.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un système de vote électronique conforme à un mode de réalisation de l'invention ;
- la figure 2 représente sous forme d'organigramme les principales étapes d'un procédé de préparation de scrutin conforme à l'invention ;
- la figure 3 représente sous forme d'organigramme les principales étapes d'un procédé de vote conforme à l'invention ;
- la figure 4 représente sous forme d'organigramme les principales étapes d'un procédé de validation et d'archivage conforme à l'invention.
- la figure 5 représente, sous forme d'organigramme, les principales étapes d'un procédé de dépouillement conforme à un mode particulier de réalisation de l'invention.
- la figure 6 représente les principales étapes d'un procédé d'audit conforme à un mode particulier de réalisation de l'invention ;
- la figure 7 représente sous forme d'organigramme, les principales étapes d'un procédé de recours conforme à un mode de réalisation de l'invention ; et
- la figure 8 représente l'architecture matérielle des dispositifs utilisés dans l'invention, dans un mode particulier de réalisation ;
- la figure 9 représente un système de génération de clés et un dispositif de signature anonyme conformes au schéma de signatures anonymes traçables $SigA_2$ ;
- la figure 10 représente sous forme d'organigramme les principales étapes d'un deuxième procédé de génération de clés conforme à l'invention ;
- la figure 11 représente sous forme d'organigramme les principales étapes d'un procédé de signature d'un message conformément au schéma $SigA_2$;
- la figure 12 représente sous forme d'organigramme les principales étapes d'un procédé de vérification d'une signature conforme au schéma $SigA_2$;
- la figure 13 représente, sous forme d'organigramme, les principales étapes d'un procédé de levée d'anonymat pouvant être utilisé dans le contexte du schéma $SigA_2$ ;
- la figure 14 représente un système de vote électronique utilisant le schéma de signatures anonymes $SigA_2$ ;
- la figure 15 représente sous forme d'organigramme les principales étapes d'un procédé de génération de clés dans le système de vote de la figure 14 ;
- la figure 16 représente sous forme d'organigramme les principales étapes d'un procédé de vote utilisant le schéma de signatures anonymes $SigA_2$ ;
- la figure 17 représente sous forme d'organigramme les principales étapes d'un procédé de vérification d'une signature pouvant être utilisé dans le système de vote de la figure 14 ;
- la figure 18 représente, sous forme d'organigramme, les principales étapes d'un procédé de levée d'anonymat pouvant être utilisé dans le système de vote de la figure 14 ;
- la figure 19 représente l'architecture matérielle des dispositifs utilisés dans un mode particulier de réalisation du système de la figure 9.

Description détaillée des modes de réalisation

Notations et hypothèses :

Dans les modes de réalisation présentés ci-après, l'invention met en œuvre, dans au moins certains de ces aspects :

- des entités électeurs : les entités électeurs autorisées à participer au scrutin sont dites légitimes ; ces entités expriment leur vote au travers de leur bulletin et émergent de manière anonyme au moment de voter. Elles peuvent s'assurer que leur bulletin sera bien pris en compte en vérifiant qu'un engagement sur leur vote apparaît bien sur une urne publique virtuelle. Elles ont également la possibilité d'auditer a posteriori le dépouillement grâce aux données publiées sur une urne publique virtuelle ;
- des candidats ayant présenté leur candidature, dits candidats en lice ;
- un bureau de vote virtuel comportant des entités assesseurs, elles seules pouvant procéder au dépouillement du scrutin. Un nombre prédéterminé (seuil) d'entités assesseurs doit être réuni pour procéder au dépouillement ;
- une entité organisateur qui fournit la liste électorale et reçoit les résultats du vote ;
- une entité d'enregistrement chargée, en collaboration avec l'entité organisateur d'anonymiser la liste électorale et/ou de fournir les clés privées de groupe aux électeurs dûment enregistrés sur la liste électorale ; elle peut produire, en collaboration avec l'entité organisateur, et notamment à la demande d'un juge, la liste d'émargement ;
- une urne privée virtuelle. Il peut s'agir d'un serveur administré par le bureau de vote. Son rôle peut être de collecter les bulletins de vote émis par les entités électeurs, de les vérifier et de ne conserver que les bulletins valides. L'urne privée virtuelle peut transmettre, pour chaque bulletin valide, des données publiques à une urne publique virtuelle ;
- une urne publique virtuelle : son rôle peut être de conserver des données publiques constituant des éléments de preuve permettant d'auditer l'élection.

Dans la suite de ce document, nous utiliserons la notation $PoK(\alpha_1, \alpha_2, ..., \alpha_n : \mathcal{R}(\alpha_1, \alpha_2, ..., \alpha_n))$ pour désigner une preuve de connaissance à divulgation nulle de connaissance d'éléments $\alpha_1, \alpha_2, ..., \alpha_n$ satisfaisant la relation $\mathcal{R}$. Ainsi une preuve de connaissance des deux facteurs premiers d'un module RSA (du nom des inventeurs, « Rivest-Shamir-Adleman ») public $N$ serait notée : $PoK(\alpha_1, \alpha_2 : N = \alpha_1 \cdot \alpha_2 \wedge (\alpha_1 \neq 1) \wedge (\alpha_2 \neq 1))$.

Pour mémoire une preuve de connaissance dite à divulgation nulle de connaissance permet à un vérifieur de se convaincre qu'un certain prouveur connaît bien un secret S satisfaisant un prédicat **P** donné, par exemple la factorisation d'un nombre N donné. La preuve ne révèle au vérifieur aucune information sur le secret **S** en question, ici la factorisation de N, hormis le fait que celui-ci vérifie le prédicat P donné.

Dans la description à venir :

- $p$ est un nombre premier ;
- le groupe $G_1$ est un groupe cyclique d'ordre $p$ utilisé par les entités électeurs $V_i$ pour calculer des engagements sur leur vote $v_i$ en utilisant un premier schéma d'engagement; $g_0$, $g$, et $g_T$ sont des générateurs de ce groupe choisis aléatoirement ;
- le groupe $G_2$ est un groupe cyclique d'ordre $p$ utilisé pour chiffrer des valeurs aléatoires $r_i$ utilisées dans ces engagements ; $\tilde{g}$, $\widetilde{g_T}$ sont des générateurs de ce groupe choisis aléatoirement ;
- $\mathcal{H}$ est une fonction de hachage de $\{0,1\} \rightarrow Z_p$;
- e est un couplage bilinéaire de type 2 ou 3, défini sur l'ensemble $G_1 \times G_2$ vers l'ensemble $G_T$.

On rappelle qu'un couplage bilinéaire, noté e, est une application définie sur un ensemble $G_1 \times G_2$ vers un ensemble $G_T$, où $G_1$, $G_2$ et $G_T$ désignent des groupes cycliques d'ordre $p$, $p$ étant un nombre premier. Cette application e vérifie les propriétés suivantes :

- Bilinéarité : $\forall g_1 \in G_1$, $\forall g_2 \in G_2$ et $\forall (a, b) \in Z_p$, $e(g_1^a, g_2^b) = e(g_1, g_2)^{ab}$
- Non dégénérée : Pour $g_1 \neq 1_{G_1}$ et $g_2 \neq 1_{G_2}$, $e(g_1, g_2) \neq 1_{G_T}$, où $g_1$ (respectivement $g_2$) désigne l'élément neutre du groupe $G_1$ (respectivement $G_2$) ;
- Calculable : $\forall g_1 \in G_1$, $\forall g_2 \in G_2$, il existe un algorithme efficace pour calculer $e(g_1, g_2)$.

En pratique, les groupes $G_1$, $G_2$ et $G_T$ seront choisis de telle sorte qu'il n'existe pas d'isomorphisme calculable efficacement entre $G_1$ et $G_2$.

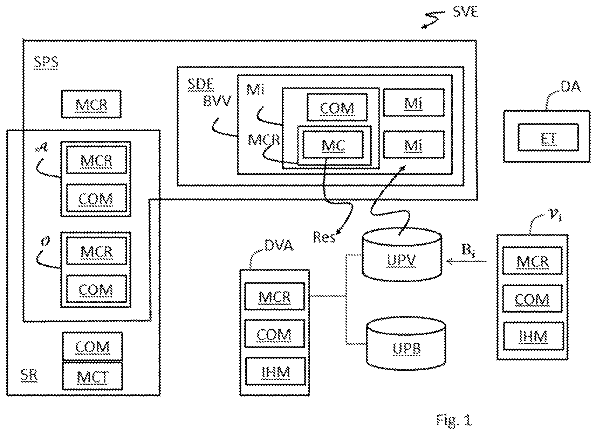

La figure 1 représente un système SVE de vote électronique conforme à un mode de réalisation de l'invention. Ce système comporte :

- une pluralité de modules assesseurs $M_i$ d'un bureau de vote virtuel BVV. Dans le mode de réalisation décrit ici, le bureau de vote virtuel BVV comporte trois modules assesseurs $M_i$ ;
- un système SPS de préparation d'un scrutin comportant ces trois modules assesseurs Mi, une entité organisateur $\mathcal{O}$ et une entité d'enregistrement $\mathcal{A}$ et un module cryptographique MCR ;
- une pluralité d'entités électeurs $V_i$ dont un seul est représenté ;
- un système de dépouillement électronique SDE comportant les trois modules assesseurs Mi et un module de compilation MC ;
- un dispositif DVA de validation et d'archivage ;
- un dispositif d'audit DA d'une entité tiers ET ;
- un système de recours SR comportant un module de communication COM, l'entité organisateur $\mathcal{O}$, l'entité d'enregistrement $\mathcal{A}$ et un module de contrôle MCT ;
- une urne virtuelle privée UVP ; et
- une urne virtuelle publique UPB,

toutes ces entités étant conformes à un mode particulier de réalisation de l'invention. Ces entités communiquent entre elles via un réseau de communication non représenté.

Dans le mode de réalisation décrit ici, l'entité organisateur $\mathcal{O}$ et l'entité d'enregistrement $\mathcal{A}$ comportent :

- un module COM de communication ;
- un module cryptographique MCR configuré pour générer pour chaque entité électeur autorisée à participer au scrutin, une clé publique anonyme d'un algorithme de signatures anonymes traçables, une telle clé publique étant associée à une clé privée destinée à être utilisée par cette entité électeur pour signer de manière anonyme des messages dans le cadre du scrutin ;

- les entités organisateur $\mathcal{O}$ et d'enregistrement $\mathcal{A}$ étant configurées, dans le cadre d'un recours, pour générer une liste de recours $\mathcal{L}_5$ dont les éléments sont des clés publiques ré-identifiées obtenues en levant l'anonymat des clés publiques anonymes utilisées par les entités électeurs dans le cadre du scrutin.

On rappelle qu'un schéma de signature anonyme est une variante d'un schéma de signature de groupe. La signature anonyme traçable utilisée dans l'invention peut permettre à une entité électeur de prouver son appartenance à un groupe, par exemple aux groupes des entités électeurs légitimes sans qu'elle ait à révéler son identité.
Dans le mode de réalisation décrit ici, un module assesseur $M_i$ comporte :

- un module cryptographique MCR configuré pour générer une clé privée de déchiffrement partiel ( $SK_{M_i} = x_T^i$ ) pour au moins un algorithme de chiffrement à clé publique à seuil et pour communiquer cette clé à un module MC de compilation compris dans ledit module cryptographique.

Pour mémoire, dans un algorithme de chiffrement à seuil, la clé privée $x_T = \sum_{i=1}^{n} x_T^i$ est un secret réparti entre les différents modules assesseurs. Pour déchiffrer n'importe quel message, la coopération d'un nombre prédéfini (« le seuil ») de ces modules assesseurs est requise. En notant s le seuil et $n$ le nombre de modules assesseurs entre lesquels le secret est réparti, on ne peut déchiffrer un message que si au moins s modules assesseurs sur les $n$ coopèrent, et ce sans qu'il soit nécessaire de reconstituer la clé privée.
Chaque module assesseur $M_i$ comporte en outre :

- un module de communication COM configuré pour obtenir les bulletins de vote valides collectés par l'urne privée virtuelle à l'issue du scrutin, chaque bulletin de vote $B_i$ comportant au moins un engagement $C_1^i$ sur un vote $v_i$, un chiffré ( $C_1^i, C_2^i$ ) du vote $v_i$, et une signature anonyme traçable $S_i$ d'une entité électeur $V_i$ ;
- ledit module cryptographique étant configuré pour, lors du dépouillement à l'issue du scrutin :

  - obtenir un chiffré ($\ddot{C} = (R_1, R_2)$) du résultat du scrutin ;
  - déchiffrer partiellement ce chiffré $\ddot{C} = (R_1, R_2)$ à l'aide de la clé privée de déchiffrement partiel ($SK_{M_i}$) de l'algorithme de chiffrement à seuil ;
  - envoyer le résultat de ce déchiffrement partiel au module de compilation MC du système de dépouillement électronique SDE.

Dans le mode de réalisation décrit ici, les engagements $C_1^i$ portent sur un vote $v_i$ et sur une valeur aléatoire $r_i$ et les bulletins de vote comportent en outre un chiffré $C_3^i$ de cette valeur aléatoire $r_i$.

On rappelle que l'invention utilise un algorithme de chiffrement à seuil pour chiffrer les votes électroniques, de sorte que la clé privée de déchiffrement est un secret réparti entre plusieurs modules assesseurs, les clés privées de chacun des modules assesseurs ne lui permettant de n'effectuer que des déchiffrements partiels d'un vote. Pour déchiffrer un vote, la coopération d'un nombre prédéfini, ou seuil, de ces modules assesseurs est donc requise.

Dans le mode de réalisation décrit ici, le système SPS de préparation du scrutin comporte, en plus des modules assesseurs $M_i$, de l'entité organisateur $\mathcal{O}$ et de l'entité d'enregistrement $\mathcal{A}$, un module cryptographique MCR configuré pour générer et stocker de façon sécurisée la clé publique ( $g_T, h_T = \prod_{i=1}^n g_T^{x_T^i} = g_T^{\sum_{i=1}^n x_T^i}$ ) de chaque algorithme de chiffrement à seuil et la clé privée correspondante $x_T = \sum_{i=1}^n x_T^i$, ces clés étant obtenues à partir des clés privées $SK_{M_i} = x_T^i$ de déchiffrement partiel des modules assesseurs.

Dans le mode de réalisation décrit ici, le système de dépouillement électronique SDE comporte, en plus des modules assesseurs $M_i$ :

- un module de compilation MC configuré pour :

  • obtenir le résultat des déchiffrements partiels du chiffré ($\ddot{C} = (R_1, R_2)$ ) du résultat du scrutin calculés par les membres assesseurs $M_i$ et ;
  • dès lors que s modules assesseurs lui ont communiqué leur résultat, s correspondant au seuil de l'algorithme de chiffrement à seuil, obtenir le résultat ( $Res = \sum_{i=1}^l (v_i)$ ) du scrutin.

- un module de communication COM configuré notamment pour publier le résultat Res du scrutin.

Dans le mode de réalisation décrit ici, une entité électeur $V_i$ comporte :

- un module cryptographique MCR configuré pour générer une paire de clés comportant une clé privée et une clé publique propre pour un algorithme de signatures anonymes traçables,
- un module de communication COM adapté à envoyer un identifiant de cette entité et la clé publique propre à une entité de confiance pour s'inscrire sur une liste électorale ;
- le module cryptographique étant configuré pour obtenir de façon anonyme une clé publique anonyme pour un algorithme de signatures anonymes traçables à partir d'un générateur fourni par une entité de confiance et de la clé privée propre ;
- un module IHM d'obtention d'un vote $v_i$ ;
- le module de communication COM étant configuré pour obtenir une clé publique ( $(g_T, h_T = \prod_{i=1}^n g_T^{x_T^i} = g_T^{\sum_{i=1}^n x_T^i}), (\widetilde{g_T}, \tilde{h}_T = \prod_{i=1}^n \tilde{g}_T^{\tilde{x}_T^i} = \tilde{g}_T^{\sum_{i=1}^n \tilde{x}_T^i})$ ) pour au moins un algorithme de chiffrement à seuil ;

- le module cryptographique MCR étant configuré pour calculer un engagement ( $C_1^i = Commit(v_i, r_i)$ ) sur un vote $v_i$ ;

- le module MCR étant configuré pour calculer un chiffré ( $C_1^i = g^{v_i} h_T^{r_i}, C_2^i = g_T^{r_i}$ ) du vote $v_i$, ce chiffré comportant, dans le mode de réalisation décrit ici, l'engagement $C_1^i$, ce chiffré étant calculé en utilisant la clé publique l'algorithme de chiffrement à seuil ;

- le module cryptographique MCR étant configuré pour calculer, dans le cadre d'un scrutin, une signature anonyme traçable $S_i$ de l'engagement $C_1^i$ en utilisant la clé privée, l'anonymat de cette signature ne pouvant être révoqué que par au moins une entité de confiance $\mathcal{O}, \mathcal{A}$ ;

- le module de communication COM étant configuré pour envoyer un bulletin de vote $B_i$ comportant au moins

l'engagement $C_1^i$, le chiffré ($C_1^i$, $C_2^i$), et la signature anonyme traçable $S_i$ de l'entité électeur $V_i$ à l'une urne privée virtuelle UPV.

Dans le mode de réalisation décrit ici, le dispositif de validation et d'archivage DVA comporte :

- un module COM de communication configuré pour recevoir des bulletins de vote $B_i$ comportant au moins un engagement $C_1^i$ sur un vote $v_i$, un chiffré ($C_1^i$, $C_2^i$) du vote $v_i$, un chiffré $C_3^i$ d'une valeur aléatoire $r_i$ utilisée dans l'engagement et une signature anonyme traçable $S_i$ d'une entité électeur $V_i$ ;
- un module cryptographique MCR configuré pour vérifier des signatures anonymes traçables $S_i$ et pour vérifier que l'urne privée virtuelle UPV ne comporte pas au moins deux bulletins de vote comportant des signatures anonymes traçables associées à une même clé publique anonyme;
- le module de communication COM étant configuré pour envoyer à l'urne publique virtuelle UPB, si le résultat des vérifications est positif, pour chaque bulletin de vote valide, un bulletin de vote tronqué $BT_i$ comportant au moins l'engagement $C_1^i$ sur le vote et la signature anonyme traçable $S_i$ ;
- un module de stockage MS des bulletins de vote $B_i$ jusqu'à l'expiration d'un délai de recours, ce module étant configuré pour détruire les bulletins à l'expiration de ce délai.

Dans le mode de réalisation décrit ici, le dispositif DA d'audit d'un scrutin comporte :

- un module COM de communication configuré pour obtenir, à l'issue d'un scrutin, des bulletins de vote tronqués $BT_i$ stockés dans une urne publique virtuelle UPB. Ces bulletins de vote tronqués $BT_i$ ont été obtenus à partir de bulletins de vote complets $B_i$ stockés dans une urne privée virtuelle UPV, chaque bulletin de vote complet $B_i$ comportant au moins un engagement $C_1^i$ sur un vote $v_i$ et sur une valeur aléatoire $r_i$, un chiffré ($C_1^i$, $C_2^i$) du vote $v_i$, un chiffré ($C_3^i$ de la valeur aléatoire $r_i$ et une signature anonyme traçable $S_i$ d'une entité électeur $V_i$. Dans le mode de réalisation décrit ici, le bulletin de vote tronqué $BT_i$ ne comporte que l'engagement $C_1^i$ et la signature anonyme traçable $S_i$.
- le module COM de communication étant configuré pour obtenir, à l'issue du dépouillement des bulletins de vote complets $B_i$, un résultat ($Res = \sum_{i=1}^{l}(v_i)$) du scrutin et une valeur ($Rand = \tilde{g}^{\sum_{i=1}^{l}(r_i)}$) correspondant à la somme des valeurs aléatoires $r_i$ ;
- un module cryptographique MCR configuré pour vérifier les signatures anonymes traçables $S_i$ des bulletins de vote tronqués $BT_i$ pour vérifier que l'urne publique virtuelle UPB ne comporte pas au moins deux bulletins de vote tronqués comportant des signatures anonymes traçables associées à une même clé publique anonyme ;
- le module cryptographique MCR étant configuré pour calculer un engagement d'audit R'$_1$ à partir des engagements $C_1^i$ de tous les bulletins de vote tronqués $BT_i$ ; et
- un module MD de détermination d'un résultat de l'audit en comparant l'engagement d'audit R'$_1$ avec un engagement calculé sur le résultat *Res* et sur la valeur *Rand* calculés sur les bulletins de vote complets.

Dans le mode de réalisation décrit ici, le système de recours SR comporte :

- des moyens COM de communication aptes à obtenir une liste électorale $\mathcal{LE}$ comportant des identifiants $ID_{v_i}$ d'entités électeurs légitimes et des clés publiques propres respectives $P_i$ de ces entités électeurs ;
- le module COM de communication étant configuré pour obtenir de l'entité organisateur $\mathcal{O}$ et l'entité d'enregistrement $\mathcal{A}$ une liste de recours $\mathcal{L}_5$ dont les éléments sont des clés publiques ré-identifiées obtenues en levant l'anonymat des clés publiques anonymes utilisées par les entités électeurs dans le cadre du scrutin ;
- un module de contrôle MCT apte à vérifier que les clés publiques ré-identifiées de ladite liste de recours $\mathcal{L}_5$ sont toutes comprises dans ladite liste électorale $\mathcal{LE}$.

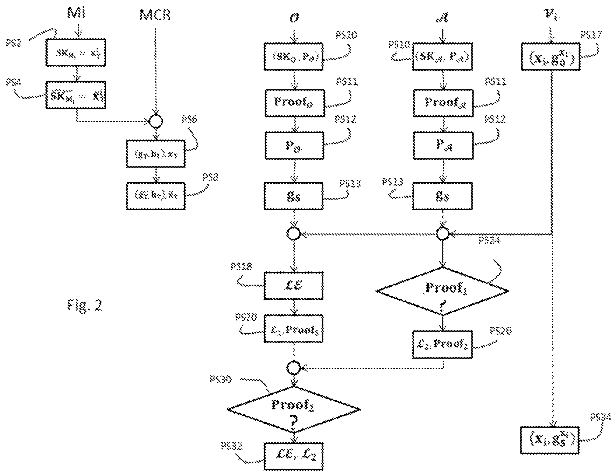

La figure 2 représente sous forme d'organigramme les principales étapes PS2 à PS34 d'un procédé de préparation d'un scrutin, mises en œuvre par un système de préparation de scrutin SPS conforme à l'invention.
L'invention sera décrite dans le cadre d'un référendum, les votes licites étant « 0 » ou « 1 » mais l'invention peut s'appliquer à tout type de vote.
Dans le mode de réalisation décrit ici, le système de préparation SPS comporte deux entités de confiance, à savoir une entité organisateur $\mathcal{O}$ et une entité d'enregistrement $\mathcal{A}$.

Au cours d'une étape PS2, chaque assesseur $M_i$ génère une clé privée $SK_{M_i} = x_T^i$ de déchiffrement partiel pour un premier algorithme de chiffrement homomorphe additif à seuil E dans le groupe cyclique $G_1$. Pour mémoire un algorithme de chiffrement à clé publique homomorphe pour l'addition permet à partir d'un chiffré d'un message $m1$ et d'un chiffré d'un message $m2$ d'obtenir un chiffré du message $m1 + m2$. L'algorithme dont il est question ici présente en outre les caractéristiques d'un algorithme de chiffrement à seuil présentées précédemment.

Au cours d'une étape PS4, chaque assesseur $M_i$ génère une clé privée $\widetilde{SK_{M_i}} = \tilde{x}_T^i$ de déchiffrement partiel pour un deuxième algorithme de chiffrement homomorphe additif à seuil **E** dans le groupe cyclique $G_2$.

Une fois que les parties de clés privées $SK_{M_i} = x_T^i$ et $\widetilde{SK_{M_i}} = \tilde{x}_T^i$ ont été créées pour tous les modules assesseurs $M_i$ du bureau de vote, le module cryptographique MCR du système de préparation de scrutin SPS génère :

- (étape PS6) la clé publique de l'algorithme de chiffrement à seuil **E** dans $G_1$, noté premier algorithme de chiffrement à seuil, ( $g_T, h_T = \prod_{i=1}^{n} g_T^{x_T^i} = g_T^{\sum_{i=1}^{n} x_T^i}$ ) et la clé privée correspondante $x_T = \sum_{i=1}^{n} x_T^i$ ;

- (étape PS8) la clé publique de l'algorithme de chiffrement à seuil **E** dans $G_2$, noté deuxième algorithme de chiffrement à seuil, ( $\tilde{g}_T, \tilde{h}_T = \prod_{i=1}^{n} \tilde{g}_T^{\tilde{x}_T^i} = \tilde{g}_T^{\sum_{i=1}^{n} \tilde{x}_T^i}$ ) et la clé privée correspondante $\tilde{x}_T = \sum_{i=1}^{n} \tilde{x}_T^i$.

Au cours d'une étape PS10, l'entité organisateur $\mathcal{O}$ du système de préparation de scrutin SPS tire un nombre aléatoire $x_{\mathcal{O}} \in Z_p$ et génère une paire de clés ( $SK_{\mathcal{O}} = x_{\mathcal{O}}, P_{\mathcal{O}} = g_0^{x_{\mathcal{O}}}$ ) pour un algorithme de signatures anonymes traçables $SigA_1$ décrit ultérieurement ; dans cette paire de clés, $SK_{\mathcal{O}}$ est la clé privée et $P_{\mathcal{O}}$ est la clé publique. Dans le mode de réalisation décrit ici, l'entité organisateur $\mathcal{O}$ calcule aussi dans une étape PS11 une preuve $\text{Proof}_{\mathcal{O}}$ à divulgation nulle de connaissance qu'elle connaît le logarithme discret de $P_{\mathcal{O}}$ en base $g_0 : \text{Proof}_{\mathcal{O}} = \text{PoK}(\alpha_1 : P_{\mathcal{O}} = g_0^{\alpha_1})$ . Au cours d'une étape PS12, l'entité organisateur $\mathcal{O}$ publie sa clé publique $P_{\mathcal{O}}$.

De la même façon, au cours d'une étape PS10, l'entité d'enregistrement $\mathcal{A}$ tire un nombre aléatoire $x_{\mathcal{A}} \in Z_p$ et génère une paire de clés (

$$SK_{\mathcal{A}} = x_{\mathcal{A}}, P_{\mathcal{A}} = g_0^{x_{\mathcal{A}}}$$

) pour l'algorithme de signatures anonymes traçables $SigA_1$ ; dans cette paire de clés, $P_{\mathcal{A}}$ est la clé privée et $P_{\mathcal{A}}$ est la clé publique. Dans le mode de réalisation décrit ici, l'entité d'enregistrement $\mathcal{A}$ calcule aussi dans une étape PS11 une preuve $\text{Proof}_{\mathcal{A}}$ à divulgation nulle de connaissance qu'elle connaît le logarithme discret de $P_{\mathcal{A}}$ en base

$$g_0 : \text{Proof}_{\mathcal{A}} = \text{PoK}(\alpha_1 : P_{\mathcal{A}} = g_0^{\alpha_1}$$

. Au cours d'une étape PS12, l'entité d'enregistrement $\mathcal{A}$ publie sa clé publique $P_{\mathcal{A}}$ .

Au cours d'une étape PS13, l'entité organisateur $\mathcal{O}$ et l'entité d'enregistrement $\mathcal{A}$ calculent, chacune de leur côté, une valeur

$$g_S = g_0^{x_{\mathcal{A}} \cdot x_{\mathcal{O}}} = P_{\mathcal{O}}^{x_{\mathcal{A}}} = P_{\mathcal{A}}^{x_{\mathcal{O}}}$$

et publient $g_s$. Ces entités doivent prouver qu'elles ont bien calculé $g_s$ en générant respectivement une preuve à divulgation nulle de connaissance $\text{Pr}_{\mathcal{O}}$ et

$$\mathrm{Pr}_{\mathcal{A}}: \; \mathrm{Pr}_{\mathcal{O}} = \mathrm{PoK}(\alpha_1: \mathrm{P}_{\mathcal{O}} = \mathrm{g}_0^{\alpha_1} \wedge \mathrm{g}_S = \mathrm{P}_{\mathcal{A}}^{\alpha_1})$$

et

$$\mathrm{Pr}_{\mathcal{A}} = \mathrm{PoK}(\alpha_1: \mathrm{P}_{\mathcal{A}} =$$

$$\mathrm{g}_0^{\alpha_1} \wedge \mathrm{g}_S = \mathrm{P}_{\mathcal{O}}^{\alpha_1}.$$

.

Nous allons maintenant décrire en détails comment le système de préparation de scrutin SPS génère, pour chacune des n entités électeurs $\{\mathcal{V}_i\}_{i=1}^n$, une paire de clés de l'algorithme de signatures anonymes traçables pour un premier algorithme de signatures traçables *SigA*$_1$.

On suppose que chacune des entités électeurs $V_i$ a préalablement tiré, au cours d'une étape PS17, une valeur $x_i \in Z_q$, et généré une paire de clés ($x_i$, $P_i = g_0^{x_i}$) de l'algorithme de signatures anonymes traçables *SigA*$_1$. Dans cette paire de clés, $x_i$ est la clé privée et $P_i$ est une clé publique propre à l'entité. Chacune des entités électeurs $V_i$ calcule également une preuve $\mathrm{Proof}_{\mathcal{V}_i}$ à divulgation nulle de connaissance qu'elle connaît le logarithme discret de $P_i$ en base $g_{\mathcal{O}}: \; \mathrm{Proof}_{\mathcal{V}_i} = \mathrm{PoK}(\alpha_1: \mathrm{P}_i = \mathrm{g}_0^{\alpha_1})$ .

Chaque entité électeur $V_i$ souhaitant participer au scrutin s'enregistre auprès de l'entité d'enregistrement $\mathcal{A}$. Dans le mode de réalisation décrit ici, la clé publique propre $P_i$ de chaque entité électeur $V_i$ est certifiée par au moins une autorité de certification reconnue, par exemple par par l'entité organisateur $\mathcal{O}$ et par l'entité d'enregistrement $\mathcal{A}$.

Au cours d'une étape PS18, l'entité organisateur $\mathcal{O}$ vérifie si les entités électeurs souhaitant voter sont légitimes et constitue la liste électorale $\mathcal{LE}$ contenant les identifiants $ID_{\mathcal{V}_i}$ des entités électeurs $V_i$ légitimes et leurs clés publiques propres respectives $P_i: \mathcal{LE} = \left\{ ID_{\mathcal{V}_i}, P_i \right\}_{i=1}^n$ . De cette liste, l'entité organisateur $\mathcal{O}$ crée une nouvelle liste $\mathcal{L}$ ne contenant que les clés publiques propres des électeurs: $\mathcal{L} = \{P_i\}_{i=1}^n$ .

Au cours d'une étape PS20, l'entité organisateur $\mathcal{O}$ choisit aléatoirement une permutation $\Pi_1$ de $\{1, \ldots, n\}$ dans $\{1, \ldots, n\}$ et calcule la nouvelle liste $\mathcal{L}_1 = \{P_i^1\}_{i=1}^n$ où $P_i^1 = P_{\Pi_1(i)}^{x_{\mathcal{O}}}$. Pour obtenir cette liste $\mathcal{L}_1$, les éléments de la liste $\mathcal{L}$ sont permutés en utilisant la permutation $\Pi_1$, puis élevés à la puissance $x_{\mathcal{O}}$.

Au cours d'une étape PS22, l'entité organisateur $\mathcal{O}$ transmet la liste $\mathcal{L}_1$ à l'entité d'enregistrement $\mathcal{A}$, accompagnée d'une preuve à divulgation nulle de connaissance Proof$_1$, qu'elle a bien permuté tous les éléments de la liste $\mathcal{L}$, puis élevé à la puissance $x_{\mathcal{O}}$ chacun des éléments de cette liste permutée, sans révéler $x_{\mathcal{O}}$ ni la permutation utilisée $\Pi_1$. La preuve Proof$_1$ peut être générée en utilisant la technique RPC (Random Partial Checking).

Au cours d'une étape PS24, l'entité d'enregistrement $\mathcal{A}$ vérifie la validité de la preuve Proof$_1$.

Si cette preuve est valide, elle procède de manière similaire à $\mathcal{O}$. Plus précisément, au cours d'une étape PS26, l'entité d'enregistrement $\mathcal{A}$ choisit aléatoirement une permutation $\Pi_2$ de $\{1, \ldots, n\}$ dans $\{1, \ldots, n\}$ puis calcule une nouvelle liste $\mathcal{L}_2 = \{P_i^2\}_{i=1}^n$ où $P_i^2 = \left(P_{\Pi_2(i)}^1\right)^{x_{\mathcal{A}}}$ . Cette liste $\mathcal{L}_2$ est une liste dans laquelle les éléments de la liste $\mathcal{L}_1$ sont permutés en utilisant la permutation $\Pi_2$ puis élevés à la puissance $x_{\mathcal{A}}$.

Au cours d'une étape PS28, l'entité d'enregistrement $\mathcal{A}$ transmet la liste $\mathcal{L}_2$ à l'entité organisateur $\mathcal{O}$, accompagnée d'une preuve à divulgation nulle de connaissance Proof$_2$, qu'elle a bien permuté tous les éléments de la liste $\mathcal{L}_1$, puis élevé à la puissance $x_{\mathcal{A}}$ chacun des éléments de cette liste permutée, sans révéler $x_{\mathcal{A}}$ ni la permutation utilisée $\Pi_2$. La preuve Proof$_2$ peut être générée en utilisant la technique RPC.

Au cours d'une étape PS30, l'entité organisateur $\mathcal{O}$ vérifie la validité de la preuve Proof$_2$.

Si cette preuve Proof$_2$ est valide, l'entité organisateur $\mathcal{O}$ publie, au cours d'une étape PS32 :

- la liste électorale $\mathcal{LE}$,
- la liste $\mathcal{L}_2$ des clés publiques anonymes des entités électeurs $V_i$ ; et
- éventuellement les preuves Proof$_1$ et Proof$_2$.

Il est important de noter que seules les entités de confiance, à savoir l'entité organisateur $\mathcal{O}$, et l'entité d'enregistrement $\mathcal{A}$ sont en mesure, à condition de coopérer, de relier une clé publique anonyme de $\mathcal{L}_2$ à une clé publique de $\mathcal{LE}$ (et donc faire le lien entre une clé publique de $\mathcal{L}_2$ et l'entité électeur $V_i$ à qui elle appartient).

Chaque entité électeur $V_i$ obtient sa clé publique anonyme au cours d'une étape PS34 et reconstitue la paire de clés ($x_i, g_S^{x_i}$). Dans cette paire, $x_i$ est la clé privée qu'elle devra utiliser pour signer son vote de manière anonyme et

$$g_S^{x_i} = P_{\Pi_2 \circ \Pi_1(i)}^2$$

est la clé publique anonyme associée. Il est fondamental de noter que l'obtention de la clé publique anonyme par une entité électeur $V_i$ se fait de manière aveugle, ce qui implique notamment que personne, à part les entités électeurs elles-mêmes, y compris les autorités de confiance ne connaissent ces clés. Elles sont, dans le mode de réalisation décrit ici, obtenues par les entités électeurs $V_i$ en calculant $g_S^{x_i}$.

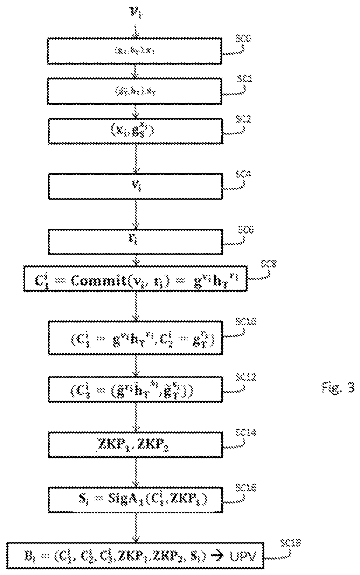

La figure 3 représente sous forme d'organigramme les principales étapes SC0 à SC18 mises en œuvre par une entité électeur $V_i$ dans le cadre d'un scrutin, dans un mode particulier de mise en œuvre de l'invention.

Au cours d'une étape SC0, l'entité électeur $V_i$ obtient la clé publique ($g_T, h_T = \prod_{i=1}^{n} g_T^{x_T^i} = g_T^{\sum_{i=1}^{n} x_T^i}$) du premier algorithme de chiffrement à seuil calculée à l'étape PS6.

Au cours d'une étape SC1, l'entité électeur $V_i$ obtient la clé publique ($\widetilde{g_T}, \tilde{h}_T = \prod_{i=1}^{n} \tilde{g}_T^{\tilde{x}_T^i} = \tilde{g}_T^{\sum_{i=1}^{n} \tilde{x}_T^i}$) du deuxième algorithme de chiffrement calculée à l'étape PS8.

On rappelle que l'entité électeur $V_i$ a préalablement tiré, au cours de l'étape PS17, une valeur $x_i \in Z_q$, et généré une paire de clés ($x_i$, $P_i = g_0^{x_i}$) de l'algorithme de signatures anonymes traçables $SigA_1$. Dans cette paire de clés, $x_i$ est la clé privée et $P_i$ est une clé publique propre à l'entité. Chacune des entités électeurs $V_i$ a également calculé une preuve $\text{Proof}_{V_i}$ à divulgation nulle de connaissance qu'elle connaît le logarithme discret de $P_i$ en base $g_\mathcal{O}$ : $\text{Proof}_{V_i} = \text{PoK}(\alpha_1 : P_i = g_0^{\alpha_1})$.

On rappelle que l'entité électeur $V_i$ s'est enregistrée auprès de l'entité d'enregistrement $\mathcal{A}$ et qu'elle a généré à l'étape PS34 une clé publique anonyme

$$g_S^{x_i} = P_{\Pi_2 \circ \Pi_1(i)}^2$$

associée à sa clé privée qui est utilisée pour signer son vote de manière anonyme.

Au cours d'une étape SC4, l'utilisateur de l'entité électeur $V_i$ exprime son vote $v_i$ en utilisant l'interface IHM de l'entité. Dans le mode de réalisation décrit ici le vote $v_i$ est la valeur 0 ou 1.

Au cours d'une étape SC6, l'entité électeur $V_i$ génère une valeur aléatoire $r_i$.

Au cours d'une étape SC8, l'entité électeur $V_i$ calcule un engagement ($C_1^i = Commit(v_i, r_i)$) sur son vote $v_i$ en utilisant la valeur aléatoire $r_i$. Dans le mode de réalisation décrit ici, cet engagement est un schéma de mise en gage de Pedersen et $C_1^i = Commit(v_i, r_i) = g^{v_i} h_T^{r_i}$.

Au cours d'une étape SC10, l'entité électeur $V_i$ calcule $C_2^i = g_T^{r_i}$ puis obtient un chiffré (

$C_1^i = g^{v_i} h_T{}^{r_i}, C_2^i = g_T{}^{r_i}$) du vote $v_i$ selon le premier algorithme de chiffrement à seuil.

Au cours d'une étape SC12, l'entité électeur $V_i$ calcule un chiffré de la valeur aléatoire $r_i$, notée $C_3^i = (\tilde{g}^{r_i} \tilde{h}_T{}^{s_i}, \tilde{g}_T^{s_i})$ selon le deuxième algorithme de chiffrement à seuil, où $s_i \in Z_p$ est une valeur tirée aléatoirement par l'entité électeur $V_i$.

Dans le mode de réalisation décrit ici, ces chiffrés sont calculés en utilisant la variante du schéma de Pedersen introduite précédemment.

Au cours d'une étape SC14, l'entité électeur $V_i$ génère deux preuves (ZKP$_1$, ZKP$_2$) à divulgation nulle de connaissance dans lesquelles :

- la preuve ZKP$_1$ prouve que le vote $v_i$ mis en gage au travers de l'engagement $C_1^i = Commit(v_i, r_i)$ porte sur un candidat en lice, autrement dit vaut bien « 0 » ou « 1 » ; et

- La preuve ZKP$_2$ prouve que les textes clairs associés aux chiffrés ($C_1^i$, $C_2^i$) et $C_3^i$ (à savoir $v_i$ et $r_i$) sont bien les mêmes que ceux qui ont été mis en gage dans l'engagement $C_1^i$.

Dans des modes de réalisation de l'invention décrits ci-après, on utilise une première preuve **ZKP$_1$** à divulgation nulle de connaissance prouvant que le vote mis en gage au travers d'un engagement porte sur des candidats en lice et une deuxième preuve **ZKP$_2$** à divulgation nulle de connaissance prouvant que les textes clairs correspondant aux votes (parfois appelés choix), ou votes, des électeurs, associés aux chiffrés de ces textes sont ceux qui ont été mis en gage dans l'engagement , soit :

•

$$ZKP_1 = \mathrm{PoK}(\alpha_1, \alpha_2 \colon C_1^i = g^{\alpha_1} h_T{}^{\alpha_2} \wedge (\alpha_1 = 0 \vee \alpha_1 = 1))$$

•

$$ZKP_2 = \mathrm{PoK}(\alpha_1, \alpha_2, \alpha_3 \colon C_1^i = g^{\alpha_1} h_T{}^{\alpha_2} \wedge C_2^i = g_T^{\alpha_2} \wedge C_3^i = (\tilde{g}^{\alpha_2} \tilde{h}_T{}^{\alpha_3}, \tilde{g}_T^{\alpha_3}))$$

où $C_1^i$ représente l'engagement d'un votant $V_i$ sur un choix $vi$ et sur une valeur aléatoire $ri$, $C_2^i$ le chiffré du vote $vi$ et $C_3^i$ le chiffré de la valeur aléatoire $ri$.

En ce qui concerne la première preuve **ZKP$_1$,** on peut utiliser le calcul suivant :

On pose $v_i = v$ avec $v = 0$ ou $v = 1$. L'entité électeur **$V_i$** tire aléatoirement 3 valeurs, **$r$**, **$c_{1-v}$**, **$D_{1-v}$** de **$Z_p$**. Elle calcule ensuite :

•

$$T_v = h_T^r \, ;$$

•

$$T_{1-v} = \left( C_1^i / g^{1-v} \right)^{c_{1-v}} h_T^{D_{1-v}};$$

•

$$c = \mathcal{H}\left( C_1^i, \ T_0, T_1 \right);$$

•

$$c_v = c - c_{1-v} \bmod p;$$

•

$$D_v = r - r_i c_v \bmod p.$$

La preuve est constituée des 4 éléments de $\mathbf{Z_p}$ suivants : $\mathbf{ZKP_1} = (\mathbf{c_0}, \mathbf{c_1}, \mathbf{D_0}, \mathbf{D_1})$.

La preuve est valide si $c_0 + c_1 = \mathcal{H}\left(C_1^i, \left(C_1^i\right)^{c_0} h_T^{D_0}, \left(C_1^i/g\right)^{c_1} h_T^{D_1}\right)$.

En ce qui concerne la deuxième preuve $\mathbf{ZKP_2}$ on peut utiliser le schéma suivant:

On pose $L_3^i = \widetilde{g}^{r_i}\widetilde{h}_T^{s_i}$ et $R_3^i = \widetilde{g}_T^{s_i}$. L'entité électeur $\mathbf{V_i}$ tire aléatoirement 3 valeurs, s, $\mathbf{t}$, $\mathbf{u}$ de $\mathbf{Z_p}$. Elle calcule ensuite :

- 
$$W_1 = g^s h_T^t\ ;$$

- 
$$W_2 = g_T^t;$$

- 
$$W_3 = \widetilde{g}^t\widetilde{h}_T^u;$$

- 
$$W_4 = \widetilde{g}_T^u;$$

- $c = \mathcal{H}\left(C_1^i, C_2^i, C_3^i, c_0, c_1, D_0, D_1, W_1, W_2, W_3, W_4\right)$ où $\mathbf{c_0}$, $\mathbf{c_1}$, $\mathbf{D_0}$ et $\mathbf{D_1}$ proviennent de la preuve $\mathbf{ZKP_1}$ ;

- 
$$d_1 = s - v_i c \bmod p;$$

- 
$$d_2 = t - r_i c \bmod p;$$

- 
$$d_3 = u - s_i c \bmod p.$$

La preuve est constituée des 4 éléments de $\mathbf{Z_p}$ suivants : $\mathbf{ZKP_2} = (\mathbf{c}, \mathbf{d_1}, \mathbf{d_2}, \mathbf{d_3})$.
La preuve est valide si

$$c = \mathcal{H}\left(C_1^i, C_2^i, C_3^i, c_0, c_1, D_0, D_1, g^{d_1} h_T^{d_2}\left(C_1^i\right)^c,\ g_T^{d_2}\left(C_2^i\right)^c, \widetilde{g}^{d_2}\widetilde{h}_T^{d_3}\left(L_3^i\right)^c, \widetilde{g}_T^{d_3}\left(R_3^i\right)^c\right)$$

Au cours d'une étape SC16, l'entité électeur $V_i$ signe anonymement l'engagement $C_1^i$ et la preuve $\mathbf{ZKP_1}$ en utilisant sa clef privée à laquelle est associée la clé publique anonyme $g_S^{x_i}$ de l'algorithme de signatures traçables $SigA_1$.

Au cours d'une étape SC18, l'entité électeur $V_i$ envoie son bulletin de vote $B_i$ comportant l'engagement $C_1^i$, un chiffré ( $C_1^i$, $C_2^i$ ) du vote $v_i$, un chiffré $C_3^i$ de la valeur aléatoire $r_i$, les deux preuves ZKP$_1$, ZKP$_2$, et la signature anonyme $S_i$ de l'entité électeur $V_i$ à l'urne privée virtuelle UPV. Cette signature correspond à l'émargement qu'un électeur doit apposer sur la liste d'émargement dans le cadre d'une élection traditionnelle à la différence fondamentale que cette signature est anonyme.

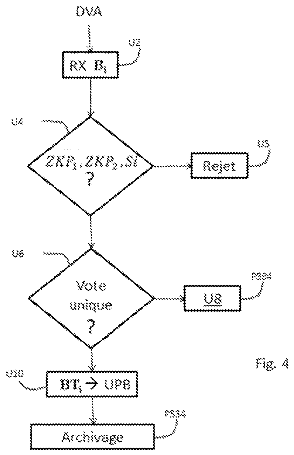

La figure 4 représente sous forme d'organigramme les principales étapes U2 à U10 d'un procédé de validation et d'archivage d'un vote électronique conforme à l'invention. Ce procédé est mis en œuvre par un dispositif DVA de validation et d'archivage conforme à l'invention, ce dispositif étant associé à une urne privée virtuelle UPV.

Au cours d'une étape U2, le dispositif de validation et d'archivage DVA reçoit un bulletin de vote $B_i$ en provenance d'une entité électeur $V_i$. Ce bulletin de vote comporte un engagement $C_1^i$ sur un vote $v_i$, un chiffré ($C_1^i$, $C_2^i$) du vote $v_i$, un chiffré $C_3^i$ de la valeur aléatoire $r_i$, les deux preuves $ZKP_1$, $ZKP_2$, et la signature anonyme $S_i$ de l'entité électeur $V_i$. Dans ce mode de réalisation, le chiffré utilise une variante du schéma de El Gamal introduite précédemment.

Au cours d'une étape test U4, le dispositif de validation et d'archivage DVA vérifie la validité des preuves à divulgation nulle de connaissance $ZKP_1$, $ZKP_2$ et celle de la signature anonyme $S_i$ comprises dans ce bulletin. La signature $S_i$ est validée si elle utilise l'algorithme de signatures anonymes traçables $SigA_1$ retenu pour l'élection et si la clé publique anonyme utilisée $g_S^{x_i}$ pour vérifier cette signature appartient à la liste anonyme $\mathcal{L}_2$ des clés publiques anonymes des entités électeurs $V_i$.

Si le résultat du test U4 est négatif, le vote est rejeté (étape U5). Si le résultat du test U4 est positif, le dispositif de validation et d'archivage DVA vérifie au cours d'une étape U6 si l'entité électeur $V_i$ n'a pas déjà voté. A cet effet, l'urne privée virtuelle UPV vérifie que ladite urne privée UPV ne comporte pas au moins un autre bulletin de vote $B_j$ comportant une signature anonyme traçable $S_j$ associée à la même clé publique que $S_i$. Si l'électeur a déjà voté, le dispositif DVA traite le bulletin au cours d'une étape U8. Cette étape peut consister à rejeter le vote ou en tout état de cause à ne retenir que le premier des deux bulletins.

Dans le mode de réalisation décrit ici, si le résultat du test U6 est positif, autrement dit si toutes les vérifications sont concluantes, le dispositif DVA transmet un bulletin tronqué $BT_i$ à l'urne publique virtuelle UPB au cours d'une étape U10. Dans le mode de réalisation décrit ici, ce bulletin tronqué $BT_i$ comporte l'engagement $C_1^i$, la preuve $ZKP_1$ et la signature anomyme $S_i$.

Au cours d'une étape U12, le dispositif DVA stocke les bulletins $B_i$ jusqu'à l'expiration d'un délai de recours. Les bulletins $B_i$ sont détruits à l'expiration de ce délai.

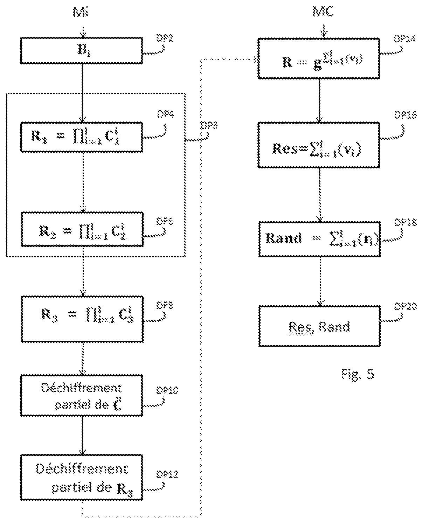

La figure 5 représente, sous forme d'organigramme, les principales étapes d'un procédé de dépouillement d'un scrutin conforme à un mode particulier de réalisation de l'invention. Ce procédé est mis en œuvre par le système SDE de dépouillement électronique conforme à l'invention. Dans le mode de réalisation le système de dépouillement SDE comporte les trois modules assesseurs $M_i$.

On rappelle que chaque assesseur $M_i$ du bureau de vote a généré, au cours des étapes PS2, PS4, une clé privée $SK_{M_i} = x_T^i$ de déchiffrement partiel pour le premier algorithme de chiffrement et une clé privée $\widetilde{SK_{M_i}} = \tilde{x}_T^i$ de déchiffrement partiel pour le deuxième algorithme de chiffrement.

A la clôture du scrutin, au cours d'une étape DP2 chaque module assesseur $M_i$ récupère tous les bulletins valides $B_i$ collectés par l'urne privée virtuelle UPV.

Au cours d'une étape DP3, chaque module assesseur $M_i$ obtient, grâce au caractère homomorphe du schéma de mise en gage *Commit* un chiffré $\ddot{C} = (R_1, R_2)$ du résultat du scrutin.

Plus précisément, dans le mode de réalisation décrit ici, cette étape DP3 comporte :

- une sous-étape DP4 au cours de laquelle chaque module assesseur $M_i$ multiplie entre eux tous les engagements $C_1^i$ pour obtenir, grâce au caractère homomorphe du schéma de mise en gage *Commit,* un nouvel engagement $R_1$ portant sur la somme des votes $v_i$ effectués par les entités électeurs $V_i$ ainsi que sur la somme des aléas $\mathbf{r_i}$ utilisés pour calculer ces engagements par ces entités.

Dans le mode de réalisation décrit ici, $R_1 = \prod_{i=1}^{l} C_1^i = \prod_{i=1}^{l} g^{v_i} h_T^{r_i} = g^{\sum_{i=1}^{l}(v_i)} h_T^{\sum_{i=1}^{l}(r_i)}$ où $l$ désigne le nombre de bulletins valides reçus par l'urne privée UPV ; et

- une sous-étape DP6, au cours de laquelle chaque module assesseur $M_i$ multiplie entre elles toutes les valeurs $C_2^i$ pour obtenir une nouvelle valeur $R_2$ correspondant à la somme des aléas $r_i$ effectués par les électeurs : .

$$R_2 = \prod_{i=1}^{l} C_2^i = \prod_{i=1}^{l} g_T^{r_i} = g_T^{\sum_{i=1}^{l}(r_i)}$$

Dans le mode de réalisation décrit ici, au cours d'une étape DP8, chaque module assesseur $M_i$ multiplie entre eux tous les chiffrés $C_3^i$ pour obtenir, grâce au caractère homomorphe du schéma de mise en gage *Commit,* un nouveau chiffré $R_3$ correspondant à la somme des aléas $r_i$ tirés aléatoirement par les électeurs ayant pris part au scrutin :

$$R_3 = \prod_{i=1}^{l} C_3^i = \prod_{i=1}^{l} (\tilde{g}^{r_i} \tilde{h}_T^{s_i}, \tilde{g}_T^{s_i}) = (\tilde{g}^{\Sigma_{i=1}^{l}(r_i)} \tilde{h}_T^{\Sigma_{i=1}^{l}(s_i)}, \tilde{g}_T^{\Sigma_{i=1}^{l}(s_i)})$$

où *l* désigne le nombre de bulletins valides reçus par l'urne privée UPV.

Au cours d'une étape DP10, chaque module assesseur $M_i$ procède au déchiffrement partiel du chiffré $\ddot{C} = (R_1, R_2)$ à l'aide de sa clé privée de déchiffrement partiel $SK_{M_i}$

Au cours d'une étape DP12, chaque module membre $M_i$ du bureau de vote procède au déchiffrement partiel du chiffré $R_3$ à l'aide de sa clé privée de déchiffrement partiel $\widetilde{SK_M}$.

Dès que des déchiffrements partiels du message $\ddot{C} = (R_1, R_2)$ ont été obtenus par s modules assesseurs $M_i$ (le seuil s est égal à 2 dans l'exemple de la figure 5), le module MC de compilation du dispositif de dépouillement et de validation DPV peut en les combinant retrouver le texte clair $R = g^{\Sigma_{i=1}^{l}(v_i)}$ au cours d'une étape DP14, puis par recherche exhaustive (en utilisant l'algorithme de Shanks) obtenir la valeur $Res = \Sigma_{i=1}^{l}(v_i)$ correspondant au nombre de voix qui se sont portées pour le « 1 », et donc au résultat du référendum (étape DP16).

De la même façon, dès que des déchiffrements partiels du chiffré $R_3$ ont été obtenus par s modules assesseurs $M_i$, le module MC de compilation du dispositif de dépouillement et de validation DPV peut en les combinant retrouver le texte clair $\tilde{g}^{\Sigma_{i=1}^{l}(r_i)}$, puis au cours d'une étape DP18 la valeur $Rand = \Sigma_{i=1}^{l}(r_i)$ correspondant à la somme des aléas.

Le module MC de compilation publie les valeurs $Res = \Sigma_{i=1}^{l}(v_i)$ et $Rand = \Sigma_{i=1}^{l}(r_i)$ au cours d'une étape DP20.

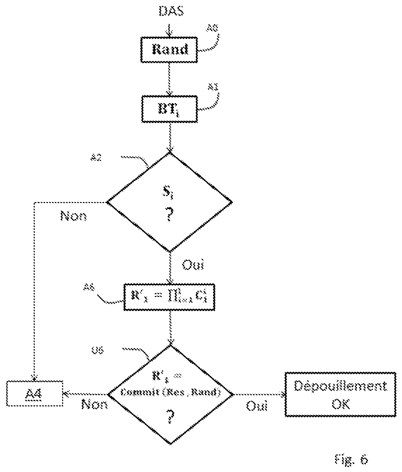

La figure 6 représente les principales étapes d'un procédé d'audit d'une élection conforme à un mode de réalisation de l'invention. Ce procédé est mis en œuvre par un dispositif DA d'audit conforme à l'invention. Ce dispositif est incorporé dans une entité tiers ET de la figure 1.

Au cours d'une étape A0, le dispositif DA d'audit obtient la valeur $Rand = \Sigma_{i=1}^{l}(r_i)$ correspondant à la somme des aléas tirés par les entités électeurs $V_i$ ayant participé au scrutin.

Au cours d'une étape A1, le dispositif DA d'audit obtient les bulletins de vote tronqués $BT_i$ publiés sur l'urne publique virtuelle UPB.

Au cours d'une étape test A2, le dispositif DA d'audit vérifie les signatures anonymes traçables $S_i$ des bulletins de vote tronqués $BT_i$ et vérifie que l'urne publique virtuelle UPB ne comporte pas au moins deux bulletins de vote tronqués $BT_i$, $BT_j$ comportant des signatures anonymes traçables associées à la même clé publique anonyme. Elle s'assure ainsi que les électeurs sont légitimes et qu'ils n'ont voté qu'une fois.

Si le résultat du test A2 est négatif, le dispositif DA d'audit considère que le résultat de l'audit est négatif. Cette situation est traitée au cours d'une étape A4 qui ne fait pas partie de l'invention.

Si le résultat du test A2 est positif, le dispositif DA d'audit multiplie entre eux (étape A6) les engagements $C_1^i$ de tous les bulletins de vote tronqués $BT_i$, pour obtenir, grâce au caractère homomorphe du schéma de mise en gage *Commit,* un engagement d'audit R'$_1$ avec : $R'_1 = \prod_{i=1}^{l} C_1^i = \prod_{i=1}^{l} g^{v_i} h_T^{r_i} = g^{\Sigma_{i=1}^{l}(v_i)} h_T^{\Sigma_{i=1}^{l}(r_i)}$ où *l* désigne le nombre de bulletins tronqués reçus par l'urne publique virtuelle UPB.

Au cours d'une étape A8, le dispositif DA d'audit détermine le résultat de l'audit en comparant l'engagement d'audit R'$_1$ avec un engagement calculé sur le résultat *Res* et sur la valeur *Rand.* Si R'$_1$ = *Commit*(*Res ,Rand*), le dépouillement est considéré valide. Sinon le résultat de l'audit est négatif et cette situation est traitée au cours d'une étape A4 qui ne fait pas partie de l'invention.

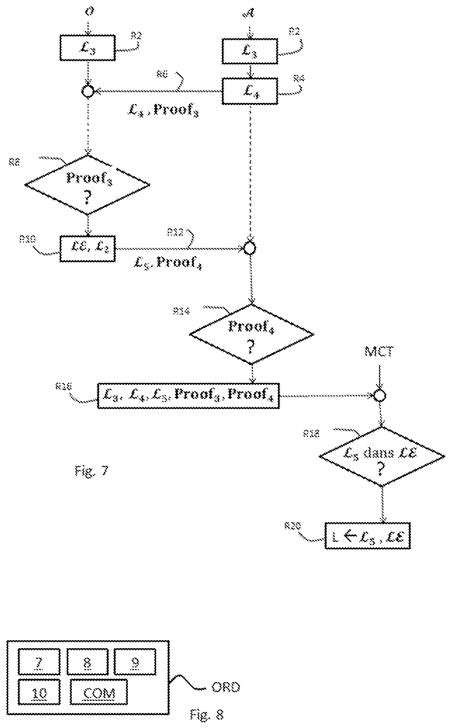

La figure 7 représente sous forme d'organigramme, les principales étapes d'un procédé de recours conforme à un mode de réalisation de l'invention. Ce procédé qui peut être mis en œuvre pendant un délai de recours consiste à recompter les votes émis à partir des bulletins archivés par l'urne privée virtuelle UPV. Ce procédé est mis en œuvre par un système de recours SR conforme à l'invention.

Au cours d'une étape R2, l'entité organisateur $\mathcal{O}$ et l'entité d'enregistrement $\mathcal{A}$ du système de recours SR récupèrent la liste $\mathcal{L}_3$ des clés publiques anonymes associées aux clés privées qui ont été utilisées pour produire les *l*

signatures $S_i$ : $\mathcal{L}_3 = \{P'_i\}^l_{i=1}$. $\mathcal{L}_3$ est donc un sous-ensemble de la liste $\mathcal{L}_2$.

Au cours d'une étape R4, l'entité d'enregistrement $\mathcal{A}$ choisit aléatoirement une permutation $\Pi_3$ de $\{1, \dots, l\}$ dans $\{1, \dots, l\}$ puis calcule une nouvelle liste $\mathcal{L}_4 = \{P^3_i\}^l_{i=1}$, où

$$P^3_i =$$

$$\left(P'_{\Pi_3(i)}\right)^{x^{-1}_{\mathcal{A}}}.$$

La liste $\mathcal{L}_4$, est obtenue en permutant tous les éléments de la liste $\mathcal{L}_3$, en utilisant la permutation $\Pi_3$, puis en élevant à la puissance

$$x^{-1}_{\mathcal{A}}$$

chacun des éléments de cette liste permutée.

Au cours d'une étape R6, l'entité d'enregistrement $\mathcal{A}$ transmet la liste $\mathcal{L}_4$ à l'entité organisateur $\mathcal{O}$, accompagnée d'une preuve à divulgation nulle de connaissance $\text{Proof}_3$, prouvant qu'elle a bien permuté tous les éléments de la liste $\mathcal{L}_3$, puis élevé à la puissance

$$x^{-1}_{\mathcal{A}}$$

chacun des éléments de cette liste permutée, sans révéler

$$x^{-1}_{\mathcal{A}}$$

ni la permutation utilisée $\Pi_3$. La preuve $\text{Proof}_3$ peut être générée en utilisant la technique RPC.

Au cours d'une étape R8, l'entité organisateur $\mathcal{O}$ vérifie la preuve $\text{Proof}_3$.

Si cette preuve est valide, l'entité organisateur $\mathcal{O}$ procède de manière similaire à $\mathcal{A}$. Au cours d'une étape R10, l'entité organisateur $\mathcal{O}$ choisit aléatoirement une permutation $\Pi_4$ de $\{1, \dots, l\}$ dans $\{1, \dots, l\}$ puis calcule la nouvelle liste $\mathcal{L}_5 = \{P^4_i\}^n_{i=1}$ où $P^4_i = \left(P^3_{\Pi_4(i)}\right)^{x^{-1}_{\mathcal{O}}}$. La liste $\mathcal{L}_5$ est obtenue en permutant tous les éléments de la liste $\mathcal{L}_4$ en utilisant la permutation $\Pi_4$, puis en élevant à la puissance $x^{-1}_{\mathcal{O}}$ chacun des éléments de cette liste permutée.

Au cours d'une étape R12, l'entité organisateur $\mathcal{O}$ transmet la liste $\mathcal{L}_5$ à l'entité d'enregistrement $\mathcal{A}$, accompagnée d'une preuve à divulgation nulle de connaissance $\text{Proof}_4$ qu'elle a bien permuté tous les éléments de la liste $\mathcal{L}_4$, puis élevé à la puissance $x^{-1}_{\mathcal{O}}$ chacun des éléments de cette liste permutée, sans révéler $x^{-1}_{\mathcal{O}}$ ni la permutation utilisée $\Pi_4$. La preuve $\text{Proof}_4$ peut être générée en utilisant la technique RPC.

Au cours d'une étape R14, l'entité d'enregistrement $\mathcal{A}$ vérifie la preuve $\text{Proof}_4$.

Si cette preuve $\text{Proof}_4$ est valide, l'entité d'enregistrement $\mathcal{A}$ transmet à un module de contrôle MCT les listes $\mathcal{L}_3$, $\mathcal{L}_4$ et $\mathcal{L}_5$ ainsi que les preuves $\text{Proof}_3$ et $\text{Proof}_4$ au cours d'une étape R16.

Au cours d'une étape R18, le module de contrôle MCT s'assure que la liste $\mathcal{L}_5$ est correcte en vérifiant que les clés publiques de cette liste sont bien comprises dans la liste électorale $\mathcal{LE}$ et que les preuves $\text{Proof}_3$ et $\text{Proof}_4$ sont valides.

Si c'est le cas, le module de contrôle MCT est en mesure d'établir, au cours d'une étape R20, une liste d'émargement L en rapprochant la liste $\mathcal{L}_5$ et la liste électorale $\mathcal{LE}$, celle-ci contenant les identifiants $\text{ID}_{v_i}$ des entités électeurs $V_i$ et leurs clés publiques propres respectives $P_i$ : $\mathcal{LE} = \{ID_{v_i}, P_i\}^n_{i=1}$.

Variantes

Dans le mode de réalisation décrit précédemment, le scrutin est un référendum dont les votes licites étant « 0 » ou « 1 ». L'invention peut s'appliquer à des votes pour lequel il y a N candidats en lice. Dans ce cas, si un électeur choisit un candidat k, on peut se ramener au mode précédent en considérant qu'il a voté « 1 » pour le candidat k et « 0 » pour tous les autres candidats. Un bulletin de vote $B_i$ peut par exemple comporter :

- un engagement $jC_1^i$ sur le vote $jv_i$ « 0 » ou « 1 » pour chaque candidat j,

- un chiffré ( $jC_1^i$ , $jC_2^i$ ) de ce vote $jv_i$ ,

- un chiffré $jC_3^i$ d'une valeur aléatoire $jr_i$ utilisée pour calculer l'engagement $jC_{1,}^i$ ,
- les deux preuves $jZKP_1$, $jZKP_2$, déjà mentionnées pour chacun des votes $jv_i$,
- une preuve que l'électeur a voté « 1 » pour un et un seul candidat ; et
- la signature anonyme $S_i$.

Dans le mode de réalisation décrit précédemment, l'invention utilise un algorithme E de chiffrement à seuil, dans deux groupes $G_1$, $G_2$.
En variante, l'invention peut par exemple utiliser deux algorithmes E, E' de chiffrement à seuil différents.
Dans le mode de réalisation décrit ici, les modules assesseurs $M_i$, le module de compilation MC du système de dépouillement électronique SDE, l'entité organisateur $\mathcal{O}$, l'entité d'enregistrement $\mathcal{A}$, le module cryptographique MCR du système SPS de préparation d'un scrutin, le module de contrôle MCT du système de recours SR, le dispositif DVA de validation et d'archivage et les entités électeurs $V_i$ ont l'architecture matérielle d'un ordinateur ORD tel que représenté schématiquement à la figure 8.
L'ordinateur ORD comprend notamment un processeur 7, une mémoire morte 8, une mémoire vive 9, une mémoire non volatile 10 et des moyens de communication COM. Ces moyens de communication COM permettent aux différentes entités de communiquer entre eux notamment. Ils peuvent comprendre une ou plusieurs interfaces de communication sur un ou plusieurs réseaux de télécommunication (fixes ou mobiles, avec ou sans fil, etc.).
La mémoire morte 8 de l'ordinateur 6 constitue un support d'enregistrement conforme à l'invention, lisible par le processeur et sur lequel est enregistré un programme d'ordinateur conforme à l'invention, désigné de façon générale ici par PROG, comportant des instructions pour l'exécution de l'un des procédés objets de l'invention. Ainsi :

- pour les modules assesseurs $M_i$, le programme PROG est un programme PROG1 comportant des instructions pour l'exécution des étapes PS2 et PS4 du procédé de préparation d'un scrutin conforme à l'invention, et des étapes DP2 à DP12 du procédé de dépouillement conforme à l'invention,
- pour le module de compilation MC du système de dépouillement électronique SDE, le programme PROG est un programme PROG2, comportant des instructions pour l'exécution des étapes DP14 à DP20 du procédé de dépouillement conforme à l'invention,

- pour l'entité organisateur $\mathcal{O}$, le programme PROG est un programme PROG3, comportant des instructions pour l'exécution des étapes PS10, PS14, PS18, PS20, PS30 et PS32 du procédé de préparation du scrutin conforme à l'invention et pour les étapes R2, R8 et R10 d'un procédé de recours conforme à l'invention ;

- pour l'entité d'enregistrement $\mathcal{A}$, le programme PROG est un programme PROG4, comportant des instructions pour l'exécution des étapes PS11, PS15, PS24 et PS26 du procédé de préparation du scrutin conforme à l'invention et pour les étapes R2, R4, R14 et R16 d'un procédé de recours conforme à l'invention ;
- pour le module cryptographique MCR du système SPS de préparation du scrutin, le programme PROG est un programme PROG5, comportant des instructions pour l'exécution des étapes PS6 et PS8 du procédé de préparation du scrutin conforme à l'invention,
- pour le module de contrôle MCT du système de recours SR, le programme PROG est un programme PROG6, comportant des instructions pour l'exécution des étapes R16 à R20 du procédé de recours conforme à l'invention,
- pour le système de validation et d'archivage DVA, le programme PROG est un programme PROG7 comportant des instructions pour l'exécution des étapes du procédé de validation et d'archivage conforme à l'invention,
- pour les entités électeurs $V_i$, le programme PROG est un programme PROG8, comportant des instructions pour l'exécution des étapes PS17 et PS34 du procédé de préparation du scrutin conforme à l'invention, et pour les étapes d'un procédé de vote conforme à l'invention.

Chacun de ces programmes définit, de façon équivalente, des modules fonctionnels du dispositif ou du module sur lequel il est installé, aptes à mettre en œuvre les étapes du procédé concerné et s'appuyant sur les éléments matériels 7-10 et les moyens de communication COM de l'ordinateur ORD.

Dans le mode de réalisation décrit précédemment, le schéma de chiffrement utilisé est la variante du schéma de El Gamal introduite précédemment. Dans ce mode de réalisation, le chiffré ($C_1^i$, $C_2^i$) du vote $v_i$ comportant l'engagement $C_1^i$.

En variante, l'invention peut être mise en œuvre en utilisant le schéma de Pallier et dans ce mode de réalisation, le chiffré du vote ne comporte pas nécessairement l'engagement.

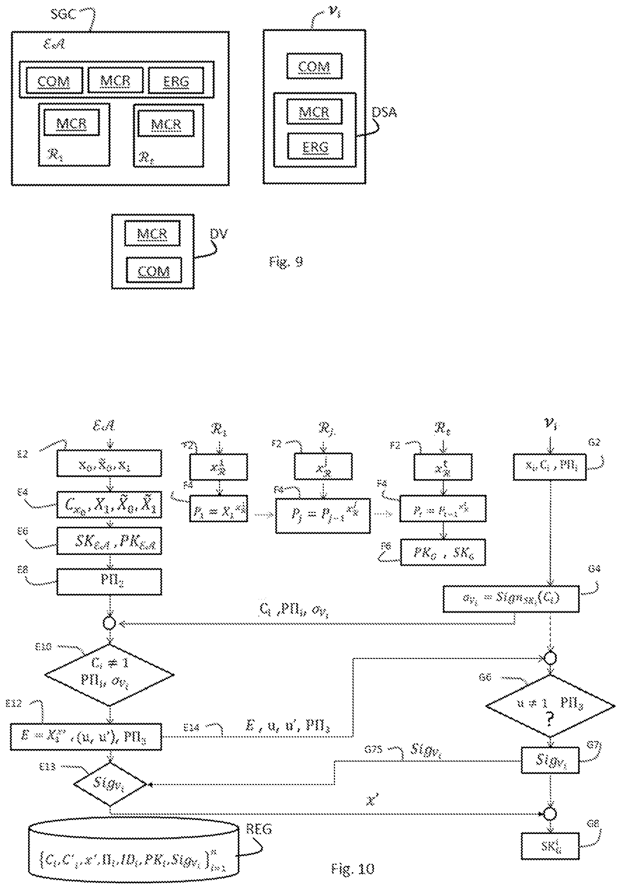

En référence aux figures 9 à 19, nous allons maintenant présenter un deuxième schéma de signatures anonymes SigA$_2$. Nous présenterons ce schéma dans le cas général et dans une utilisation particulière dans le contexte d'un mécanisme de vote électronique.

Dans le mode de réalisation décrit ici, on considère :

- une ou plusieurs entités $\mathcal{E_A}$ d'administration d'un groupe ;

- des autorités de révocation $\{\mathcal{R}_j\}_{j=1}^t$ avec (t $\geq$ 1) ;

- des entités $V_i$ membres du groupe. $\mathcal{G}$ désigne le groupe des n entités membres.

La figure 9 représente un système SGC de génération de clés pour le schéma de signatures anonymes SigA$_2$ et une entité $V_i$ membre d'un groupe $\mathcal{G}$. Elle représente en outre un dispositif de vérification DV.

L'entité membre $V_i$ comporte un module de communication COM et un dispositif DSA de signature anonyme conforme au schéma *SigA$_2$*.

Le système SGC de génération de clés comporte une entité $\mathcal{E_A}$ d'administration du groupe, et des autorités de révocation $\{\mathcal{R}_j\}_{j=1}^t$ avec (t $\geq$ 1) .

L'entité d'administration $\mathcal{E_A}$ du groupe comporte un module de communication COM, un module cryptographique MCR et un module d'enregistrement ERG configuré pour enregistrer au moins une entité membre $V_i$ dans le groupe.

A cet effet, le dispositif DSA de l'entité membre $V_i$ comporte un module d'enregistrement ERG configuré pour enregistrer l'entité membre $V_i$ auprès de l'entité $\mathcal{E_A}$ d'administration du groupe.

Dans le mode de réalisation décrit ici, chaque entité de révocation $\mathcal{R}_j$ comporte un module cryptographique MCR configuré pour calculer une paire de clés de révocation ($x_\mathcal{R}^j$, $P_j$), cette paire comprenant une clé publique $P_j$ et une clé privée $x_\mathcal{R}^j$ pouvant être utilisée par l'entité de révocation pour révoquer l'anonymat d'une signature anonyme conforme audit schéma SigA$_2$.

Dans le mode de réalisation décrit ici, le module cryptographique MCR d'une entité de révocation $\mathcal{R}_j$ est configuré pour calculer, à partir des clés privées $x_\mathcal{R}^j$ de la paire de clés de révocation, un générateur de trace

$$P_t = X_1^{\prod_{j=1}^t x_\mathcal{R}^j}$$, où X$_1$ désigne un paramètre public produit par le système de génération de clés SGC.

Dans le mode de réalisation décrit ici, le dispositif DSA de chaque entité membre $V_i$ comporte un module cryptographique MCR configuré pour générer une trace $T_i = P_t^{s_i}$ représentant l'entité membre $V_i$ en utilisant ce générateur de trace à partir de la clé privée de l'entité membre $V_i$. Cette trace $T_i$ est invariante par rapport aux signatures anonymes $\sigma_i$ générées par l'entité membre conformément au schéma SigA$_2$.

Dans le mode de réalisation décrit ici, le module cryptographique MCR de chaque entité membre $V_i$ est configuré pour obtenir, de manière aveugle, une clé privée $SK_G^i$ de groupe.

Dans le mode de réalisation décrit ici, le module cryptographique MCR de chaque entité membre $V_i$ est configuré pour générer des signatures $\sigma_i$ de messages, en utilisant la clé privée de groupe, ces signatures comportant la trace $T_i$.

Le dispositif de vérification DV est configuré pour vérifier si une signature anonyme $\sigma_i$ est conforme au schéma de signatures anonymes *SigA$_2$*. Il met en œuvre un algorithme de vérification qui prend en entrée un message *msg,* une signature $\sigma_i$ et la clé publique du groupe *PK$_G$*. Il détermine si la signature $\sigma_i$ est valide ou non.

Dans le mode de réalisation décrit ici, le dispositif de vérification DV comporte des moyens de communication COM et un module cryptographique MCR.

Le module de communication COM du dispositif de vérification DV est configuré pour obtenir une signature

anonyme $\sigma_i$ telle que $\sigma_i$ = (*w, w', c₁, T,* PΠ'$_i$).

Le module cryptographique MCR du dispositif de vérification DV est configuré pour déterminer que la signature anonyme $\sigma_i$ d'un message *msg* est valide si :

- 

$$w \neq \mathbf{1_{G_1}}$$

- 

$$T \neq \mathbf{1_{G_1}};$$

- PΠ'$_i$ est valide ; et
- 

$$e\big(w, \tilde{X}_0\big) \cdot e\big(c_1, \tilde{X}_1\big) = e\big(w', \tilde{h}\big).$$

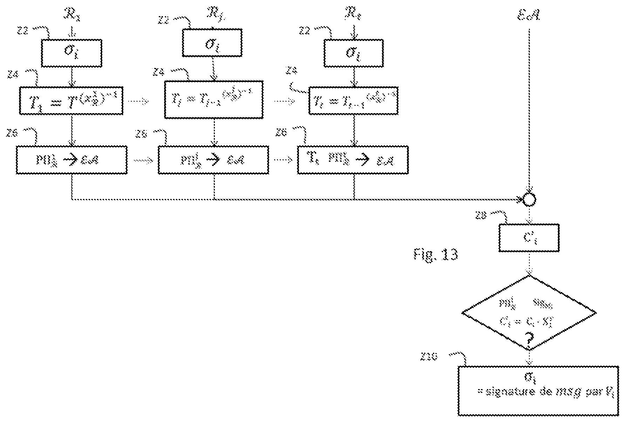

Dans le mode de réalisation décrit ici, le module cryptographique MCR d'une entité de révocation $\mathcal{R}_j$ est configuré pour mettre en œuvre le procédé de levée d'anonymat d'une signature décrit ultérieurement en référence à la figure 13.

La figure 10 représente sous forme d'organigramme les principales étapes d'un procédé de génération de clés du groupe conforme à l'invention.

Au cours d'une étape E2, le module cryptographique MCR de l'entité d'administration $\mathcal{E_A}$ tire aléatoirement trois valeurs, $x_0$, $\tilde{x}_0$, $x_1$ de $Z_p$.

Au cours d'une étape E4, le module cryptographique MCR de l'entité d'administration $\mathcal{E_A}$ calcule $C_{x_0} = g^{x_0} h^{\tilde{x}_0}$, $X_1 = h^{x_1}$, $\tilde{X}_0 = \tilde{h}^{x_0}$, $\tilde{X}_1 = \tilde{h}^{x_1}$.

Au cours d'une étape E6, le module cryptographique MCR de l'entité d'administration $\mathcal{E_A}$ constitue une paire de clés dans laquelle :

- la clé privée $SK_{\mathcal{E_A}}$ est constituée des trois valeurs ($x_0$, $\tilde{x}_0$, $x_1$) qui ont été tirées aléatoirement ; et
- la clé publique $PK_{\mathcal{E_A}}$ est constituée des éléments calculés à l'étape E4: $PK_{\mathcal{A}} = (C_{x_0}, X_1, \tilde{X}_0, \tilde{X}_1)$.

Au cours d'une étape E8, le module cryptographique MCR de l'entité d'administration $\mathcal{E_A}$ génère une preuve PΠ$_2$ à divulgation nulle de connaissance pour prouver qu'il connaît la clé privée associée à sa clé publique. PΠ$_2$ = PoK($\alpha_1$, $\alpha_2$, $\alpha_3$ : $C_{x_0} = g^{\alpha_1} h^{\alpha_2} \wedge X_1 = h^{\alpha_3} \wedge \tilde{X}_0 = \tilde{h}^{\alpha_1} \wedge \tilde{X}_1 = \tilde{h}^{\alpha_3}$).

Au cours d'une étape F2, le module cryptographique MCR de chacune des entités de révocation $\{\mathcal{R}_j\}_{j=1}^{t}$ tire aléatoirement une valeur $x_{\mathcal{R}}^{j}$ de $Z_p$. Cette valeur aléatoire $x_{\mathcal{R}}^{j}$ constitue une clé privée de l'entité de révocation $\mathcal{R}_j$ pour lever l'anonymat d'une signature.

Au cours d'une étape F4, les modules cryptographiques MCR des entités de révocation $\mathcal{R}_j$ calculent tour à tour une clé publique $P_j$ associée à cette clé privée $x_{\mathcal{R}}^{j}$. Plus précisément, dans le mode de réalisation décrit ici :

- l'entité de révocation $\mathcal{R}_1$ calcule $P_1 = X_1^{x_{\mathcal{R}}^{1}}$ et prouve qu'elle connaît la clé privée associée à sa clé publique, autrement dit le logarithme discret de $P_1$ dans la base $X_1$.
- l'entité de révocation $\mathcal{R}_2$ calcule $P_2 = P_1^{x_{\mathcal{R}}^{2}}$ et prouve qu'elle connaît la clé privée associée à sa clé publique, autrement dit le logarithme discret de $P_2$ dans la base $P_1$.
- l'entité de révocation $\mathcal{R}_j$, pour $t \geq j \geq 2$, calcule $P_j = P_{j-1}^{x_{\mathcal{R}}^{j}}$ et prouve qu'elle connaît la clé privée associée à sa clé publique, autrement dit le logarithme discret de $P_j$ dans la base $P_{j-1}$.

Au cours d'une étape F6, lorsque toutes les entités de révocation ont calculé leur clé publique $P_j$, le module

cryptographique MCR de l'entité de révocation $\mathcal{R}_t$ constitue la clé publique du groupe $PK_G = (C_{x0}, X_1, \tilde{X}_0, \tilde{X}_1, P_t)$. Elle comporte le générateur de trace $P_t = X_1^{\prod_{j=1}^{t} x_{\mathcal{R}}^j}$ obtenu à partir des clés privées de chacune des entités de révocation $\mathcal{R}_j$. La clé privée associée à la clé publique de groupe est $SK_G = (x_0, \tilde{x}_0, x_1, x_{\mathcal{R}} = \prod_{j=1}^{t} x_{\mathcal{R}}^j)$.

Dans le mode de réalisation décrit ici, chaque entité membre $V_i$ possède un identifiant unique **ID$_{Vi}$** ainsi qu'une paire de clés privée, publique $(SK_i, PK_i)$, d'un algorithme de signature numérique, la clé publique $PK_i$ ayant été certifiée par une entité de certification reconnue, par exemple par l'entité d'administration $\mathcal{E}\mathcal{A}$. Des exemples d'algorithmes de signature numérique pouvant être utilisés à cet effet sont : RSA, DSA, ECDSA,...

Pour obtenir sa clé privée de groupe, l'entité membre $V_i$ interagit avec l'entité d'administration $\mathcal{E}\mathcal{A}$. Au cours d'une étape G2, le module cryptographique MCR de l'entité membre $V_i$ tire aléatoirement une valeur $x_i \in Z_p$ et calcule $C_i = X_1^{x_i}$. Il génère ensuite une preuve $P\Pi_i$ à divulgation nulle de connaissance qu'il connaît $x_i$ le logarithme discret de $C_i$ en base $X_1$ : $P\Pi_i = PoK(\alpha_1 : C_i = X_1^{\alpha_1})$. L'exemple d'une telle preuve est fourni dans le document Claus-Peter Schnorr, « Efficient Identification and Signature for Smart Cards », Theory and Application of Cryptology, Springer, 1989.

Au cours d'une étape G4, le module cryptographique de l'entité membre $V_i$ génère une signature $\sigma_{V_i}$ sur $C_i$ : $\sigma_{V_i} = Sign_{SKi}(C_i)$ où $SK_i$ désigne la clé privée de $V_i$. L'entité membre $V_i$.transmet ensuite ces trois valeurs $C_i$, $P\Pi_i$, $\sigma_{V_i}$, à l'entité d'administration $\mathcal{E}\mathcal{A}$.

Au cours d'une étape E10, le module cryptographique MCR de l'entité d'administration $\mathcal{E}\mathcal{A}$ vérifie que $C_i \neq 1$ et que la signature $\sigma_{V_i}$ et que la preuve $P\Pi_i$ sont toutes les deux valides.

Si c'est le cas, au cours d'une étape E12, le module cryptographique MCR de l'entité d'administration $\mathcal{E}\mathcal{A}$ génère deux valeurs aléatoires $b$ et $x'$ de $Z_p$ et calcule $E = X_1^{x'}$ ainsi qu'une paire $(u, u')$ où $u = h^b$ et $u' = u^{x_0}(C_i \cdot X_1^{x'})^b = u^{x_0 + (x_i + x')x_1}$. Il prouve que la paire $(u, u')$ a été calculée de manière conforme et notamment à partir des clés privées $x_0$ et $x_1$ : $\Pi_3 = PoK(\alpha_1, \alpha_2, \alpha_3, \alpha_4 : u = h^{\alpha_1} \wedge u' = u^{\alpha_2}(C_i \cdot X_1^{\alpha_4})^{\alpha_1} \wedge C_{x_0} = g^{\alpha_2} h^{\alpha_3} \wedge E = X_1^{\alpha_4})$ Au cours d'une étape E14, le module cryptographique MCR de l'entité d'administration $\mathcal{E}\mathcal{A}$ transmet $E$, u, u' et la preuve $P\Pi_3$ à l'entité membre $V_i$.

Au cours d'une étape G6, le module cryptographique de l'entité membre $V_i$ vérifie que $u \neq 1$ et que la preuve $P\Pi_3$ est valide. Si ces deux vérifications sont concluantes, le module cryptographique de l'entité membre $V_i$ génère, au cours d'une étape G7 une signature $Sig_{V_i}$ sur $C_i$ et $E$ : $Sig_{V_i} = Sign_{SK_i}(C_i, E)$, où $SK_i$ désigne la clé privée de l'entité membre $V_i$.

Au cours d'une étape G75, l'entité membre $V_i$ transmet la signature $Sig_{V_i}$ à l'entité d'administration $\mathcal{E}\mathcal{A}$.

Au cours d'une étape E13, l'entité d'administration $\mathcal{E}\mathcal{A}$ vérifie que la signature $Sig_{V_i}$ est valide, et si c'est le cas, transmet $x'$ à l'entité membre $V_i$.

L'entité d'administration $\mathcal{E}\mathcal{A}$ maintient un registre REG contenant pour chaque entité membre $V_i$ du groupe les valeurs suivantes : $C_i, C'_i = C_i \cdot E = C_i \cdot X_1^{x'}, x', \Pi_i, ID_i, PK_i$ et $Sig_{V_i}$ : $REG = \{C_i, C'_i, x', \Pi_i, ID_i, PK_i, Sig_{V_i}\}_{i=1}^{n}$ où $n$ désigne le nombre de membres dûment enregistrés.

Au cours d'une étape G8, l'entité membre $V_i$ vérifie que $E = X_1^{x'}$ et constitue, si cette vérification est concluante sa clé privée de groupe $SK_G^i$. Celle-ci est constituée par le triplet $SK_G^i = (s_i, u, u')$ où $s_i = x_i + x' \bmod p$.

Dans un mode de réalisation particulier, le générateur de trace $P_t$ est renouvelé périodiquement (toutes les heures, tous les jours, en début de mois, etc.). Il suffit pour cela que les entités de révocation renouvellent leur clé privée $x_{\mathcal{R}}^j$ et recalculent selon le procédé de génération décrit précédemment le générateur de trace correspondant $P_t$.

Dans un mode de réalisation particulier, le générateur de trace $P_t$ est spécifique à un service donné. Typiquement un générateur de trace $P_t$ peut être généré pour une élection spécifique. Pour un nouveau scrutin, les entités de révocation doivent calculer de nouvelles clés privées $x'^j_{\mathcal{R}}$ pour en déduire un nouveau générateur de trace $P'_t$.

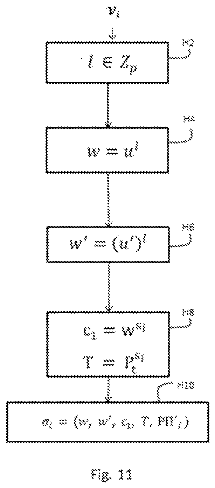

La figure 11 représente sous forme d'organigramme, les principales étapes d'un procédé de signature conforme à l'invention. Ce procédé de signature utilise le schéma de signatures anonymes $SigA_2$. Ce schéma utilise un algorithme qui à partir d'un message msg, de la clé publique de groupe $PK_G$ et de la clé privée $SK_G^i$ d'une entité membre, produit une signature $\sigma_i$ du message *msg.*

Conformément au schéma de signatures anonymes $SigA_2$, pour signer anonymement un message quelconque *msg* $\in$

{0,1}* avec sa clé privée de groupe $SK_G^i$, le module cryptographique MCR de l'entité membre $V_i$ tire aléatoirement, au cours d'une étape H2 une valeur $l \in Z_p$. Il calcule, à l'étape H4 la valeur w = $u^l$ et à l'étape H6 la valeur w' = $(u')^l$.

Au cours d'une étape H8, le module cryptographique MCR de l'entité membre $V_i$ calcule la valeur $c_1$ = $w^{s_i}$ et la trace $T_i = P_t^{s_i}$. Cette trace $T_i$ calculée à partir du générateur de trace $P_t$ et de l'élément $s_i$ de la clé privée de groupe de l'entité membre $V_i$ ne dépend pas du message msg. Autrement dit, la trace $T_i$ constitue un invariant des signatures émises par l'entité membre $V_i$.

L'entité membre $V_i$ prouve que le logarithme discret de $c_1$ dans la base w est le même que le logarithme discret de $T_i$ dans la base $P_t$ : $P\Pi'_i = PoK(\alpha_1 : c_1 = w^{\alpha_1} \wedge T_i = P_t^{\alpha_1})$.

Dans le mode de réalisation de l'invention décrit ici, la preuve $P\Pi'_i$ est la paire (c,r) dans laquelle :

- z est une valeur aléatoire de $Z_p$ tirée par l'entité membre $V_i$ ;
-

$$T_1 = w^z \, ;$$

-

$$T_2 = P_t^z;$$

-

$$c = \mathcal{H}(T_1, T_2, P_t, msg);$$

-

$$r = z - cs_i \bmod p$$

La preuve est valide si $c = \mathcal{H}(w^r c_1^c, P_t^r T_i^c, P_t, m)$.

Au cours d'une étape H10, le module cryptographique MCR de l'entité membre $V_i$ génère la signature anonyme $\sigma_i$ du message msg, celle-ci étant constituée des cinq éléments suivants : (w, w', $c_1$, $T_i$, $P\Pi'_i$). Elle comporte la trace $T_i$ qui permet de tracer toutes les signatures émises par l'entité membre $V_i$.

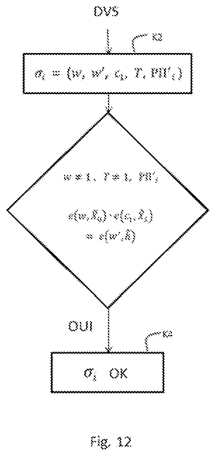

La figure 12 représente sous forme d'organigramme les principales étapes d'un procédé de vérification d'une signature anonyme pouvant être utilisé dans l'invention. Ce procédé est mis en œuvre par le dispositif de vérification DV de la figure 9. Il met en œuvre un algorithme de vérification qui prend en entrée un message *msg*, une signature $\sigma_i$ et la clé publique du groupe $PK_G$. Il détermine si la signature $\sigma_i$ est valide ou non.

Au cours d'une étape K2, le dispositif de vérification d'une signature anonyme obtient une signature anonyme $\sigma_i$ = (w, *w'*, $c_1$, $T_i$, $P\Pi'_i$).

Au cours d'une étape K4, le dispositif de vérification considère que la signature anonyme $\sigma_i$ d'un message *msg* est valide si :

-

$$w \neq \mathbf{1}_{\mathbf{G_1}}$$

-

$$T_i \neq \mathbf{1}_{\mathbf{G_1}};$$

- $P\Pi'_i$ est valide ; et
-

$$e(w, \tilde{X}_0) \cdot e(c_1, \tilde{X}_1) = e(w', \tilde{h}).$$

La figure 13 représente sous forme d'organigramme les principales étapes d'un procédé de levée d'anonymat d'une signature valide $\sigma_i = (w, w', c_1, T_i, \Pi'_i)$ d'un message *msg*. Ce procédé ne peut être mis en œuvre que par les entités de révocation $\mathcal{R}_j$. Il utilise un algorithme qui prend en entrée un message msg, une signature $\sigma_i$, la clé publique du groupe $PK_G$ et les clés privées $x_{\mathcal{R}}^j$ des autorités de révocation et retourne **IDv$_i$** l'identité d'un entité membre $V_i$ ainsi qu'une preuve que $V_i$ est bien l'auteur de cette signature $\sigma_i$.

Au cours d'une étape Z2, chacune des entités de révocation $\mathcal{R}_j$ obtient la signature anonyme $\sigma_i$ d'un message *msg*.

Au cours d'une étape Z4, les autorités de révocation $\{\mathcal{R}_j\}_{j=1}^t$ calculent successivement, $T_j = T_{j-1}^{(x_{\mathcal{R}}^j)^{-1}}$ avec $T_0 = T_i$.
Autrement dit :

- $\mathcal{R}_1$ calcule $T_1 = T_i^{(x_{\mathcal{R}}^1)^{-1}}$ et prouve $(P\Pi_{\mathcal{R}}^1)$ que le logarithme discret de $T_1$ dans la base $T_i$ est égal au logarithme discret de $X_1$ dans la base $P_1$.

- $\mathcal{R}_2$ calcule $T_2 = T_1^{(x_{\mathcal{R}}^2)^{-1}}$ et prouve $(P\Pi_{\mathcal{R}}^2)$ que le logarithme discret de $T_2$ dans la base $T_1$ est égal au logarithme discret de $P_1$ dans la base $P_2$.

- $\mathcal{R}_j$, pour $t \geq j \geq 2$, calcule $T_j = T_{j-1}^{(x_{\mathcal{R}}^j)^{-1}}$ et prouve $(P\Pi_{\mathcal{R}}^j)$ que le logarithme discret de $T_j$ dans la base $T_{j-1}$ est égal au logarithme discret de $P_{j-1}$ dans la base $P_j$.

Il est rappelé ici qu'il peut n'y avoir qu'une seule entité de révocation.

Si toutes les preuves produites par les autorités de révocation sont valides,

$$T_t = T_i^{\Pi_{j=1}^t (x_{\mathcal{R}}^j)^{-1}} = X_1^{s_i} = C'_i.$$

Au cours d'une étape Z6, les autorités de révocation transmettent $T_t$ et l'ensemble des preuves $\{P\Pi_{\mathcal{R}}^j\}_{j=1}^t$ à l'entité d'administration $\mathcal{EA}$.

Au cours d'une étape Z8, l'entité d'administration $\mathcal{EA}$ retrouve dans son registre REG l'entrée correspondant à $C'_i$ : $\{C_i, C'_i, x', \Pi_i, ID_i, PK_i, Sig_{V_i}\}$.

Au cours d'une étape Z10, l'entité d'administration $\mathcal{EA}$ fournit en retour à l'entité de révocation demanderesse de la levée d'anonymat, l'identifiant $\text{ID}_{v_i}$, les preuves $\{P\Pi_{\mathcal{R}}^j\}_{j=1}^t$ ainsi que $C_i$, $C'_i$, $x'$, $PK_i$ et $Sig_{V_i}$. Si toutes les preuves $\{P\Pi_{\mathcal{R}}^j\}_{j=1}^t$ sont valides, que $C'_i = C_i \cdot X_1^{x'}$ et que la signature $Sig_{V_i}$ est valide alors l'entité d'administration $\mathcal{EA}$ considère que l'entité membre $V_i$ dont l'identifiant est $\text{ID}_{v_i}$ est bien l'auteur de la signature $\sigma_i$ du message m*sg*.

Lorsque le service est un vote électronique, il est alors possible de constituer une liste d'émargement à partir des identifiants obtenus par la mise en œuvre du procédé.

Dans le mode de réalisation décrit ici, chaque entité de révocation $\mathcal{R}_j$ comporte un module cryptographique MCR configuré pour calculer une paire de clés de révocation $(x_{\mathcal{R}}^j, P_j)$, cette paire comprenant une clé publique $P_j$ et une clé privée $x_{\mathcal{R}}^j$ pouvant être utilisée par l'entité de révocation pour révoquer l'anonymat d'une signature anonyme conforme audit schéma SigA$_2$.

Dans le mode de réalisation décrit ici, le module cryptographique MCR d'une entité de révocation $\mathcal{R}_j$ est configuré pour calculer, à partir des clés privées $x_{\mathcal{R}}^j$ de la paire de clés de révocation, un générateur de trace $P_t = X_1^{\Pi_{j=1}^t x_{\mathcal{R}}^j}$.

Dans le mode de réalisation décrit ici, le dispositif DSA de chaque entité membre $V_i$ comporte un module cryptographique MCR configuré pour générer une trace $T_i = P_t^{s_i}$ représentant l'entité membre $V_i$ en utilisant ce générateur de trace à partir de la clé privée de l'entité membre $V_i$. Cette trace $T_i$ est invariante par rapport aux signatures anonymes $\sigma_i$ générées par l'entité membre conformément au schéma SigA$_2$.

Dans le mode de réalisation décrit ici, le module cryptographique MCR de chaque entité membre $V_i$ est configuré pour obtenir, de manière aveugle, une clé privée $SK_G^i$ du groupe.

Dans le mode de réalisation décrit ici, le module cryptographique MCR de chaque entité membre $V_i$ est configuré pour générer des signatures $\sigma_i$ de messages, en utilisant la clé privée de groupe, ces signatures comportant la trace $T_i$.

Le dispositif de vérification DV est configuré pour vérifier si une signature anonyme $\sigma_i$ est conforme au schéma de signatures anonymes $SigA_2$. Il met en œuvre un algorithme de vérification qui prend en entrée un message $msg$, une signature $\sigma_i$ et la clé publique du groupe $PK_G$. Il détermine si la signature $\sigma_i$ est valide ou non.

Dans le mode de réalisation décrit ici, le dispositif de vérification DV comporte des moyens de communication COM et un module cryptographique MCR.

Le module de communication COM du dispositif de vérification DV est configuré pour obtenir une signature anonyme $\sigma_i$ telle que $\sigma_i$ = $(w, w', c_1, T_i, P\Pi'_i)$.

Le module cryptographique MCR du dispositif de vérification DV est configuré pour déterminer que la signature anonyme $\sigma_i$ d'un message $msg$ est valide si :

- 

$$w \neq \mathbf{1_{G_1}}$$

- 

$$T_i \neq \mathbf{1_{G_1}};$$

- $P\Pi'_i$ est valide ; et

-

$$e(w, \tilde{X}_0) \cdot e(c_1, \tilde{X}_1) = e(w', \tilde{h}).$$

Dans le mode de réalisation décrit ici, le module cryptographique MCR d'une entité de révocation $\mathcal{R}_j$ est configuré pour mettre en œuvre le procédé de levée d'anonymat d'une signature décrit ultérieurement en référence à la figure 13.

La figure 10 représente sous forme d'organigramme les principales étapes d'un procédé de génération de clés du groupe conforme à l'invention.

Au cours d'une étape E2, le module cryptographique MCR de l'entité d'administration $\mathcal{E}\mathcal{A}$ tire aléatoirement trois valeurs, $x_0, \tilde{x}_0, x_1$ de $Z_p$.

Au cours d'une étape E4, le module cryptographique MCR de l'entité d'administration $\mathcal{E}\mathcal{A}$ calcule

$$C_{x_0} = g^{x_0} h^{\tilde{x}_0}, X_1 = h^{x_1}, \tilde{X}_0 = \tilde{h}^{x_0}, \tilde{X}_1 = \tilde{h}^{x_1}.$$

Au cours d'une étape E6, le module cryptographique MCR de l'entité d'administration $\mathcal{E}\mathcal{A}$ constitue une paire de clés dans laquelle :

- la clé privée $SK_{\mathcal{E}\mathcal{A}}$ est constituée des trois valeurs $(x_0, \tilde{x}_0, x_1)$ qui ont été tirées aléatoirement ; et
- la clé publique $^{,x_0,x_0}$ est constituée des éléments calculés à l'étape E4: $PK_{\mathcal{A}} = (C_{x_0}, X_1, \tilde{X}_0, \tilde{X}_1)$.

Au cours d'une étape E8, le module cryptographique MCR de l'entité d'administration $\mathcal{E}\mathcal{A}$ génère une preuve $P\Pi_2$ à divulgation nulle de connaissance pour prouver qu'il connaît les clés privées associées à sa clé publique. $P\Pi_2$ = $PoK(\alpha_1, \alpha_2, \alpha_3 : C_{x_0} = g^{\alpha_1} h^{\alpha_2} \wedge X_1 = h^{\alpha_3} \wedge \tilde{X}_0 = \tilde{h}^{\alpha_1} \wedge \tilde{X}_1 = h^{\alpha_3})$.

Au cours d'une étape F2, le module cryptographique MCR de chacune des entités de révocation $\{\mathcal{R}_j\}_{j=1}^t$ tire aléatoirement une valeur $x_{\mathcal{R}}^j$ de $Z_p$. Cette valeur aléatoire $x_{\mathcal{R}}^j$ constitue une clé privée de l'entité de révocation $\mathcal{R}_j$ pour lever l'anonymat d'une signature.

Au cours d'une étape F4, les modules cryptographiques MCR des entités de révocation $\mathcal{R}_j$ calculent tour à tour

une clé publique $P_j$ associée à cette clé privée $x_{\mathcal{R}}^j$. Plus précisément, dans le mode de réalisation décrit ici :

- l'entité de révocation $\mathcal{R}_1$ calcule $P_1 = X_1^{x_{\mathcal{R}}^1}$ et prouve qu'elle connaît la clé privée associée à sa clé publique, autrement dit le logarithme discret de $P_1$ dans la base $X_1$.

- l'entité de révocation $\mathcal{R}_2$ calcule $P_2 = P_1^{x_{\mathcal{R}}^2}$ et prouve qu'elle connaît la clé privée associée à sa clé publique, autrement dit le logarithme discret de $P_2$ dans la base $P_1$.

- l'entité de révocation $\mathcal{R}_j$, pour $t \geq j \geq 2$, calcule $P_j = P_{j-1}^{x_{\mathcal{R}}^j}$ et prouve qu'elle connaît la clé privée associée à sa clé publique, autrement dit le logarithme discret de $P_j$ dans la base $P_{j-1}$.

Au cours d'une étape F6, lorsque toutes les entités de révocation ont calculé leur clé publique $P_j$, le module cryptographique MCR de l'entité de révocation $\mathcal{R}_t$ constitue la clé publique du groupe $PK_G = (C_{x_0}, X_1, \tilde{X}_0, \tilde{X}_1, P_t)$. Elle comporte le générateur de trace $P_t = X_1^{\prod_{j=1}^{t} x_{\mathcal{R}}^j}$ obtenu à partir des clés privées de chacune des entités de révocation $\mathcal{R}_j$. La clé privée associée à la clé publique de groupe est $SK_G = (x_0, \tilde{x}_0, x_1, x_{\mathcal{R}} = \prod_{j=1}^{t} x_{\mathcal{R}}^j)$.

Dans le mode de réalisation décrit ici, chaque entité membre $V_i$ possède un identifiant unique $\mathbf{ID}_{V_i}$ ainsi qu'une paire de clés privée, publique $(SK_i, PK_i)$, d'un algorithme de signature numérique, la clé publique $PK_i$ ayant été certifiée par une entité de certification reconnue, par exemple par l'entité d'administration $\mathcal{EA}$. Des exemples d'algorithmes de signature numérique pouvant être utilisés à cet effet sont : RSA, DSA, ECDSA,...

Pour obtenir sa clé privée de groupe, l'entité membre $V_i$ interagit avec l'entité d'administration $\mathcal{EA}$. Au cours d'une étape G2, le module cryptographique MCR de l'entité membre $V_i$ tire aléatoirement une valeur $x_i \in Z_p$ et calcule $C_i = X_1^{x_i}$. Il génère ensuite une preuve $P\Pi_i$ à divulgation nulle de connaissance qu'il connaît $x_i$ le logarithme discret de $C_i$ en base $X_1$ : $P\Pi_i = PoK(\alpha_1 : C_i = X_1^{\alpha_1})$. L'exemple d'une telle preuve est fourni dans le document Claus-Peter Schnorr, « Efficient Identification and Signature for Smart Cards », Theory and Application of Cryptology, Springer, 1989.

Au cours d'une étape G4, le module cryptographique de l'entité membre $V_i$ génère une signature $\sigma_{V_i}$ sur $C_i$ : $\sigma_{V_i} = Sign_{SKi}(C_i)$ où $SK_i$ désigne la clé privée de $V_i$. L'entité membre $V_i$ transmet ensuite ces trois valeurs $C_i$, $P\Pi_i$, $\sigma_{V_i}$ à l'entité d'administration $\mathcal{EA}$.

Au cours d'une étape E10, le module cryptographique MCR de l'entité d'administration $\mathcal{EA}$ vérifie que $C_i \neq 1$ et que la signature $\sigma_{V_i}$ et que la preuve $P\Pi_i$ sont toutes les deux valides.

Si c'est le cas, au cours d'une étape E12, le module cryptographique MCR de l'entité d'administration $\mathcal{EA}$ génère deux valeurs aléatoires $b$ et $x'$ de $Z_p$ et calcule $E = X_1^{x'}$ ainsi qu'une paire (*u, u'*) où $u = h^b$ et $u' = u^{x_0}(C_i \cdot X_1^{x'})^b = u^{x_0 + (x_i + x')x_1}$. Il prouve que la paire (*u, u'*) a été calculée de manière conforme et notamment à partir des clés privées $x_0$ et $x_1$ : $\Pi_3 = PoK(\alpha_1, \alpha_2, \alpha_3, \alpha_4 : u = h^{\alpha_1} \wedge u' = u^{\alpha_2}(C_i \cdot X_1^{\alpha_4})^{\alpha_1} \wedge C_{x_0} = g^{\alpha_2}h^{\alpha_3} \wedge E = X_1^{\alpha_4})$ Au cours d'une étape E14, le module cryptographique MCR de l'entité d'administration $\mathcal{EA}$ transmet $E$, u, u' et la preuve $P\Pi_3$ à l'entité membre $V_i$.

Au cours d'une étape G6, le module cryptographique de l'entité membre $V_i$ vérifie que $u \neq 1$ et que la preuve $P\Pi_3$ est valide. Si ces deux vérifications sont concluantes, le module cryptographique de l'entité membre $V_i$ génère, au cours d'une étape G7 une signature $Sig_{V_i}$ sur $C_i$ et $E$ : $Sig_{V_i} = Sign_{SKi}(C_i, E)$, où $SK_i$ désigne la clé privée de l'entité membre $V_i$.

Au cours d'une étape G75, l'entité membre $V_i$ transmet la signature $Sig_{V_i}$ à l'entité d'administration $\mathcal{EA}$.

Au cours d'une étape E11, l'entité d'administration $\mathcal{EA}$ vérifie que la signature $Sig_{V_i}$ est valide, et si c'est le cas, transmet $x'$ à l'entité membre $V_i$.

L'entité d'administration $\mathcal{EA}$ maintient un registre REG contenant pour chaque entité membre $V_i$ du groupe les valeurs suivantes : $C_i$, $C'_i = C_i \cdot E = C_i \cdot X_1^{x'}$, $x'$, $\Pi_i$, $ID_i$, $PK_i$ et $Sig_{V_i}$ : $REG = \{C_i, C'_i, x', \Pi_i, ID_i, PK_i, Sig_{V_i}\}_{i=1}^{n}$ où $n$ désigne le nombre de membres dûment enregistrés.

Au cours d'une étape G8, l'entité membre $V_i$ vérifie que $E = X_1^{x'}$ et constitue, si cette vérification est concluante,

sa clé privée de groupe $SK_G^i$. Celle-ci est constituée par le triplet $SK_G^i = (s_i, u, u')$ où $s_i = x_i + x'\bmod p$.

Dans un mode de réalisation particulier, le générateur de trace $P_t$ est renouvelé périodiquement (toutes les heures, tous les jours, en début de mois, etc.). Il suffit pour cela que les entités de révocation renouvellent leur clé privée $x_\mathcal{R}^j$ et recalculent selon le procédé de génération décrit précédemment le générateur de trace correspondant $P_t$.

Dans un mode de réalisation particulier, le générateur de trace $P_t$ est spécifique à un service donné. Typiquement un générateur de trace $P_t$ peut être généré pour une élection spécifique. Pour un nouveau scrutin, les entités de révocation doivent calculer de nouvelles clés privées $x'^j_\mathcal{R}$ pour en déduire un nouveau générateur de trace $P'_t$.

La figure 11 représente sous forme d'organigramme, les principales étapes d'un procédé de signature conforme à l'invention. Ce procédé de signature utilise le schéma de signatures anonymes $SigA_2$. Ce schéma utilise un algorithme qui à partir d'un message msg, de la clé publique de groupe $PK_G$ et de la clé privée de groupe $SK_G^i$ d'une entité membre, produit une signature du message *msg.*

Conformément au schéma de signatures anonymes $SigA_2$, pour signer anonymement un message quelconque *msg* $\in$ {0,1}* avec sa clé privée de groupe $SK_G^i$, le module cryptographique MCR de l'entité membre $V_i$ tire aléatoirement, au cours d'une étape H2 une valeur $l \in Z_p$. Il calcule, à l'étape H4 la valeur $w = u^l$ et à l'étape H6 la valeur $w' = (u')^l$.

Au cours d'une étape H8, le module cryptographique MCR de l'entité membre $V_i$ calcule la valeur $c_1 = w^{s_i}$ et la trace $T_i = P_t^{s_i}$. Cette trace $T_i$ calculée à partir du générateur de trace $P_t$ et de l'élément $s_i$ de la clé privée de groupe de l'entité membre $V_i$ ne dépend pas du message msg. Autrement dit, la trace $T_i$ constitue un invariant des signatures émises par l'entité membre $V_i$.

L'entité membre $V_i$ prouve que le logarithme discret de $c_1$ dans la base $w$ est le même que le logarithme discret de $T_i$ dans la base $P_t$ : $P\Pi'_i = PoK(\alpha_1 : c_1 = w^{\alpha_1} \wedge T_i = P_t^{\alpha_1})$.

Dans le mode de réalisation de l'invention décrit ici, la preuve $P\Pi'_i$ est la paire (c,r) dans laquelle :

- z est une valeur aléatoire de $Z_p$ tirée par l'entité membre $V_i$ ;
-

$$T_1 = w^z ;$$

-

$$T_2 = P_t^z;$$

-

$$c = \mathcal{H}(T_1, T_2, P_t, \mathrm{msg});$$

-

$$r = z - cs_i \bmod p$$

La preuve est valide si $c = \mathcal{H}(w^r c_1^c, P_t^r T_i'^c, P_t, m)$.

Au cours d'une étape H10, le module cryptographique MCR de l'entité membre $V_i$ génère la signature anonyme $\sigma_i$ du message msg, celle-ci étant constituée des cinq éléments suivants : *(w, w', $c_1$, $T_i$, $P\Pi'_i$)*. Elle comporte la trace $T_i$ qui permet de tracer toutes les signatures émises par l'entité membre $V_i$.

La figure 12 représente sous forme d'organigramme les principales étapes d'un procédé de vérification d'une signature anonyme pouvant être utilisé dans le contexte du schéma $SigA_2$. Ce procédé est mis en œuvre par le dispositif de vérification DV de la figure 9. Il met en œuvre un algorithme de vérification qui prend en entrée un message *msg,* une signature $\sigma_i$ et la clé publique du groupe $PK_G$. Il détermine si la signature $\sigma_i$ est valide ou non.

Au cours d'une étape K2, le dispositif de vérification d'une signature anonyme obtient une signature anonyme $\sigma_i$ = (w, w', $c_1$, T, $P\Pi'_i$).

Au cours d'une étape K4, elle considère que la signature anonyme $\sigma_i$ d'un message *msg* est valide si :

-

$$w \neq \mathbf{1}_{\mathbf{G_1}}$$

-

$$T \neq \mathbf{1}_{\mathbf{G_1}};$$

- $P\Pi'_i$ est valide ; et
-

$$e(w, \tilde{X}_0) \cdot e(c_1, \tilde{X}_1) = e(w', \tilde{h}).$$

La figure 13 représente sous forme d'organigramme les principales étapes d'un procédé de levée d'anonymat d'une signature valide $\sigma_i = (w, w', c_1, T_i, \Pi'_i)$ d'un message *msg*. Ce procédé ne peut être mis en œuvre que par les entités de révocation $\mathcal{R}_j$. Il utilise un algorithme qui prend en entrée un message msg, une signature $\sigma_i$, la clé publique du groupe $PK_G$ et les clés privées $x_{\mathcal{R}}^j$ des autorités de révocation et retourne $\mathbf{ID}_{V_i}$ l'identité d'un entité membre $V_i$ ainsi qu'une preuve que $V_i$ est bien l'auteur de cette signature $\sigma_i$.

Au cours d'une étape Z2, chacune des entités de révocation $\mathcal{R}_j$ obtient la signature anonyme $\sigma_i$ d'un message *msg.*

Au cours d'une étape Z4, les autorités de révocation $\{\mathcal{R}_j\}_{j=1}^t$ calculent successivement, $T_j = T_{j-1}^{(x_{\mathcal{R}}^j)^{-1}}$ avec $T_0 = T_i$.
Autrement dit :

- $\mathcal{R}_1$ calcule $T_1 = T^{(x_{\mathcal{R}}^1)^{-1}}$ et prouve $(P\Pi_{\mathcal{R}}^1)$ que le logarithme discret de $T_1$ dans la base $T_i$ est égal au logarithme discret de $X_1$ dans la base $P_1$.

- $\mathcal{R}_2$ calcule $T_2 = T_1^{(x_{\mathcal{R}}^2)^{-1}}$ et prouve $(P\Pi_{\mathcal{R}}^2)$ que le logarithme discret de $T_2$ dans la base $T_1$ est égal au logarithme discret de $P_1$ dans la base $P_2$.

- $\mathcal{R}_j$, pour $t \geq j \geq 2$, calcule $T_j = T_{j-1}^{(x_{\mathcal{R}}^j)^{-1}}$ et prouve $(P\Pi_{\mathcal{R}}^j)$ que le logarithme discret de $T_j$ dans la base $T_{j-1}$ est égal au logarithme discret de $P_{j-1}$ dans la base $P_j$.

Il est rappelé ici qu'il peut n'y avoir qu'une seule entité de révocation.
Si toutes les preuves produites par les autorités de révocation sont valides,

$$T_t = T^{\Pi_{j=1}^t (x_{\mathcal{R}}^j)^{-1}} = X_1^{s_i} = C'_i.$$

Au cours d'une étape Z6, les autorités de révocation transmettent $T_t$ et l'ensemble des preuves $\{P\Pi_{\mathcal{R}}^j\}_{j=1}^t$ à l'entité d'administration $\mathcal{EA}$.

Au cours d'une étape Z8, l'entité d'administration $\mathcal{EA}$ retrouve dans son registre REG l'entrée correspondant à $C'_i$ : $\{C_i, C'_i, x', \Pi_i, ID_i, PK_i, Sig_{Vi}\}$.

Au cours d'une étape Z10, l'entité d'administration $\mathcal{EA}$ fournit en retour à l'entité de révocation $\mathcal{R}_j$ demanderesse de la levée d'anonymat, l'identifiant $\mathbf{ID}_{V_i}$, les preuves $\{P\Pi_{\mathcal{R}}^j\}_{j=1}^t$ ainsi que $C_i$, $C'_i$, $x'$, $PK_i$ et $Sig_{V_i}$. Si toutes les preuves $\{P\Pi_{\mathcal{R}}^j\}_{j=1}^t$ sont valides, que $C'_i = C_i \cdot X_1^{x'}$ et que la signature $Sig_{M_i}$ est valide alors l'entité d'administration $\mathcal{EA}$ considère que l'entité membre $V_i$ dont l'identifiant est $\mathbf{ID}_{V_i}$ est bien l'auteur de la signature $\sigma_i$ du message ms*g*.

Lorsque le service est un vote électronique, il est alors possible de constituer une liste d'émargement à partir des identifiants obtenus par la mise en œuvre du procédé.
Le schéma de signatures anonymes $SigA_2$ peut en particulier être utilisé pour mettre en œuvre une solution de vote électronique.

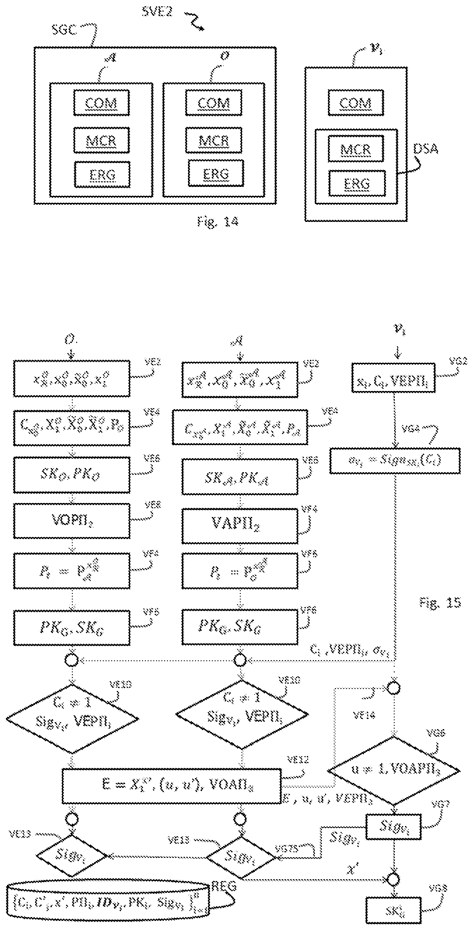

La figure 14 représente un système de vote électronique SVE2 conforme à l'invention. Ce système comporte un système SGC de génération de clés pour un schéma de signatures anonymes $SigA_2$ et une entité $V_i$ membre d'un groupe $\mathcal{G}$ conformes à l'invention. Il comporte en outre un dispositif de vérification DV.

Dans ce mode de réalisation, les entités membres de groupe $V_i$ sont des entités électeurs.

Dans ce mode de réalisation, le système SGC de génération de clés comporte une entité d'enregistrement $\mathcal{A}$ et une entité organisateur $\mathcal{O}$. Chacune fait à la fois office d'entité d'administration du groupe et d'entité de révocation du groupe. Il est bien entendu qu'il s'agit ici d'un exemple illustratif et que dans d'autres exemples la distribution des rôles attribuée aux différentes entités peut être différente. L'entité d'enregistrement $\mathcal{A}$ et l'entité organisateur $\mathcal{O}$ comportent chacune un module de communication COM et un module cryptographique MCR. L'entité d'enregistrement $\mathcal{A}$ et l'entité organisateur $\mathcal{O}$ comportent en outre chacune un module d'enregistrement ERG configuré pour enregistrer au moins une entité électeur $V_i$ dans le groupe.

Ainsi, dans ce mode de réalisation de l'invention, une entité électeur s'enregistre à la fois auprès de l'entité d'enregistrement $\mathcal{A}$ et auprès de l'entité organisateur $\mathcal{O}$. Ce mode de réalisation permet de répartir le rôle d'administrateur de groupe entre deux entités de sorte à éviter qu'une seule entité ne soit en mesure de créer de fausses entités électeurs.

L'entité électeur $V_i$ comporte un module de communication COM et un dispositif DSA de signature anonyme conforme à l'invention.

Le dispositif DSA de l'entité électeur $V_i$ comporte un module d'enregistrement ERG configuré pour enregistrer l'entité électeur $V_i$ auprès de l'entité d'enregistrement $\mathcal{A}$.

Dans le mode de réalisation décrit ici, le module cryptographique MCR de chaque entité de révocation $\mathcal{A}, \mathcal{O}$ est configuré pour calculer une paire de clés de révocation dont la clé privée peut être utilisée pour révoquer l'anonymat d'une signature anonyme conforme audit schéma $SigA_2$ et pour calculer, à partir d'une clé publique de la paire de clés de révocation, un générateur de trace.

Le dispositif DSA de chaque entité électeur $V_i$ comporte un module cryptographique MCR configuré pour générer une trace $T_i = P_t^{s_i}$ en utilisant ce générateur de trace, cette trace $T_i$ étant invariante par rapport aux signatures anonymes $\sigma_i$ générées par l'entité électeur conformément au schéma SigA$_2$.

Dans le mode de réalisation décrit ici, le module cryptographique MCR de chaque entité électeur $V_i$ est configuré pour obtenir, de manière aveugle, une clé privée $SK_G^i$ de groupe, notée s$_i$ par la suite.

Dans le mode de réalisation décrit ici, le module cryptographique MCR de chaque entité électeur $V_i$ est configuré pour générer des signatures $\sigma_i$ de messages, en utilisant la clé privée de groupe, ces signatures comportant la trace $T_i$.

Le dispositif de vérification DV est configuré pour vérifier si une signature anonyme $\sigma_i$ est conforme au schéma de signatures anonymes $SigA_2$. Il met en œuvre un algorithme de vérification qui prend en entrée un message $msg$, une signature $\sigma_i$ et la clé publique du groupe $PK_G$. Il détermine si la signature $\sigma_i$ est valide ou non.

Dans le mode de réalisation décrit ici, le dispositif de vérification DV comporte des moyens de communication COM et un module cryptographique MCR.

Le module de communication COM est apte à obtenir une signature anonyme $\sigma_i$ telle que $\sigma_i = (w, w', c_1, T_i, P\Pi'_i)$.

Le module cryptographique MCR est configuré pour déterminer que la signature anonyme $\sigma_i$ d'un message $msg$ est valide si :

-

$$w \neq \mathbf{1_{G_1}}$$

-

$$T_i \neq \mathbf{1_{G_1}};$$

- $P\Pi'_i$ est valide ; et

-

$$e(w, \tilde{X}_0) \cdot e(c_1, \tilde{X}_1) = e(w', \tilde{h}).$$

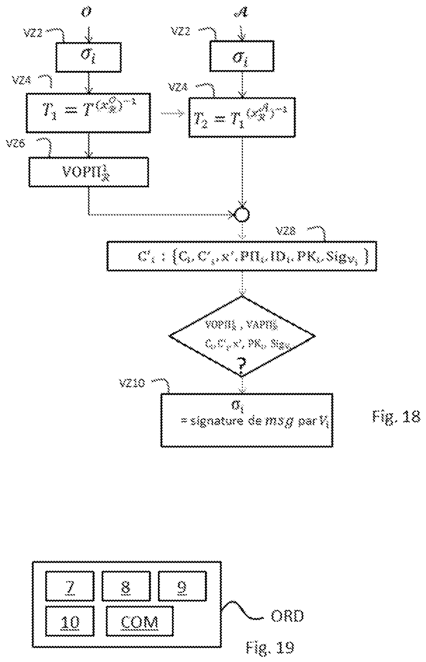

Dans le mode de réalisation décrit ici, le module cryptographique MCR d'une entité de révocation $\mathcal{A}$, $\mathcal{O}$ est configuré pour mettre en œuvre le procédé de levée d'anonymat d'une signature décrit ultérieurement en référence à la figure 18.

La figure 15 représente sous forme d'organigramme un procédé de génération des clés des entités électeurs conforme à ce mode de réalisation de l'invention.

Au cours d'une étape VE2, le module cryptographique MCR de l'entité organisateur $\mathcal{O}$ tire aléatoirement quatre valeurs $x_{\mathcal{R}}^{\mathcal{O}}, x_0^{\mathcal{O}}, \tilde{x}_0^{\mathcal{O}}, x_1^{\mathcal{O}}$ de $Z_p$. Dans ce mode de réalisation, $x_{\mathcal{R}}^{\mathcal{O}}$ est une clé privée utilisée par l'entité organisateur $\mathcal{O}$ pour lever l'anonymat d'une entité électeur.

Au cours d'une étape VE4, le module cryptographique MCR de l'entité organisateur $\mathcal{O}$ calcule $C_{x_0^{\mathcal{O}}} = g^{x_0^{\mathcal{O}}} h^{\tilde{x}_0^{\mathcal{O}}}, X_1^{\mathcal{O}} = h^{x_1^{\mathcal{O}}}, \tilde{X}_0^{\mathcal{O}} = \tilde{h}^{x_0^{\mathcal{O}}}, \tilde{X}_1^{\mathcal{O}} = \tilde{h}^{x_1^{\mathcal{O}}}, P_{\mathcal{O}} = X_1^{x_{\mathcal{R}}^{\mathcal{O}}}$.

Au cours d'une étape VE6, le module cryptographique MCR de l'entité organisateur $\mathcal{O}$ constitue une paire de clés dans laquelle :

- la clé privée $SK_{\mathcal{O}}$ est constituée des quatre valeurs $(x_{\mathcal{R}}^{\mathcal{O}}, x_0^{\mathcal{O}}, \tilde{x}_0^{\mathcal{O}}, x_1^{\mathcal{O}})$ qui ont été tirées aléatoirement ; et

- la clé publique $PK_{\mathcal{O}}$ est constituée des éléments calculés à l'étape VE4: $(C_{x_0^{\mathcal{O}}}, X_1^{\mathcal{O}}, \tilde{X}_0^{\mathcal{O}}, \tilde{X}_1^{\mathcal{O}}, P_{\mathcal{O}})$.

Au cours d'une étape VE8, le module cryptographique MCR de l'entité organisateur $\mathcal{O}$ génère une preuve VOP$\Pi_2$ qu'il connaît la clé privée associée à sa clé publique en générant une preuve à divulgation nulle de connaissance définie comme suit :

$$\text{VO}\Pi_2 = \text{PoK}(\alpha_1, \alpha_2, \alpha_3, \alpha_4 : C_{x_0^{\mathcal{O}}} =$$

$$g^{\alpha_1} h^{\alpha_2} \wedge X_1^{\mathcal{O}} = h^{\alpha_3} \wedge \tilde{X}_0^{\mathcal{O}} = \tilde{h}^{\alpha_1} \wedge \tilde{X}_1^{\mathcal{O}} = \tilde{h}^{\alpha_3} \wedge P_{\mathcal{O}} = X_1^{\alpha_4}).$$

L'entité d'enregistrement $\mathcal{A}$ procède de la même façon.

Au cours d'une étape VE2, le module cryptographique MCR de l'entité d'enregistrement $\mathcal{A}$ tire aléatoirement quatre valeurs

$$x_{\mathcal{R}}^{\mathcal{A}}, x_0^{\mathcal{A}}, \tilde{x}_0^{\mathcal{A}}, x_1^{\mathcal{A}}$$

de $Z_p$. Dans ce mode de réalisation,

$$x_{\mathcal{R}}^{\mathcal{A}}$$

est une clé privée utilisée par l'entité d'enregistrement $\mathcal{A}$ pour lever l'anonymat d'une entité électeur.

Au cours d'une étape VE4, le module cryptographique MCR de l'entité d'enregistrement $\mathcal{A}$ calcule

$$C_{x_0^{\mathcal{A}}} = g^{x_0^{\mathcal{A}}} h^{\tilde{x}_0^{\mathcal{A}}}, X_1^{\mathcal{A}} = h^{x_1^{\mathcal{A}}}, \tilde{X}_0^{\mathcal{A}} = \tilde{h}^{x_0^{\mathcal{A}}}, \tilde{X}_1^{\mathcal{A}} = \tilde{h}^{x_1^{\mathcal{A}}}, P_{\mathcal{A}} = X_1^{x_{\mathcal{R}}^{\mathcal{A}}}.$$

Au cours d'une étape VE6, le module cryptographique MCR de l'entité d'enregistrement $\mathcal{A}$ constitue une paire de clés dans laquelle :

- la clé privée $SK_{\mathcal{A}}$ est constituée des quatre valeurs

$$(x_{\mathcal{R}}^{\mathcal{A}}, x_0^{\mathcal{A}}, \widetilde{x}_0^{\mathcal{A}}, x_1^{\mathcal{A}})$$

qui ont été tirées aléatoirement ; et
- la clé publique

$$SK_{\mathcal{A}}, PK_{\mathcal{A}}$$

est constituée des éléments calculés à l'étape VE4 :

$$(C_{x_0^{\mathcal{A}}}, X_1^{\mathcal{A}}, \widetilde{X}_0^{\mathcal{A}}, \widetilde{X}_1^{\mathcal{A}}, P_{\mathcal{A}}).$$

Au cours d'une étape VE8, le module cryptographique MCR de l'entité d'enregistrement $\mathcal{A}$ génère une preuve VAP$\Pi_2$ qu'il connaît la clé privée associée à sa clé publique. Cette preuve est définie comme suit :

$$\mathrm{VAP}\Pi_2 = \mathrm{PoK}(\alpha_1, \alpha_2, \alpha_3, \alpha_4 : C_{x_0^{\mathcal{A}}} = g^{\alpha_1} h^{\alpha_2} \wedge X_1^{\mathcal{A}} = h^{\alpha_3} \wedge \widetilde{X}_0^{\mathcal{A}} = \tilde{h}^{\alpha_1} \wedge \widetilde{X}_1^{\mathcal{A}} =$$

$$\tilde{h}^{\alpha_3} \wedge P_{\mathcal{A}} = X_1^{\alpha_4})$$

Au cours d'une étape VF4, les modules cryptographiques MCR de l'entité organisateur $\mathcal{O}$ et de l'entité d'enregistrement $\mathcal{A}$, après avoir rendu publiques leurs clés publiques $P_{\mathcal{O}}$ et $P_{\mathcal{A}}$, calculent chacun de leur côté un générateur de trace

$$P_t = X_1^{x_{\mathcal{R}}^{\mathcal{A}} \cdot x_{\mathcal{R}}^{\mathcal{O}}} = P_{\mathcal{O}}^{x_{\mathcal{R}}^{\mathcal{A}}} = P_{\mathcal{A}}^{x_{\mathcal{R}}^{\mathcal{O}}}.$$

Au cours d'une étape VF6, lorsque toutes les entités de révocation, à savoir l'entité d'enregistrement $\mathcal{A}$ et l'entité organisateur $\mathcal{O}$ dans ce mode de réalisation, ont calculé leur clé publique, elles calculent la clé publique du groupe $PK_G$. Elle comporte le générateur de trace

$$P_t$$

$$= X_1^{x_{\mathcal{R}}^{\mathcal{A}} \cdot x_{\mathcal{R}}^{\mathcal{O}}}$$

obtenu à partir des clés privées de ces entités de révocation $\mathcal{A}$ et $\mathcal{O}$.

$$PK_G = (C_{x_0}, X_1, \widetilde{X}_0, \widetilde{X}_1, P_t) \text{ où } C_{x_0} = C_{x_0^{\mathcal{O}}} \cdot C_{x_0^{\mathcal{A}}}, X_1 = X_1^{\mathcal{O}} \cdot X_1^{\mathcal{A}}, \widetilde{X}_0 = \widetilde{X}_0^{\mathcal{O}} \cdot \widetilde{X}_1^{\mathcal{A}} \text{ et } \widetilde{X}_1 = \widetilde{X}_1^{\mathcal{O}} \cdot \widetilde{X}_1^{\mathcal{A}}.$$

La clé privée associée à la clé publique de groupe est :

$$SK_G = (x_0 = x_0^{\mathcal{O}} + x_0^{\mathcal{A}}, \widetilde{x}_0 = \widetilde{x}_0^{\mathcal{O}} + \widetilde{x}_0^{\mathcal{A}}, x_1 = x_1^{\mathcal{O}} + x_1^{\mathcal{A}}, x_{\mathcal{R}} = x_{\mathcal{R}}^{\mathcal{A}} \cdot x_{\mathcal{R}}^{\mathcal{O}})$$

Dans ce mode de réalisation, chaque entité électeur $V_i$ possède un identifiant unique $\mathbf{ID}_{v_i}$ ainsi qu'une paire de clés, privée et publique (SK$_i$,PK$_i$), d'un algorithme de signature numérique , la clé publique PK$_i$ ayant été certifiée au préalable par une autorité de certification reconnue, par exemple par l'entité d'enregistrement $\mathcal{A}$ et par l'entité organisateur $\mathcal{O}$.

Dans le mode de réalisation décrit ici, pour obtenir sa clé privée de groupe, l'entité électeur $V_i$ doit interagir avec l'entité d'administration $\mathcal{A}$ et avec l'entité organisateur $\mathcal{O}$. Au cours d'une étape VG2, le module cryptographique MCR de l'entité membre $V_i$ tire aléatoirement une valeur $x_i \in Z_p$ et calcule $C_i = X_1^{x_i}$. Il génère ensuite une preuve $VEP\Pi_i$ à divulgation nulle de connaissance qu'il connaît $x_i$ le logarithme discret de $c_i$ en base $X_1$ : $VEP\Pi_i = PoK(\alpha_1 : C_i = X_1^{\alpha_1})$.

Au cours d'une étape VG4, le module cryptographique MCR de l'entité électeur $V_i$ génère une signature $\sigma_{V_i}$ sur $C_i$ : $\sigma_{V_i} = Sign_{SKi}(C_i)$ où $SK_i$ désigne la clé privée de $V_i$. L'entité électeur $V_i$.transmet ensuite ces trois valeurs $C_i$, $VEP\Pi_i$, $\sigma_{V_i}$ à l'entité d'administration $\mathcal{A}$ et à l'entité organisateur $\mathcal{O}$.

Au cours d'une étape VE10, le module cryptographique MCR de l'entité d'administration $\mathcal{A}$ et le module cryptographique MCR de l'entité organisateur $\mathcal{O}$ vérifient $C_i \neq 1$ et que la signature $\sigma_{V_i}$ et que la preuve $P\Pi_i$ sont toutes les deux valides.

Si c'est le cas, au cours d'une étape VE12, le module cryptographique MCR de l'entité d'administration $\mathcal{A}$ et le module cryptographique MCR de l'entité organisateur $\mathcal{O}$ génèrent conjointement deux valeurs aléatoires $b$ et $x'$ de $Z_p$ et calculent $E = X_1^{x'}$ ainsi qu'une paire $(u, u')$ où $u = h^b$ et $u' = u^{x_0}(C_i \cdot X_1^{x'})^b = u^{x_0 + (x_i + x')x_1}$. Ils prouvent que la paire $(u, u')$ a été calculée de manière conforme et notamment à partir des clés privées $x_0$ et $x_1$ :
$$VOA\Pi_3 = PoK(\alpha_1, \alpha_2, \alpha_3, \alpha_4 : u = h^{\alpha_1} \wedge \quad u' = u^{\alpha_2}(C_i \cdot X_1^{\alpha_4})^{\alpha_1} \wedge C_{x_0} = g^{\alpha_2} h^{\alpha_3} \wedge E = X_1^{\alpha_4})$$

On rappelle, que pour générer conjointement une valeur, par exemple la valeur $x'$, l'entité d'administration $\mathcal{A}$ et l'entité organisateur $\mathcal{O}$ peuvent utiliser des techniques connues de cryptographie distribuée. Par exemple, l'entité d'administration $\mathcal{A}$ (respectivement l'entité organisateur $\mathcal{O}$) génère aléatoirement une valeur $x'^{\mathcal{A}}$ de $Z_p$ (respectivement $x'^{\mathcal{O}}$ de $Z_p$) et calcule

$$E'^{\mathcal{A}} = X_1^{x'^{\mathcal{A}}}$$

(respectivement $X_1^{x'^{\mathcal{O}}}$). On obtient ainsi

$$E = E'^{\mathcal{A}} . E'^{\mathcal{O}} = X_1^{x'}$$

où $x' = \quad + x'^{\mathcal{O}} \pmod{p}$.

Dans ce mode de réalisation, au cours d'une étape VE14, le module cryptographique MCR de l'entité d'administration $\mathcal{A}$ ou de l'entité organisateur $\mathcal{O}$ transmet $E$, $u$, $u'$ et la preuve $VEP\Pi_3$ à l'entité électeur $V_i$. En variante ces valeurs sont envoyées par l'entité d'administration $\mathcal{A}$ et par l'entité organisateur $\mathcal{O}$ et l'entité électeur $V_i$ vérifie que les valeurs reçues des deux entités $\mathcal{A}$ et $\mathcal{O}$ sont identiques.

Au cours d'une étape VG6, le module cryptographique de l'entité électeur $V_i$ vérifie que $u \neq 1$ et que la preuve $VOAP\Pi_3$ est valide. Si ces deux vérifications sont concluantes, le module cryptographique de l'entité électeur $V_i$ génère, au cours d'une étape VG7 une signature $Sig_{V_i}$ sur $C_i$ et $E$ : $Sig_{V_i} = Sign_{SKi}(C_i, E)$, où $SK_i$ désigne la clé privée de l'entité électeur $V_i$. Au cours d'une étape VG75, l'entité électeur $V_i$ transmet la signature $Sig_{V_i}$ à l'entité d'administration $\mathcal{A}$ et à l'entité organisateur $\mathcal{O}$.

Au cours d'une étape VE13, l'entité d'administration $\mathcal{A}$ et l'entité organisateur $\mathcal{O}$ vérifient que la signature $Sig_{V_i}$ est valide, et si c'est le cas, l'entité d'administration $\mathcal{A}$ transmet $x'$ à l'entité électeur $V_i$.

L'entité d'administration $\mathcal{A}$ maintient un registre REG non représenté contenant pour chaque entité membre $V_i$ du groupe les valeurs suivantes : $C_i$, $C'_i = C_i \cdot X_1^{x'}$, $x'$, $P\Pi_i$, $ID_i$, $PK_i$ et $Sig_{V_i}$ : $REG = \{C_i, C'_i, x', P\Pi_i, ID_{V_i}, PK_i, Sig_{V_i}\}_{i=1}^n$ où $n$ désigne le nombre d'entités électeurs dûment enregistrées.

Au cours d'une étape VG8, l'entité électeur $V_i$ vérifie que $E = X_1^{x'}$ et constitue, si cette vérification est concluante sa clé privée de groupe $SK_G^i$. Celle-ci est constituée par le triplet $SK_G^i = (s_i, u, u')$ où $S_i = x_i + x' \bmod p$.

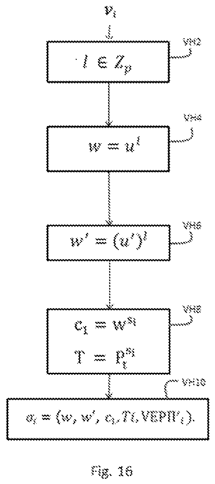

La figure 16 représente sous forme d'organigramme les principales étapes d'un procédé de vote conforme à ce mode de réalisation de l'invention.

Conformément au schéma de signatures anonymes *SigA*$_2$, pour signer anonymement un message quelconque msg $\in$ {0,1}* avec sa clé privée de groupe $SK_G^i$, le module cryptographique MCR de l'entité électeur $V_i$ tire aléatoirement, au cours d'une étape VH2 une valeur $1 \in Z_p$ et calcule (étape VH4) la valeur w = u$^l$ ainsi (étape VH6) que la valeur w' = (u')$^l$.

Dans le cas d'un scrutin uninominal majoritaire, le message peut être constitué par le vote de l'entité électeur, éventuellement sous forme chiffrée, le chiffrement pouvant être calculé en utilisant une clé publique dont la clé privée serait partagée entre plusieurs entités assesseurs configurées pour procéder au dépouillement du vote.

Au cours d'une étape VH8, le module cryptographique MCR de l'entité électeur $V_i$ calcule la valeur c$_1$ = w$^{s_i}$ et la trace $T_i = P_t^{s_i}$. Cette trace $T_i$ calculée à partir du générateur de trace P$_t$ et de l'élément s$_i$ de la clé privée de groupe de l'entité électeur $V_i$ ne dépend pas du message msg. Autrement dit, la trace $T_i$ constitue donc un invariant des signatures émises par l'entité électeur $V_i$.

L'entité électeur $V_i$ prouve que le logarithme discret de c$_1$ dans la base w est le même que le logarithme discret de $T_i$ dans la base $P_t$ : $VEP\Pi'_i = PoK(\alpha_1 : c_1 = w^{\alpha_1} \wedge T_i = P_t^{\alpha_1})$.

Dans le mode de réalisation de l'invention décrit ici, la preuve VEPII'$_i$ est la paire (c,r) dans laquelle :

- *z* est une valeur aléatoire de $Z_p$ tirée par l'entité électeur $V_i$ ;
-

$$T_1 = w^z ;$$

-

$$T_2 = P_t^z;$$

-

$$c = \mathcal{H}(T_1, T_2, P_t, msg);$$

-

$$r = z - cs_i \bmod p$$

La preuve est valide si $c = \mathcal{H}(w^r c_1^c, P_t^r T_i^c, P_t, m)$.

Au cours d'une étape VH10, le module cryptographique MCR de l'entité électeur $V_i$ génère la signature anonyme $\sigma_i$ du message msg, celle-ci étant constituée des cinq éléments suivants : (w, w', c$_1$, $T_i$, VEPII'$_i$). Elle comporte la trace $T_i$ qui permet de tracer toutes les signatures émises par l'entité électeur $V_i$.

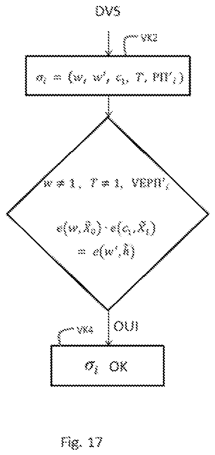

La figure 17 représente sous forme d'organigramme les principales étapes d'un procédé de vérification d'une signature anonyme conformément à l'invention.

Au cours d'une étape VK2, le dispositif de vérification d'une signature anonyme obtient une signature anonyme $\sigma_i$ = *(w, w', c*$_1$*, Ti,*VEPII'$_i$).

Au cours d'une étape VK4, elle considère que la signature anonyme $\sigma_i$ d'un message *msg* est valide si :

-

$$w \neq \mathbf{1_{G_1}}$$

-

$$Ti \neq \mathbf{1_{G_1}};$$

- VEPIT'$_i$ est valide ; et
-

$$e(w, \tilde{X}_0) \cdot e(c_1, \tilde{X}_1) = e(w', \tilde{h}).$$

La figure 18 représente sous forme d'organigramme les principales étapes d'un procédé de levée d'anonymat de la signature valide $\sigma_i = (w, w', c_1, T_i, II'_i)$ d'un message msg conformément à ce deuxième mode de réalisation de l'invention. Ce procédé est mis en œuvre par l'entité d'enregistrement $\mathcal{A}$ et l'entité organisateur $\partial$.

Au cours d'une étape VZ2, chacune de ces entités $\mathcal{A}$ et $\mathcal{O}$ obtient la signature $\sigma_i$.

Au cours d'une étape VZ4, les entités $\mathcal{A}$ et $\mathcal{O}$ calculent successivement, $T_j = T_{j-1}^{(x_{\mathcal{R}}^j)^{-1}}$ avec $T_0 = T_i$.

- $\mathcal{O}$ calcule $T_1 = T_i^{(x_{\mathcal{R}}^{\mathcal{O}})^{-1}}$ et prouve ( $\mathrm{VOP\Pi}_{\mathcal{R}}^1$ ) que le logarithme discret de $T_1$ dans la base $T_i$ est égal au logarithme discret de $X_1$ dans la base $P_1$.

- $\mathcal{A}$ calcule

$$T_2 = T_1^{(x_{\mathcal{R}}^{\mathcal{A}})^{-1}}$$

et prouve ( $\mathrm{VAP\Pi}_{\mathcal{R}}^2$ ) que le logarithme discret de $T_2$ dans la base $T_1$ est égal au logarithme discret de $P_1$ dans la base $P_2$.

Si toutes les preuves produites par les autorités de révocation sont valides,

$$T_2 = T_i^{(x_{\mathcal{R}}^{\mathcal{O}})^{-1}(x_{\mathcal{R}}^{\mathcal{A}})^{-1}} = X_1^{s_i} = C'_i.$$

Dans ce mode de réalisation, au cours d'une étape VZ6, l'entité organisateur $\mathcal{O}$ transmet la preuve $\mathrm{VOP\Pi}_{\mathcal{R}}^1$ à l'entité d'enregistrement $\mathcal{A}$.

Au cours d'une étape VZ8, l'entité d'enregistrement $\mathcal{A}$ retrouve dans son registre REG l'entrée correspondant à $C'_i$ : [$C_i$, $C'_i$, x', $P\Pi_i$, $ID_i$, $PK_i$, $Sig_{V_i}$}.

Au cours d'une étape VZ10, l'entité d'enregistrement $\mathcal{A}$ retourne l'identifiant $\mathbf{ID}_{v_i}$, les preuves $\mathrm{VOP\Pi}_{\mathcal{R}}^1$ ainsi et $\mathrm{VAP\Pi}_{\mathcal{R}}^2$ que $C_i$, $C'_i$, x', $PK_i$ et $Sig_{V_i}$. Si toutes les preuves sont valides, que $C'_i = C_i \cdot X_1^{x'}$ et que la signature $Sig_{V_i}$ est valide alors l'entité d'enregistrement $\mathcal{A}$ considère que l'entité électeur $V_i$ dont l'identifiant est $\mathbf{ID}_{v_i}$ est bien l'auteur de la signature $\sigma_i$ du message msg.

Dans le mode de réalisation décrit ici, l'entité d'administration $\mathcal{EA}$, les entités de révocation $\mathcal{R}_j$, l'entité organisateur $\mathcal{O}$, l'entité d'enregistrement $\mathcal{A}$, le dispositif de vérification DV les entités membres ou électeurs $V_i$ ont l'architecture matérielle d'un ordinateur ORD tel que représenté schématiquement à la figure 19.

L'ordinateur ORD comprend notamment un processeur 7, une mémoire morte 8, une mémoire vive 9, une mémoire non volatile 10 et des moyens de communication COM. Ces moyens de communication COM permettent aux différentes entités de communiquer entre eux notamment. Ils peuvent comprendre une ou plusieurs interfaces de communication sur un ou plusieurs réseaux de télécommunication (fixes ou mobiles, avec ou sans fil, etc.).

La mémoire morte 8 de l'ordinateur ORD constitue un support d'enregistrement conforme à l'invention, lisible par le processeur et sur lequel est enregistré un programme d'ordinateur conforme à l'invention, désigné de façon générale ici par PROG, comportant des instructions pour l'exécution de l'un des procédés objets de l'invention. Ainsi :

- pour l'entité d'administration $\mathcal{EA}$, le programme PROG est un programme PROG1 comportant des instructions pour l'exécution des étapes E2 à E12 d'un procédé de génération de clé conforme à l'invention, et des étapes Z8 à Z10 d'un procédé de levée d'anonymat conforme à l'invention,

- pour les entités de révocation $\mathcal{R}_j$, le programme PROG est un programme PROG1 comportant des instructions pour l'exécution des étapes F2 à F6 d'un procédé de génération de clé conforme à l'invention, et des étapes Z2 à Z6 d'un procédé de levée d'anonymat conforme à l'invention,

- pour l'entité organisateur $\mathcal{O}$, le programme PROG est un programme PROG2 comportant des instructions pour l'exécution des étapes VE2 à VE12 d'un procédé de génération de clé conforme à l'invention et des étapes VZ2 à VZ6 d'un procédé de levée d'anonymat conforme à l'invention,

- pour l'entité d'enregistrement $\mathcal{A}$, le programme PROG est un programme PROG3, comportant des instructions pour l'exécution des étapes VE2 à VE12 d'un procédé de génération de clé conforme à l'invention et des étapes VZ2 à VZ10 d'un procédé de levée d'anonymat conforme à l'invention,
- pour le dispositif de vérification DV, le programme PROG est un programme PROG4 comportant des instructions pour l'exécution des étapes K2 à K4 ou VK2 à VK4 d'un procédé de vérification de signature conforme à l'invention,
- pour les entités membres $V_i$, le programme PROG est un programme PROG5, comportant des instructions pour l'exécution des étapes G2 à G8 ou VG2 à VG8 du procédé de génération de clé conforme à l'invention, des étapes H2 à H10 ou VH2 à VH10 d'un procédé de signature conforme à l'invention.

Chacun de ces programmes définit, de façon équivalente, des modules fonctionnels du dispositif ou du module sur lequel il est installé, aptes à mettre en œuvre les étapes du procédé concerné et s'appuyant sur les éléments matériels 7-10 de l'ordinateur ORD.

## Revendications

1. Procédé de préparation d'un scrutin dans un système de vote électronique, ce procédé comportant :

   - une étape (PS2, PS4) de génération, par chaque module d'une pluralité de modules assesseurs ($M_i$) d'un bureau de vote virtuel (BVV), d'une clé privée ($x_T$, $\widetilde{x_T}$) de déchiffrement partiel pour au moins un algorithme de chiffrement à seuil ;
   - une étape (PS6, PS8) de génération d'une clé publique (($g_T$, $h_T$), ($\widetilde{g_T}$, $\tilde{h}_T$)) pour ledit algorithme de chiffrement et de la clé privée correspondante ($SK_{Mi}$, $\widetilde{SK_{M_i}}$) ;
   - une étape de calcul, pour au moins une entité électeur ($V_i$) autorisée à participer au scrutin, d'une valeur publique ($g_s$) à partir d'une paire de clés (($SK_O$, $P_O$), ($SK_{\mathcal{A}}$, $P_{\mathcal{A}}$)) d'un algorithme de signatures anonymes traçables ($SigA_1$, $SigA_2$), ladite valeur publique étant destinée à être utilisée par ladite entité électeur ($V_i$) en association avec une clé privée ($x_i$) de ladite entité électeur ($V_i$) pour générer une clé publique anonyme ($g_S^{x_i}$), ladite clé privée ($x_i$) étant destinée à être utilisée par ladite entité électeur ($V_i$) pour calculer au moins une signature ($S_i$) dans le cadre du scrutin, l'anonymat d'une signature ainsi obtenue ne pouvant être révoqué que par une entité de confiance ($\mathcal{O}, \mathcal{A}$), ladite entité de confiance ayant calculé la valeur publique,

   ladite entité électeur ($V_i$) étant configurée pour obtenir (PS34) sa dite clé publique anonyme ($g_S^{x_i}$) de manière aveugle.

2. Procédé de vote électronique mis en œuvre par une entité électeur ($V_i$) dans le cadre d'un scrutin comportant :

   - une étape (SCO, SC1) d'obtention d'une clé publique (($g_T$, $h_T$), ($\widetilde{g_T}$, $\tilde{h}_T$)) pour au moins un algorithme de chiffrement à seuil ;
   - une étape (SC2) d'obtention d'une paire de clés ($x_i$, $g_S^{x_i}$) d'un algorithme de signatures anonymes traçables ($SigA_1$, $SigA_2$), ladite paire comportant une clé publique anonyme ($g_S^{x_i}$) obtenue de manière aveugle et une clé privée ($x_i$) destinée à être utilisée par ladite entité électeur ($V_i$) pour calculer au moins une signature ($S_i$) dans le cadre du scrutin, l'anonymat d'une signature anonyme ainsi obtenue ne pouvant être révoqué que par au moins une entité de confiance ($\mathcal{O}, \mathcal{A}$);
   - une étape (SC4) de choix d'un vote ($V_i$) ;
   - une étape (SC8) de calcul d'un engagement ($C_1^i$) sur ledit vote ($V_i$) ;
   - une étape (SC10) de calcul d'un chiffré (($C_1^i$, $C_2^i$)) dudit vote ($v_i$) en utilisant ledit algorithme de chiffrement à seuil ;
   - une étape (SC16) de calcul d'une signature anonyme traçable ($S_i$) dudit engagement ($C_1^i$) en utilisant ladite clé privée ($x_i$) de l'algorithme de signatures anonymes traçables ($SigA_1$, $SigA_2$) ;
   - une étape (SC18) d'envoi d'un bulletin de vote ($B_i$) comportant au moins ledit engagement ($C_1^i$), ledit chiffré ((

$C_1^i$ , $C_2^i$ )), et ladite signature anonyme traçable ($S_i$) de ladite entité électeur ($V_i$) à une urne privée virtuelle (UPV).

3. Procédé selon l'une quelconque des revendications 1 à 2, **caractérisé en ce que** ledit au moins un algorithme de chiffrement à seuil est un algorithme de chiffrement homomorphe additif à seuil.

4. Procédé de validation et d'archivage d'un vote électronique dans le cadre d'un scrutin, ce procédé étant mis en œuvre dans une urne privée virtuelle (UPV) et comportant :

   - une étape (U2) de réception d'un bulletin de vote ($B_i$) comportant au moins un engagement ( $C_1^i$ ) sur un vote ($v_i$), (( $C_1^i$ , $C_2^i$ )) dudit vote ($v_i$), un chiffré ( $C_3^i$ ) d'une valeur aléatoire ($r_i$) utilisée dans l'engagement dudit vote ($v_i$) et une signature anonyme traçable ($S_i$) d'une entité électeur ($V_i$) ;
   - une étape (U4) de vérification de ladite signature anonyme traçable ($S_i$) ;
   - une étape (U6) de vérification de l'absence dans ladite urne privée virtuelle (UPV) d'au moins deux bulletins de vote ($B_i$, $B_j$) comportant des signatures anonymes traçables ($S_i$,$S_{ji}$) associées à une même clé publique anonyme ( $g_S^{x_i}$ ) ;
   - si le résultat desdites vérifications (U4, U6) est positif, une étape (U10) d'envoi à une urne publique virtuelle (UPB) d'un bulletin de vote tronqué ($BT_i$) comportant ledit engagement ( $C_1^i$ ) et ladite signature anonyme traçable ($S_i$) ;
   - une étape (U12) de stockage desdits bulletin de votes ($B_i$) jusqu'à l'expiration d'un délai de recours.

5. Procédé d'audit d'un scrutin dans lequel :

   - des bulletins de vote (($B_i$) sont stockés dans une urne privée virtuelle (UPV), chaque bulletin de vote ($B_i$) comportant un engagement ( $C_1^i$ ) sur un vote ($v_i$) et sur une valeur aléatoire ($r_i$), un chiffré (( $C_1^i$ , $C_2^i$ )) dudit vote ($v_i$), un chiffré ( $C_3^i$ ) de ladite valeur aléatoire ($r_i$) et une signature anonyme traçable ($S_i$) d'une entité électeur ($V_i$) ;
   - des bulletins de votes tronqués ($BT_i$) obtenus à partir desdits bulletin de votes ($B_i$) sont stockés dans une urne publique virtuelle (UPB), chaque bulletin de vote tronqué ($BT_i$) comportant ledit engagement ( $C_1^i$ ) et ladite signature anonyme traçable ($S_i$), ledit procédé comportant :
   - une étape (A0) d'obtention, à l'issue d'un dépouillement desdits bulletins de vote ($B_i$), d'un résultat *(Res)* dudit scrutin et d'une valeur (Rand) correspondant à la somme des valeurs aléatoires ($r_i$) ;
   - une étape (A1) d'obtention desdits bulletins de vote tronqué ($BT_i$) stockés dans ladite urne publique virtuelle (UPB) ;
   - une étape (A2) de vérification des signatures anonymes traçables ($S_i$) desdits bulletins de vote tronqués ($BT_i$) et de vérification de l'absence dans ladite urne publique (UPB) d'au moins deux bulletins de vote tronqués ($BT_i$,$BT_j$) comportant des signatures anonymes traçables ($S_i$,$S_j$) associées à une même clé publique anonyme ;
   - une étape (A6) de calcul d'un engagement d'audit (R'$_1$) à partir des engagements ( $C_1^i$ ) de tous les bulletins de vote tronqués ($BT_i$) ;
   - une étape (A8) de détermination d'un résultat d'audit en comparant l'engagement d'audit avec un engagement calculé (A8) sur ledit résultat *(Res)* dudit scrutin et sur ladite valeur (Rand).

6. Procédé de recours mis en œuvre par un système de recours à l'issue d'un scrutin auquel ont participé des entités électeurs ($v_i$), des identifiants ( $ID_{v_i}$ ) et des clés publiques propres respectives ($P_i$) desdites entités électeurs étant enregistrés dans une liste électorale ( $\mathcal{LE}$ ), lesdites clés publiques propres ($P_i$) étant conformes à un schéma de signatures anonymes traçables *(SigA$_1$,SigA$_2$)*, ledit procédé comportant :

   - une étape (R2) d'obtention d'une liste ( $\mathcal{L}_3$ ) des clés publiques anonymes utilisées par les entités électeurs ($v_i$), pour produire des signatures ($S_i$) conformes audit schéma et comprises dans des bulletins de vote ($B_i$) ;
   - une étape (R4) de génération, par au moins une entité de confiance ( $\mathcal{O},\mathcal{A}$ ), d'une liste de recours ( $\mathcal{L}_5$ ) dont les éléments sont des clés publiques ré-identifiées obtenues en levant l'anonymat des clés publiques de ladite liste ( $\mathcal{L}_3$ ) ;
   - une étape (R18) de vérification que les clés publiques ré-identifiées de ladite liste de recours ( $\mathcal{L}_5$ ) sont toutes

comprises dans ladite liste électorale ($\mathcal{LE}$).

7. Procédé de vote électronique comportant :

- la mise en œuvre d'un procédé de préparation d'un scrutin selon la revendication 1 ;
- la mise en œuvre d'un procédé de vote selon la revendication 2 ;
- la mise en œuvre d'un procédé de dépouillement comportant :

  - une étape (PS2, PS4) d'obtention, par chacun d'une pluralité de modules assesseurs ($M_i$) d'un bureau de vote virtuel (BVV), d'une clé privée ($SK_{M_i}$, $\widetilde{SK_{M_i}}$) de déchiffrement partiel pour au moins un algorithme de chiffrement à seuil ;
  - une étape (DP2) d'obtention, après la clôture du scrutin, et par chacun de la pluralité de modules assesseurs ($M_i$), d'au moins un bulletin de vote ($B_i$) collecté par une urne privée virtuelle (UPV), chaque bulletin de vote ($B_i$) comportant au moins un engagement ($C_1^i$) sur un vote ($v_i$), un chiffré (($C_1^i$, $C_2^i$)) dudit vote ($v_i$), et une signature anonyme traçable ($S_i$) d'une entité électeur ($V_i$) ;
  - une étape (DP3) d'obtention par chacun desdits modules assesseurs (Mi), d'un chiffré ($\check{C}$) du résultat du scrutin ;
  - une étape (DP10), mise en œuvre par chacun desdits modules assesseurs (Mi), de déchiffrement partiel dudit chiffré ($\check{C}$) du résultat du scrutin à l'aide de sa clé privée ($SK_{M_i}$) de déchiffrement partiel ;
  - lorsqu'un nombre (s) prédéterminé de modules assesseurs correspondant audit seuil ont procédé audit déchiffrement partiel dudit chiffré ($\check{C}$) du résultat du scrutin, une étape (DP16) d'obtention conjointe d'un résultat *(Res)* dudit scrutin ; et
  - une étape (DP20) de publication dudit résultat *(Res)* ;

- la mise en œuvre d'un procédé de validation et d'archivage selon la revendication 4 ;
- éventuellement la mise en œuvre d'un procédé d'audit selon la revendication 5 ; et
- éventuellement la mise en œuvre d'un procédé de recours selon la revendication 6.

8. Système (SPS) de préparation d'un scrutin dans un système de vote électronique, ce système comportant :

- un module (MCR) de génération, par chaque module assesseur ($M_i$) d'un bureau de vote virtuel (BVV), d'une clé privée ($SK_{M_i}$, $\widetilde{SK_{M_i}}$) de déchiffrement partiel pour au moins un algorithme de chiffrement à seuil ;
- un module (MCR) de génération d'une clé publique (($g_T$, $h_T$), ($\widetilde{g_T}$, $\tilde{h}_T$)) pour ledit algorithme de chiffrement et de la clé privée correspondante ($x_T$, $\widetilde{x_T}$) ;
- un module (MCR) de calcul, pour au moins une entité électeur ($V_i$) autorisée à participer au scrutin, d'une valeur publique ($g_s$) à partir d'une paire de clés (($SK_O$, $P_O$), ($SK_{\mathcal{A}}$, $P_{\mathcal{A}}$)) d'un algorithme de signatures anonymes traçables ($SigA_1$, $SigA_2$), ladite valeur publique étant destinée à être utilisée par ladite entité électeur ($V_i$) en association avec une clé privée ($x_i$) de ladite entité électeur ($V_i$) pour générer une clé publique anonyme ($g_S^{x_i}$), ladite clé privée ($x_i$) étant destinée à être utilisée par ladite entité électeur ($V_i$) pour calculer au moins une signature ($S_i$) dans le cadre du scrutin, l'anonymat d'une signature ainsi obtenue ne pouvant être révoqué que par une entité de confiance ($\mathcal{O}$, $\mathcal{A}$), ladite entité de confiance ayant calculé la valeur publique,

ladite entité électeur ($V_i$) étant configurée pour obtenir (PS34) sa dite clé publique anonyme ($g_S^{x_i}$) de manière aveugle.

9. Entité électeur ($V_i$) pouvant être utilisée dans le cadre d'un scrutin comportant :

- un module (COM) d'obtention d'une clé publique (($g_T$, $h_T$), ($\widetilde{g_T}$, $\tilde{h}_T$)) pour au moins un algorithme de chiffrement à seuil ;
- un module (COM) d'obtention d'une paire de clés ($x_i$, $g_S^{x_i}$) d'un algorithme de signatures anonymes traçables *(SigA$_1$, SigA$_2$)*, ladite paire comportant une clé publique anonyme ($g_S^{x_i}$) obtenue de manière aveugle et une clé

privée ($x_i$) destinée à être utilisée par ladite entité électeur ($V_i$) pour calculer au moins une signature ($S_i$) dans le cadre du scrutin, l'anonymat d'une signature anonyme ainsi obtenue ne pouvant être révoqué que par au moins une entité de confiance ($\mathcal{O}$, $\mathcal{A}$) ;

- un module (IHM) d'obtention d'un choix d'un vote ($V_i$) ;

- un module (MCR) de calcul d'un engagement (( $C_1^i$ )) sur ledit vote ($V_i$) ;

- un module (MCR) de calcul d'un chiffré (( $C_1^i$ , $C_2^i$ )) dudit vote ($v_i$) en utilisant ledit algorithme de chiffrement à seuil ;

- un module (MCR) de calcul d'une signature anonyme traçable ($S_i$) dudit engagement ( $C_1^i$ ) en utilisant ladite clé privée ($x_i$) de l'algorithme de signatures anonymes traçables ($SigAl_1 SigA_z$) ;

- un module (COM) d'envoi d'un bulletin de vote ($B_i$) comportant au moins ledit engagement ( $C_1^i$ ), ledit chiffré (( $C_1^i, C_2^i$ )), et ladite signature anonyme traçable ($S_i$) de ladite entité électeur ($V_i$) à une urne privée virtuelle (UPV).

**10.** Dispositif de validation et d'archivage (DVA) d'un vote électronique dans le cadre d'un scrutin ce dispositif étant associé à une urne privée virtuelle (UPV) et comportant :

- un module (COM) de réception d'un bulletin de vote ($B_i$) comportant au moins un engagement ( $C_1^i$ ) sur un vote ($v_i$), (( $C_1^i$ , $C_2^i$ )) dudit vote ($v_i$), un chiffré ( $C_3^i$ ) d'une valeur aléatoire ($r_i$) utilisée dans l'engagement dudit vote ($v_i$) et une signature anonyme traçable ($S_i$) d'une entité électeur ($V_i$) ;

- une étape (U4) de vérification de ladite signature anonyme traçable ($S_i$) ;

- un module (MCR) de vérification de ladite signature anonyme traçable ($S_i$) ;

- un module (MV) de vérification de l'absence dans ladite urne privée virtuelle (UPV) d'au moins deux bulletins de vote ($B_i$, $B_j$) comportant des signatures anonymes traçables ($S_i, S_{ji}$) associées à une même clé publique anonyme ( $g_s^{x_i}$ ) ;

- un module (COM) configuré pour envoyer, si le résultat desdites vérifications (U4, U6) est positif, à une urne publique virtuelle (UPB), un bulletin de vote tronqué ($BT_i$) comportant ledit engagement ( $C_1^i$ ) et ladite signature anonyme traçable ($S_i$) ;

- un module (MS) de stockage desdits bulletin de votes ($B_i$) jusqu'à l'expiration d'un délai de recours et de destruction de ces bulletins à l'expiration de ce délai.

**11.** Dispositif d'audit d'un scrutin (DAS) dans lequel :

- des bulletins de vote ($B_i$) sont stockés dans une urne privée virtuelle (UPV), chaque bulletin de vote ($B_i$) comportant un engagement ( $C_1^i$ ) sur un vote ($v_i$) et sur une valeur aléatoire ($r_i$), un chiffré (( $C_1^i$ , $C_2^i$ )) dudit vote ($v_i$), un chiffré ( $C_3^i$ ) de ladite valeur aléatoire ($r_i$) et une signature anonyme traçable ($S_i$) d'une entité électeur ($V_i$) ;

- des bulletins de votes tronqués ($BT_i$) obtenus à partir desdits bulletins de vote ($B_i$) sont stockés dans une urne publique virtuelle (UPB), chaque bulletin de vote tronqué ($BT_i$) comportant ledit engagement ( $C_1^i$ ) et ladite signature anonyme traçable ($S_i$),

ledit dispositif comportant :

- un module (COM) d'obtention, à l'issue d'un dépouillement desdits bulletins de vote ($B_i$), d'un résultat *(Res)* dudit scrutin et d'une valeur (Rand) correspondant à la somme des valeurs aléatoires ($r_i$) ;

- un module (COM) d'obtention desdits bulletins de vote tronqués ($BT_i$) stockés dans ladite urne publique virtuelle (UPB) ;

- un module (MCR) de vérification des signatures anonymes traçables ($S_i$) desdits bulletins de vote tronqués ($BT_i$) et de vérification de l'absence dans ladite urne publique (UPB) d'au moins deux bulletins de votes tronqués ($BT_i, BT_j$) comportant des signatures anonymes traçables ($S_i, S_j$) associées à une même clé publique anonyme ;

- un module (MCR) de calcul d'un engagement d'audit ($R'_1$) à partir des engagements (de tous les bulletins de vote tronqués ($BT_i$) :

- un module (MD) de détermination d'un résultat d'audit en comparant l'engagement d'audit avec un engagement calculé (A8) sur ledit résultat *(Res)* dudit scrutin et sur ladite valeur (Rand).

12. Système de recours (SR) configuré pour procéder à un recours à l'issue d'un scrutin auquel ont participé des entités électeurs ($v_i$), des identifiants ($ID_{v_i}$) et des clés publiques propres respectives ($P_i$) desdites entités électeurs étant enregistrés dans une liste électorale ($\mathcal{LE}$), lesdites clés publiques propres ($P_i$) étant conformes à un schéma de signatures anonymes traçables ($SigA_1, SigA_2$), ledit système comportant :

- au moins une entité de confiance ($\mathcal{O}, \mathcal{A}$), configurée pour générer une liste de recours ($\mathcal{L}_5$) dont les éléments sont des clés publiques ré-identifiées obtenues en levant l'anonymat de clés publiques anonymes contenues dans une liste ($\mathcal{L}_3$) des clés publiques anonymes utilisées pour vérifier des signatures ($S_i$) produites par les entités électeurs et conformes audit schéma et comprises dans des bulletins de vote ($B_i$) ;
- ledit système comportant un module (MCT) de contrôle apte à vérifier que les clés publiques ré-identifiées de ladite liste de recours ($\mathcal{L}_5$) sont toutes comprises dans ladite liste électorale *(LE)*.

13. Système (SYS) de vote électronique comportant au moins :

- un système (DPS) de préparation d'un scrutin selon la revendication 8 ;
- une entité électeur ($V_i$) selon la revendication 9 ;
- un système de dépouillement électronique (SDE) comportant :

    - une pluralité de modules assesseurs ($M_i$) d'un bureau de vote virtuel configurés pour recevoir une clé privée ($SK_{M_i}$, $\widetilde{SK_{M_i}}$) de déchiffrement partiel pour au moins un algorithme de chiffrement à seuil ;
    - lesdits modules assesseurs ($M_i$) étant configurés pour obtenir, après la clôture d'un scrutin, au moins un bulletin de vote ($B_i$) collecté par une urne privée virtuelle (UPV), chaque bulletin de vote ($B_i$) comportant au moins un engagement ($C_1^i$) sur un vote ($v_i$), un chiffré (($C_1^i, C_2^i$)) dudit vote ($v_i$), et une signature anonyme traçable ($S_i$) d'une entité électeur ($V_i$) ;
    - lesdits modules assesseurs ($M_i$) étant configurés pour obtenir un chiffré ($\ddot{C}$) du résultat du scrutin ;
    - lesdits modules assesseurs ($M_i$) étant configurés pour déchiffrer partiellement ledit chiffré ($\ddot{C}$) à l'aide de leur clé privée ($SK_{M_i}$) de déchiffrement partiel ;
    - lesdits modules assesseurs (Mi) étant configurés pour coopérer, dès lors qu'un nombre (s) prédéterminé d'entre eux correspondant audit seuil ont procédé audit déchiffrement partiel dudit chiffré ($\ddot{C}$), afin d'obtenir conjointement un résultat *(Res)* dudit scrutin ; et
    - lesdits modules assesseurs (Mi) étant configurés pour publier ledit résultat *(Res)* ;

- un dispositif (DVA) de validation et d'archivage selon la revendication 10 ;
- éventuellement un dispositif d'audit (DA) selon la revendication 11 ; et
- éventuellement un système de recours (SR) selon la revendication 12.

**Patentansprüche**

1. Verfahren zur Vorbereitung einer Wahl in einem elektronischen Abstimmungssystem, das Folgendes aufweist:

- einen Schritt (PS2, PS4) zum Erzeugen eines privaten Schlüssels ($x_T$, $\widetilde{x_T}$) zur teilweisen Entschlüsselung für mindestens einen Schwellenwert-Verschlüsselungsalgorithmus durch jedes Modul einer Vielzahl von Auswertungsmodulen ($M_i$) eines virtuellen Wahllokals (BVV);

- einen Schritt (PS6, PS8) zum Erzeugen eines öffentlichen Schlüssels (($g_T, h_T$), ($\widetilde{g_T}, h_T$)) für den Verschlüsselungsalgorithmus und des entsprechenden privaten Schlüssels ($SK_{M_i}$, $\widetilde{SK_{M_i}}$);
- einen Schritt zum Berechnen eines öffentlichen Werts ($g_s$) für mindestens eine zur Teilnahme an der Wahl berechtigte Wählereinheit ($v_i$), ausgehend von einem Schlüsselpaar (($SK_O, P_O$), ($SK_A$, )) eines Algorithmus für rückverfolgbare anonyme Signaturen ($SigA_1, SigA_2$), wobei der öffentliche Wert dazu bestimmt ist, von der Wählereinheit ($V_i$) in Verbindung mit einem privaten Schlüssel ($x_i$) der Wählereinheit ($V_i$) verwendet zu werden, um einen anonymen öffentlichen Schlüssel ($g_s^{x_i}$) zu erzeugen, wobei der private Schlüssel ($x_i$) dazu bestimmt

ist, von der Wählereinheit ($V_i$) zur Berechnung mindestens einer Signatur ($S_i$) im Rahmen der Wahl verwendet zu werden, wobei die Anonymität einer so erhaltenen Signatur nur von einer Vertrauenseinheit (O, A), widerrufen werden kann, wobei die Vertrauenseinheit den öffentlichen Wert berechnet hat, wobei die Wählereinheit ($V_i$) so konfiguriert ist, dass sie ihren anonymen öffentlichen Schlüssel ( $g_S^{x_i}$ ) blind erhält (PS34).

2. Verfahren zur elektronischen Abstimmung, das von einer Wählereinheit ($V_i$) im Rahmen einer Wahl durchgeführt wird und Folgendes aufweist:

  - einen Schritt (SCO, SC1) zum Erhalten eines öffentlichen Schlüssels (($g_T,h_T$), ( $\widetilde{g_T}$ ,$h_T$)) für mindestens einen Schwellenwert-Verschlüsselungsalgorithmus;

  - einen Schritt (SC2) zum Erhalten eines Schlüsselpaars ($x_i$, $g_S^{x_i}$ ) eines Algorithmus für rückverfolgbare anonyme Signaturen ($SigA_1$, $SigA_2$), wobei das Paar einen blind erhaltenen anonymen öffentlichen Schlüssel ( $g_S^{x_i}$ ) und einen privaten Schlüssel ($x_i$) aufweist, der von der Wählereinheit ($V_i$) zur Berechnung mindestens einer Signatur ($S_i$) im Rahmen der Wahl verwendet werden soll, wobei die Anonymität einer so erhaltenen anonymen Signatur nur von mindestens einer Vertrauenseinheit (O, A) widerrufen werden kann;
  - einen Schritt (SC4) zum Auswählen einer Abstimmung ($V_i$) ;
  - einen Schritt (SC8) zum Berechnen einer Verpflichtung ( $C_1^i$ ) bezüglich der Abstimmung ($v_i$);

  - einen Schritt (SC10) zum Berechnen einer Verschlüsselung (( $C_1^i$ , $C_2^i$ )) der Abstimmung ($v_i$) unter Verwendung des Schwellenwert-Verschlüsselungsalgorithmus;

  - einen Schritt (SC16) zum Berechnen einer rückverfolgbaren anonymen Signatur ($S_i$) der Verpflichtung ( $C_1^i$ ) unter Verwendung des privaten Schlüssels ($x_i$) des Algorithmus für rückverfolgbare anonyme Signaturen ($SigA_1$, $SigA_2$) ;

  - einen Schritt (SC18) zum Versenden eines Stimmzettels ($B_i$), der mindestens die Verpflichtung ( $C_1^i$ ), die Verschlüsselung (( $C_1^i$ , $C_2^i$ )) und die rückverfolgbare anonyme Signatur ($S_i$) der Wählereinheit ($V_i$) für eine virtuelle private Wahlurne (UPV) enthält.

3. Verfahren nach einem der Ansprüche 1 bis 2, **dadurch gekennzeichnet, dass** der mindestens eine Schwellenwert-Verschlüsselungsalgorithmus ein additiver homomorpher Schwellenwert-Verschlüsselungsalgorithmus ist.

4. Verfahren zur Validierung und Archivierung einer elektronischen Abstimmung im Rahmen einer Wahl, wobei dieses Verfahren in einer virtuellen privaten Wahlurne (UPV) durchgeführt wird und Folgendes aufweist:

  - einen Schritt (U2) zum Empfangen eines Stimmzettels ($Bi$), der mindestens eine Verpflichtung ( $C_1^i$ ) bezüglich einer Abstimmung ($v_i$) aufweist, (( $C_1^i$ , $C_2^i$ )) der Abstimmung ($v_i$), eine Verschlüsselung ( $C_3^i$ ) eines Zufallswerts ($r_i$), der in der Verpflichtung zu der Abstimmung ($v_i$) verwendet wird, und eine rückverfolgbare anonyme Signatur ($S_i$) einer Wählereinheit ($V_i$);
  - einen Schritt (U4) zum Überprüfen der genannten rückverfolgbaren anonymen Signatur ($S_i$);
  - einen Schritt (U6) zum Überprüfen, ob in der virtuellen privaten Wahlurne (UPV) mindestens zwei Stimmzettel ($B_i,B_j$) mit rückverfolgbaren anonymen Signaturen ($S_i,S_{ji}$) vorhanden sind, die einem gemeinsamen anonymen öffentlichen Schlüssel ( $g_S^{x_i}$ ) zugeordnet sind;
  - wenn das Ergebnis der Überprüfungen (U4, U6) positiv ist, einen Schritt (U10) zum Senden eines gekürzten Stimmzettels ($BT_i$) mit der Verpflichtung ( $C_1^i$ ) und der rückverfolgbaren anonymen Signatur ($S_i$) an eine virtuelle öffentliche Wahlurne (UPB);
  - einen Schritt (U12) zum Aufbewahren der Stimmzettel ($B_i$) bis zum Ablauf einer Einspruchsfrist.

5. Verfahren zur Prüfung einer Wahl, bei dem:

  - Stimmzettel ($B_i$) in einer privaten virtuellen Wahlurne (UPV) aufbewahrt werden, wobei jeder Stimmzettel ($B_i$) eine Verpflichtung ( $C_1^i$ ) bezüglich einer Abstimmung ($v_i$) und einem Zufallswert ($r_i$), eine Verschlüsselung (( $C_1^i$ , $C_2^i$ )) der Abstimmung ($v_i$), eine Verschlüsselung ( $C_3^i$ ) des Zufallswerts ($r_i$) und eine rückverfolgbare anonyme Signatur ($S_i$) einer Wählereinheit ($V_i$) enthält;

- aus den Stimmzetteln ($B_i$) erhaltene gekürzte Stimmzettel ($BT_i$) in einer virtuellen öffentlichen Wahlurne (UPB) aufbewahrt werden, wobei jeder gekürzte Stimmzettel ($BT_i$) die Verpflichtung (und die rückverfolgbare anonyme Signatur ($S_i$) enthält, wobei das Verfahren Folgendes aufweist:

- einen Schritt (A0) zum Erhalten eines Ergebnisses *(Res)* der Wahl und eines Werts *(Rand),* der der Summe der Zufallswerte ($r_i$) entspricht, nach Auszählung der Stimmzettel ($B_i$);
- einen Schritt (A1) zum Erhalten der gekürzten Stimmzettel ($BT_i$), die in der virtuellen öffentlichen Wahlurne (UPB) aufbewahrt werden;
- einen Schritt (A2) zum Überprüfen der rückverfolgbaren anonymen Signaturen ($S_i$) der gekürzten Stimmzettel ($BT_i$) und zum Überprüfen, ob sich in der öffentlichen Wahlurne (UPB) nicht mindestens zwei gekürzte Stimmzettel ($BT_i$, $BT_j$) mit rückverfolgbaren anonymen Signaturen ($S_i$,$S_j$) befinden, die demselben anonymen öffentlichen Schlüssel zugeordnet sind;
- einen Schritt (A6) zum Berechnen einer Prüfverpflichtung (R'$_1$) auf der Grundlage der Verpflichtungen ( $C_1^i$ ) aller gekürzten Stimmzettel ($BT_i$);
- einen Schritt (A8) zum Bestimmen eines Prüfergebnisses durch Vergleichen der Prüfverpflichtung mit einer berechneten Verpflichtung (A8) bezüglich des Ergebnisses *(Res)* der Wahl und des Werts *(Rand).*

6. Einspruchsverfahren, das von einem Einspruchssystem nach einer Wahl durchgeführt wird, an der Wählereinheiten ($V_i$) teilgenommen haben, wobei die jeweiligen Identifikatoren ($ID_{V_i}$) und öffentlichen Schlüssel ($P_i$) der Wählereinheiten in einer Wählerliste ($\mathcal{LE}$) registriert sind, wobei die öffentlichen Schlüssel ($P_i$) einem Schema rückverfolgbarer anonymer Signaturen ($SigA_1$, $SigA_2$) entsprechen, wobei das Verfahren Folgendes aufweist:

- einen Schritt (R2) zum Erhalten einer Liste ($L_3$) der anonymen öffentlichen Schlüssel, die von den Wählereinheiten ($V_i$) verwendet werden, um Signaturen ($S_i$) zu erzeugen, die dem Schema entsprechen und in Stimmzetteln ($B_i$) enthalten sind;
- einen Schritt (R4) zum Erstellen einer Einspruchsliste ($L_5$) durch mindestens eine vertrauenswürdige Stelle (O, A), deren Elemente wiedererkannte öffentliche Schlüssel sind, die durch Aufhebung der Anonymität der öffentlichen Schlüssel der Liste ($L_3$) erhalten wurden;
- eine Schritt (R18) zum Überprüfen, ob die wiedererkannten öffentlichen Schlüssel der Einspruchsliste ($L_5$) alle in der Wählerliste ($\mathcal{LE}$) enthalten sind.

7. Verfahren zur elektronischen Abstimmung, das Folgendes aufweist:

- die Durchführung eines Verfahrens zur Vorbereitung einer Wahl nach Anspruch 1;
- die Durchführung eines Verfahrens zur Abstimmung nach Anspruch 2;
- die Durchführung eines Auswertungsverfahrens, das Folgendes aufweist:

- einen Schritt (PS2, PS4) zum Erhalten eines privaten Schlüssels ($SK_{M_i}$, $\widetilde{SK_{M_i}}$ ) zur teilweisen Entschlüsselung für mindestens einen Schwellenwert-Verschlüsselungsalgorithmus durch jedes einer Vielzahl von Auswertungsmodulen ($M_i$) eines virtuellen Wahllokals (BVV) ;
- einen Schritt (DP2) zum Erhalten, nach Abschluss der Wahl und durch jedes der mehreren Auswertungsmodule ($M_i$), von mindestens einem Stimmzettel ($B_i$), der von einer virtuellen privaten Wahlurne (UPV) gesammelt wurde, wobei jeder Stimmzettel ($B_i$) mindestens eine Verpflichtung ( $C_1^i$ ) bezüglich einer Abstimmung ($v_i$), eine Verschlüsselung (( $C_1^i$ , $C_2^i$ )) der Abstimmung ($v_i$), und eine rückverfolgbare anonyme Signatur ($S_i$) einer Wählereinheit ($V_i$) enthält;
- einen Schritt (DP3) zum Erhalten einer Verschlüsselung ($\ddot{C}$) des Wahlergebnisses durch jedes der Auswertungsmodule (Mi);
- einen Schritt (DP10), der von jedem der Auswertungsmodule (Mi) durchgeführt wird und die teilweise Entschlüsselung der Verschlüsselung ($\ddot{C}$) des Wahlergebnisses mithilfe seines privaten Schlüssels ($SK_{Mi}$) zur teilweisen Entschlüsselung aufweist;
- wenn eine vorbestimmte Anzahl (s) von Auswertungsmodulen, die dem Schwellenwert entsprechen, die teilweise Entschlüsselung der Verschlüsselung ($\ddot{C}$) des Wahlergebnisses durchgeführt haben, einen Schritt (DP16) zum gemeinsamen Erhalten eines Ergebnisses *(Res)* der Wahl; und
- einen Schritt (DP20) zur Veröffentlichung des Ergebnisses *(Res);*
- die Durchführung eines Verfahrens zur Validierung und Archivierung nach Anspruch 4;

- gegebenenfalls die Durchführung eines Verfahrens zur Prüfung nach Anspruch 5; und
- gegebenenfalls die Durchführung eines Einspruchsverfahrens nach Anspruch 6.

8.  System (SPS) zur Vorbereitung einer Wahl in einem elektronischen Abstimmungssystem, das Folgendes aufweist:

- ein Modul (MCR) zum Erzeugen eines privaten Schlüssels ($SK_{M_i}$, $\widetilde{SK_{M_i}}$) zur teilweisen Entschlüsselung für mindestens einen Schwellenwert-Verschlüsselungsalgorithmus durch jedes Auswertungsmodul ($M_i$) eines virtuellen Wahllokals (BVV);
- ein Modul (MCR) zum Erzeugen eines öffentlichen Schlüssels (($g_T,h_T$), ($\widetilde{g_T}$, $\check{h}_T$)) für den Verschlüsselungsalgorithmus und des entsprechenden privaten Schlüssels ($x_T$, $\widetilde{x_T}$);
- ein Modul (MCR) zum Berechnen eines öffentlichen Werts ($g_S$) für mindestens eine zur Teilnahme an der Wahl berechtigte Wählereinheit ($v_i$), ausgehend von einem Schlüsselpaar (($SK_O$, $P_O$), ($SK_A$, )) eines Algorithmus für rückverfolgbare anonyme Signaturen ($SigA_1$, $SigA_2$), wobei der öffentliche Wert dazu bestimmt ist, von der Wählereinheit ($V_i$) in Verbindung mit einem privaten Schlüssel ($x_i$) der Wählereinheit ($V_i$) verwendet zu werden, um einen anonymen öffentlichen Schlüssel ($g_S^{x_i}$) zu erzeugen, wobei der private Schlüssel ($x_i$) dazu bestimmt ist, von der Wählereinheit ($V_i$) zur Berechnung mindestens einer Signatur ($S_i$) im Rahmen der Wahl verwendet zu werden, wobei die Anonymität einer so erhaltenen Signatur nur von einer Vertrauenseinheit (O, A), widerrufen werden kann, wobei die Vertrauenseinheit den öffentlichen Wert berechnet hat, wobei die Wählereinheit ($V_i$) so konfiguriert ist, dass sie ihren anonymen öffentlichen Schlüssel ($g_S^{x_i}$) blind erhält (PS34).

9.  Wähleinheit ($v_i$), die im Rahmen einer Wahl verwendet werden kann und Folgendes aufweist:

- ein Modul (COM) zum Erhalten eines öffentlichen Schlüssels (($g_T,h_T$), ($\widetilde{g_T}$, $h_T$)) für mindestens einen Schwellenwert-Verschlüsselungsalgorithmus;
- ein Modul (COM) zum Erhalten eines Schlüsselpaars ($x_i$, $g_S^{x_i}$) eines Algorithmus für rückverfolgbare anonyme Signaturen ($SigA_1$, $SigA_2$), wobei das Paar einen blind erhaltenen anonymen öffentlichen Schlüssel ($g_S^{x_i}$) und einen privaten Schlüssel ($x_i$) aufweist, der von der Wählereinheit ($V_i$) zur Berechnung mindestens einer Signatur ($S_i$) im Rahmen der Wahl verwendet werden soll, wobei die Anonymität einer so erhaltenen anonymen Signatur nur von mindestens einer Vertrauenseinheit (O, A) widerrufen werden kann;
- ein Modul (IHM) zum Erhalten einer Auswahl einer Abstimmung ($v_i$);
- ein Modul (MCR) zum Berechnen einer Verpflichtung ($C_1^i$) bezüglich der Abstimmung ($v_i$);
- ein Modul (MCR) zum Berechnen einer Verschlüsselung (($C_1^i$, $C_2^i$)) der Abstimmung ($v_i$) unter Verwendung des Schwellenwert-Verschlüsselungsalgorithmus;
- ein Modul (MCR) zum Berechnen einer rückverfolgbaren anonymen Signatur ($S_i$) der Verpflichtung ($C_1^i$) unter Verwendung des privaten Schlüssels ($x_i$) des Algorithmus für rückverfolgbare anonyme Signaturen ($SigA_1$, $SigA_2$);
- ein Modul (COM) zum Versenden eines Stimmzettels ($B_i$), der mindestens die Verpflichtung (, die Verschlüsselung (($C_1^i$, $C_2^i$)) und die rückverfolgbare anonyme Signatur (Si) der Wählereinheit ($V_i$) für eine virtuelle private Wahlurne (UPV) enthält.

10. Vorrichtung zur Validierung und Archivierung (DVA) einer elektronischen Abstimmung im Rahmen einer Wahl, wobei diese Vorrichtung einer virtuellen privaten Wahlurne (UPV) zugeordnet ist und Folgendes aufweist:

- ein Modul (COM) zum Empfangen eines Stimmzettels ($B_i$), der mindestens eine Verpflichtung ($C_1^i$) bezüglich einer Abstimmung ($v_i$) aufweist, (($C_1^i$, $C_2^i$)) der Abstimmung ($v_i$), eine Verschlüsselung ($C_3^i$) eines Zufallswerts ($r_i$), der in der Verpflichtung zu der Abstimmung ($v_i$) verwendet wird, und eine rückverfolgbare anonyme Signatur ($S_i$) einer Wählereinheit ($V_i$);
- einen Schritt (U4) zum Überprüfen der rückverfolgbaren anonymen Signatur ($S_i$);
- ein Modul (MCR) zum Überprüfen der rückverfolgbaren anonymen Signatur ($S_i$);
- ein Modul (MV) zum Überprüfen, ob in der virtuellen privaten Wahlurne (UPV) mindestens zwei Stimmzettel ($B_i$, $B_j$) mit rückverfolgbaren anonymen Signaturen ($S_i$, $S_{ji}$) vorhanden sind, die einem gemeinsamen anonymen öffentlichen Schlüssel ($g_S^{x_i}$) zugeordnet sind;

- ein Modul (COM), das so konfiguriert ist, dass es, wenn das Ergebnis der Überprüfungen (U4, U6) positiv ist, einen gekürzten Stimmzettel ($BT_i$) mit der Verpflichtung ($C_1^i$) und der rückverfolgbaren anonymen Signatur ($S_i$) an eine virtuelle öffentliche Wahlurne (UPB) sendet;
- ein Modul (MS) zum Aufbewahren der Stimmzettel ($B_i$) bis zum Ablauf einer Einspruchsfrist und zur Vernichtung dieser Stimmzettel nach Ablauf dieser Frist.

**11.** Vorrichtung zum Prüfen einer Wahl (DAS), bei dem:

- Stimmzettel ($B_i$) in einer privaten virtuellen Wahlurne (UPV) aufbewahrt werden, wobei jeder Stimmzettel ($B_i$) eine Verpflichtung ($C_1^i$) bezüglich einer Abstimmung ($V_i$) und einem Zufallswert ($r_i$), eine Verschlüsselung (($C_1^i, C_2^i$)) der Abstimmung ($v_i$), eine Verschlüsselung ($C_3^i$) des Zufallswerts ($r_i$) und eine rückverfolgbare anonyme Signatur ($S_i$) einer Wählereinheit ($V_i$) enthält;
- aus den Stimmzetteln ($B_i$) erhaltene gekürzte Stimmzettel ($BT_i$) in einer virtuellen öffentlichen Wahlurne (UPB) aufbewahrt werden, wobei jeder gekürzte Stimmzettel ($BT_i$) die Verpflichtung ($C_1^i$) und die rückverfolgbare anonyme Signatur ($S_i$) enthält,

wobei die Vorrichtung Folgendes aufweist:

- ein Modul (COM) zum Erhalten eines Ergebnisses *(Res)* der Wahl und eines Werts *(Rand),* der der Summe der Zufallswerte ($r_i$) entspricht, nach Auszählung der Stimmzettel ($B_i$);
- ein Modul (COM) zum Erhalten der gekürzten Stimmzettel ($BT_i$), die in der virtuellen öffentlichen Wahlurne (UPB) aufbewahrt werden;
- ein Modul (MCR) zum Überprüfen der rückverfolgbaren anonymen Signaturen ($S_i$) der gekürzten Stimmzettel ($BT_i$) und zum Überprüfen, ob sich in der öffentlichen Wahlurne (UPB) nicht mindestens zwei gekürzte Stimmzettel ($BT_i, BT_j$) mit rückverfolgbaren anonymen Signaturen ($S_i, S_j$) befinden, die demselben anonymen öffentlichen Schlüssel zugeordnet sind;
- ein Modul (MCR) zum Berechnen einer Prüfverpflichtung (R'$_1$) auf der Grundlage der Verpflichtungen ($C_1^i$) aller gekürzten Stimmzettel ($BT_i$);
- ein Modul (MD) zum Bestimmen eines Prüfergebnisses durch Vergleichen der Prüfverpflichtung mit einer berechneten Verpflichtung (A8) bezüglich des Ergebnisses *(Res)* der Wahl und des Werts *(Rand).*

**12.** Einspruchssystem (SR), das so konfiguriert ist, dass es einen Einspruch nach einer Wahl durchführen kann, an der Wählereinheiten ($V_i$) teilgenommen haben, wobei die jeweiligen Identifikatoren ($ID_{v_i}$) und öffentlichen Schlüssel ($P_i$) der Wählereinheiten in einer Wählerliste ($\mathcal{LE}$) registriert sind, wobei die öffentlichen Schlüssel ($P_i$) einem Schema rückverfolgbarer anonymer Signaturen ($SigA_1, SigA_2$) entsprechen, wobei das System Folgendes aufweist:

- mindestens eine vertrauenswürdige Stelle ($O, A$), die so konfiguriert ist, dass sie eine Liste von Einsprüchen ($L_5$) generiert, deren Elemente wiedererkannte öffentliche Schlüssel sind, die durch Aufhebung der Anonymität der anonymen öffentlichen Schlüssel erhalten wurden, die in einer Liste ($L_3$) der anonymen öffentlichen Schlüssel enthalten sind, die zur Überprüfung von Signaturen ($S_i$) verwendet werden, die von den Wählereinheiten erzeugt wurden und dem Schema entsprechen und in Stimmzetteln ($B_i$) enthalten sind;
- wobei das System ein Steuermodul (MCT) aufweist, das geeignet ist, zu überprüfen, ob die wiedererkannten öffentlichen Schlüssel der Einspruchsliste ($L_5$) alle in der Wählerliste ($\mathcal{LE}$) enthalten sind.

**13.** Elektronisches Abstimmungssystem (SYS), das mindestens Folgendes aufweist:

- ein System (DPS) zur Vorbereitung einer Wahl nach Anspruch 8;
- eine Wählereinheit ($V_i$) nach Anspruch 9;
- ein elektronisches Auszählsystem (SDE) mit:

  - einer Vielzahl von Auswertungsmodulen ($M_i$) eines virtuellen Wahllokals, die so konfiguriert sind, dass sie einen privaten Schlüssel ($SK_{M_i}$, $\widetilde{SK_{M_i}}$) zur teilweisen Entschlüsselung für mindestens einen Schwellenwert-Verschlüsselungsalgorithmus empfangen;
  - wobei die Auswertungsmodule ($M_i$) so konfiguriert sind, dass sie nach Abschluss einer Wahl mindestens einen Stimmzettel ($B_i$) erhalten, der von einer virtuellen privaten Wahlurne (UPV) gesammelt wurde, wobei

jeder Stimmzettel ($B_i$) mindestens eine Verpflichtung ( $c_1^i$ ) bezüglich einer Abstimmung ($v_i$), eine Verschlüsselung (( $c_1^i, c_2^i$ )) der Abstimmung ($v_i$), und eine rückverfolgbare anonyme Signatur ($S_i$) einer Wählereinheit ($V_i$) enthält;

- wobei die Auswertungsmodule ($M_i$) so konfiguriert sind, dass sie eine Verschlüsselung ($\ddot{C}$) des Wahlergebnisses erhalten;
- wobei die Auswertungsmodule ($M_i$) so konfiguriert sind, dass sie die Verschlüsselung ($\ddot{C}$) mithilfe ihres privaten Schlüssels ($SK_{Mi}$) zur teilweisen Entschlüsselung teilweise entschlüsseln;
- wobei die Auswertungsmodule *(Mi)* so konfiguriert sind, dass sie zusammenarbeiten, sobald eine vorbestimmte Anzahl (s) von ihnen, die dem Schwellenwert entsprechen, die teilweise Entschlüsselung der Verschlüsselung ($\ddot{C}$) durchgeführt haben, um gemeinsam ein Ergebnis *(Res)* der Wahl zu erhalten; und
- wobei die Auswertungsmodule *(Mi)* so konfiguriert sind, dass sie dieses Ergebnis veröffentlichen *(Res);*
- eine Vorrichtung zur Validierung und Archivierung (DVA) nach Anspruch 10;
- gegebenenfalls eine Vorrichtung zum Prüfen (DA) nach Anspruch 11; und
- gegebenenfalls ein Einspruchssystem (SR) nach Anspruch 12.

## Claims

1. Method for preparing a ballot in an electronic voting system, this method comprising:

   - a step (PS2, PS4) of each module of a plurality of assessor modules ($M_i$) of a virtual polling station (BVV) generating a partial decryption private key ($x_T$, $\widetilde{x_T}$ ) for at least one threshold encryption algorithm;
   - a step (PS6, PS8) of generating a public key (($g_T,h_T$),( $\widetilde{g_T}$ , $\tilde{h}_T$)) for said encryption algorithm and the corresponding private key ($SK_{M_i}$, $\widetilde{SK_{M_i}}$).
   - a step of computing, for at least one voter entity ($V_i$) authorized to participate in the ballot, a public value ($g_s$) from a pair of keys (($SK_O$, $P_O$), ($SK_A$, $P_A$)) of a traceable anonymous signature algorithm ($SigA_1, SigA_2$), said public value being intended to be used by said voter entity ($V_i$) in association with a private key ($x_i$) of said voter entity ($V_i$) to generate an anonymous public key ( $g_S^{x_i}$ ), said private key ($x_i$) being intended to be used by said voter entity ($V_i$) to compute at least one signature ($S_i$) in the context of the ballot, the anonymity of a signature thus obtained being able to be revoked only by a trusted entity (O, A), said trusted entity having computed the public value, said voter entity ($V_i$) being configured to obtain (PS34) its said anonymous public key ( $g_S^{x_i}$ ) blindly.

2. Electronic voting method, implemented by a voter entity ($V_i$) in the context of a ballot, comprising:

   - a step (SCO, SC1) of obtaining a public key (($g_T,h_T$),( $\widetilde{g_T}$ , $h_T$)) for at least one threshold encryption algorithm;
   - a step (SC2) of obtaining a pair of keys ( $x_i, g_S^{x_i}$ ) of a traceable anonymous signature algorithm ($SigA_1$, $SigA_2$), said pair comprising a blindly obtained anonymous public key ( $g_S^{x_i}$ ) and a private key ($x_i$) intended to be used by said voter entity ($V_i$) to compute at least one signature ($S_i$) in the context of the ballot, the anonymity of an anonymous signature thus obtained being able to be revoked only by at least one trusted entity (O, A);
   - a step (SC4) of choosing a vote ($v_i$);
   - a step (SC8) of computing a commitment ( $c_1^i$ ) to said vote ($v_i$);
   - a step (SC10) of computing a cipher (( $c_1^i$ , $c_2^i$ )) of said vote ($v_i$) using said threshold encryption algorithm;
   - a step (SC16) of computing a traceable anonymous signature ($S_i$) of said commitment ( $c_1^i$ ) using said private key ($x_i$) of the traceable anonymous signature algorithm ($SigA_1$, $SigA_2$) ;
   - a step (SC18) of sending a ballot paper ($B_i$) comprising at least said commitment ( $c_1^i$ ), said cipher (( $c_1^i$ , $c_2^i$ )) and said traceable anonymous signature ($S_i$) of said voter entity ($V_i$) to a virtual private ballot box (UPV) .

3. Method according to either one of Claims 1 and 2, **characterized in that** said at least one threshold encryption algorithm is a threshold additive homomorphic encryption algorithm.

4. Method for validating and archiving an electronic vote in the context of a ballot, this method being implemented in a virtual private ballot box (UPV) and comprising:

- a step (U2) of receiving a ballot paper ($B_i$) comprising at least one commitment ( $C_1^i$ ) to a vote ($v_i$), (( $C_1^i$ , $C_2^i$ )) of said vote ($v_i$), a cipher ( $C_3^i$ ) of a random value ($r_i$) used in the commitment of said vote ($v_i$) and a traceable anonymous signature ($S_i$) of a voter entity ($V_i$);
- a step (U4) of verifying said traceable anonymous signature ($S_i$);
- a step (U6) of verifying the absence, from said virtual private ballot box (UPV), of at least two ballot papers ($B_i$, $B_j$) comprising traceable anonymous signatures ($S_i$, $S_{ji}$) associated with one and the same anonymous public key ( $g_S^{x_i}$ );
- if the result of said verifications (U4, U6) is positive, a step (U10) of sending a truncated ballot paper ($BT_i$) comprising said commitment ( $C_1^i$ ) and said traceable anonymous signature ($S_i$) to a virtual public ballot box (UPB);
- a step (U12) of storing said ballot papers ($B_i$) until a deadline for appeal has expired.

5. Method for auditing a ballot, wherein:

- ballot papers ($B_i$) are stored in a virtual private ballot box (UPV), each ballot paper ($B_i$) comprising a commitment ( $C_1^i$ ) to a vote ($v_i$) and to a random value ($r_i$), a cipher (( $C_1^i$ , $C_2^i$ )) of said vote ($v_i$), a cipher ( $C_3^i$ ) of said random value ($r_i$) and a traceable anonymous signature ($S_i$) of a voter entity ($V_i$);
- truncated ballot papers ($BT_i$) obtained from said ballot papers ($B_i$) are stored in a virtual public ballot box (UPB), each truncated ballot paper ($BT_i$) comprising said commitment ( $C_1^i$ ) and said traceable anonymous signature ($S_i$), said method comprising:

  - a step (A0) of obtaining, at the end of a count of said ballot papers ($B_i$), a result *(Res)* of said ballot and a value *(Rand)* corresponding to the sum of the random values ($r_i$);
  - a step (A1) of obtaining said truncated ballot papers ($BT_i$) stored in said virtual public ballot box (UPB);
  - a step (A2) of verifying the traceable anonymous signatures ($S_i$) of said truncated ballot papers ($BT_i$) and of verifying the absence, from said public ballot box (UPB), of at least two truncated ballot papers ($BT_i$, $BT_j$) comprising traceable anonymous signatures ($S_i$, $S_j$) associated with one and the same anonymous public key;
  - a step (A6) of computing an audit commitment ($R'_1$) from the commitments ( $C_1^i$ ) of all of the truncated ballot papers ($BT_i$);
  - a step (A8) of determining an audit result by comparing the audit commitment with a computed commitment (A8) to said result *(Res)* of said ballot and to said value *(Rand)*.

6. Method of appeal, implemented by a system of appeal at the end of a ballot in which voter entities ($V_i$) have participated, identifiers ( $ID_{v_i}$ ) and respective specific public keys ($P_i$) of said voter entities being registered in an electoral list ( $\mathcal{LE}$ ), said specific public keys ($P_i$) conforming to a traceable anonymous signature scheme (*SigA$_1$*, *SigA$_2$*), said method comprising:

- a step (R2) of obtaining a list ($L_3$) of anonymous public keys used by the voter entities ($v_i$), in order to produce signatures ($S_i$) conforming with said scheme and included in ballot papers ($B_i$);
- a step (R4) of at least one trusted entity (O, A) generating an appeals list ($L_5$) the elements of which are re-identified public keys obtained by removing the anonymity of the public keys in said list ($L_3$);
- a step (R18) of verifying that the re-identified public keys in said appeals list ($L_5$) are all included in said electoral list ($\mathcal{LE}$).

7. Electronic voting method, comprising:

- implementing a method for preparing a ballot according to Claim 1;
- implementing a voting method according to Claim 2;
- implementing a count method comprising:

  - a step (PS2, PS4) of each of a plurality of assessor modules ($M_i$) of a virtual polling station (BVV) obtaining a partial decryption private key ($SK_{M_i}$, $\widetilde{SK_{M_i}}$) for at least one threshold encryption algorithm;

- a step (DP2), after the ballot has closed, of each of the plurality of assessor modules ($M_i$) obtaining at least one ballot paper ($B_i$) collected by a virtual private ballot box (UPV), each ballot paper ($B_i$) comprising at least one commitment ($C_1^i$) to a vote ($v_i$), a cipher (($C_1^i$, $C_2^i$)) of said vote ($v_i$), and a traceable anonymous signature ($S_i$) of a voter entity ($V_i$);

- a step (DP3) of each of said assessor modules (Mi) obtaining a cipher ($\ddot{C}$) of the result of the ballot;

- a step (DP10), implemented by each of said assessor modules (Mi), of partially decrypting said cipher ($\ddot{C}$) of the result of the ballot using its partial decryption private key ($SK_{M_i}$);

- when a predetermined number (s) of assessor modules corresponding to said threshold have carried out said partial decryption of said cipher ($\ddot{C}$) of the result of the ballot, a step (DP16) of jointly obtaining a result *(Res)* of said ballot; and

- a step (DP20) of publishing said result *(Res)*;

- implementing a validation and archiving method according to Claim 4;

- optionally implementing an audit method according to Claim 5; and

- optionally implementing a method of appeal according to Claim 6.

8. System (SPS) for preparing a ballot in an electronic voting system, this system comprising:

- a module (MCR) used by each assessor module ($M_i$) of a virtual polling station (BVV) to generate a partial decryption private key ($SK_{M_i}$, $\widetilde{SK_{M_i}}$) for at least one threshold encryption algorithm;

- a module (MCR) for generating a public key (($g_T$, $h_T$), ($\widetilde{g_T}$, $h_T$)) for said encryption algorithm and the corresponding private key ($x_T$, $\widetilde{x_T}$);

- a module (MCR) for computing, for at least one voter entity ($V_i$) authorized to participate in the ballot, a public value ($g_s$) from a pair of keys (($SK_O$, $P_O$), ($SK_A$, $P_A$)) of a traceable anonymous signature algorithm ($SigA_1$, $SigA_2$), said public value being intended to be used by said voter entity ($V_i$) in association with a private key ($x_i$) of said voter entity ($V_i$) to generate an anonymous public key ($g_S^{x_i}$), said private key ($x_i$) being intended to be used by said voter entity ($V_i$) to compute at least one signature ($S_i$) in the context of the ballot, the anonymity of a signature thus obtained being able to be revoked only by a trusted entity (O, A), said trusted entity having computed the public value, said voter entity ($V_i$) being configured to obtain (PS34) its said anonymous public key ($g_S^{x_i}$) blindly.

9. Voter entity ($V_i$) able to be used in the context of a ballot, comprising:

- a module (COM) for obtaining a public key (($g_T$,$h_T$),($\widetilde{g_T}$,$\tilde{h}_T$) for at least one threshold encryption algorithm;

- a module (COM) for obtaining a pair of keys ($x_i$, $g_S^{x_i}$) of a traceable anonymous signature algorithm ($SigA_1$, $SigA_2$), said pair comprising a blindly obtained anonymous public key ($g_S^{x_i}$) and a private key ($x_i$) intended to be used by said voter entity ($V_i$) to compute at least one signature ($S_i$) in the context of the ballot, the anonymity of an anonymous signature thus obtained being able to be revoked only by at least one trusted entity (O, A);

- a module (IHM) for obtaining a choice of a vote ($v_i$);

- a module (MCR) for computing a commitment ($C_1^i$) to said vote ($v_i$);

- a module (MCR) for computing a cipher (($C_1^i$, $C_2^i$)) of said vote ($v_i$) using said threshold encryption algorithm;

- a module (MCR) for computing a traceable anonymous signature ($S_i$) of said commitment ($C_1^i$) using said private key ($x_i$) of the traceable anonymous signature algorithm ($SigA_1$, $SigA_2$) ;

- a module (COM) for sending a ballot paper ($B_i$) comprising at least said commitment ($C_1^i$), said cipher (($C_1^i$, $C_2^i$)) and said traceable anonymous signature ($S_i$) of said voter entity ($V_i$) to a virtual private ballot box (UPV).

10. Device (DVA) for validating and archiving an electronic vote in the context of a ballot, this device being associated with a virtual private ballot box (UPV) and comprising:

- a module (COM) for receiving a ballot paper ($B_i$) comprising at least one commitment ($C_1^i$) to a vote ($v_i$), (($C_1^i$, $C_2^i$)) of said vote ($v_i$), a cipher ($C_3^i$) of a random value ($r_i$) used in the commitment of said vote ($v_i$) and a traceable anonymous signature ($S_i$) of a voter entity ($V_i$);

- a step (U4) of verifying said traceable anonymous signature ($S_i$);

**EP 3 903 445 B1**

- a module (MCR) for verifying said traceable anonymous signature ($S_i$);
- a module (MV) for verifying the absence, from said virtual private ballot box (UPV), of at least two ballot papers ($B_i$,$B_j$) comprising traceable anonymous signatures ($S_i$,$S_{ji}$) associated with one and the same anonymous public key ( $g_s^{x_i}$ );
- a module (COM) configured to send, if the result of said verifications (U4, U6) is positive, a truncated ballot paper ($BT_i$) comprising said commitment ( $C_1^i$ ) and said traceable anonymous signature ($S_i$) to a virtual public ballot box (UPB);
- a module (MS) for storing said ballot papers ($B_i$) until a deadline for appeal has expired and destroying these ballots when this deadline has expired.

11. Device (DAS) for auditing a ballot, wherein:

- ballot papers ($B_i$) are stored in a virtual private ballot box (UPV), each ballot paper ($B_i$) comprising a commitment ( $C_1^i$ ) to a vote ($v_i$) and to a random value ($r_i$), a cipher (( $C_1^i$ , $C_2^i$ )) of said vote ($v_i$), a cipher ( $C_3^i$ ) of said random value ($r_i$) and a traceable anonymous signature ($S_i$) of a voter entity ($V_i$);
- truncated ballot papers ($BT_i$) obtained from said ballot papers ($B_i$) are stored in a virtual public ballot box (UPB), each truncated ballot paper ($BT_i$) comprising said commitment ( $C_1^i$ ) and said traceable anonymous signature ($S_i$),

said device comprising:

- a module (COM) for obtaining, at the end of a count of said ballot papers ($B_i$), a result *(Res)* of said ballot and a value *(Rand)* corresponding to the sum of the random values ($r_i$);
- a module (COM) for obtaining said truncated ballot papers ($BT_i$) stored in said virtual public ballot box (UPB);
- a module (MCR) for verifying the traceable anonymous signatures ($S_i$) of said truncated ballot papers ($BT_i$) and for verifying the absence, from said public ballot box (UPB), of at least two truncated ballot papers ($BT_i$, $BT_j$) comprising traceable anonymous signatures ($S_i$, $S_j$) associated with one and the same anonymous public key;
- a module (MCR) for computing an audit commitment (R'$_1$) from the commitments ( $C_1^i$ ) of all of the truncated ballot papers ($BT_i$);
- a module (MD) for determining an audit result by comparing the audit commitment with a computed commitment (A8) to said result *(Res)* of said ballot and to said value *(Rand)*.

12. System of appeal (SR) configured to carry out an appeal at the end of a ballot in which voter entities ($V_i$) have participated, identifiers ($ID_{v_i}$) and respective specific public keys ($P_i$) of said voter entities being registered in an electoral list ($\mathcal{LE}$), said specific public keys ($P_i$) conforming to a traceable anonymous signature scheme ($SigA_1$, $SigA_2$), said system comprising:

- at least one trusted entity (O, A), configured to generate an appeals list ($L_5$) the elements of which are re-identified public keys obtained by removing the anonymity of anonymous public keys contained in a list ($L_3$) of anonymous public keys used to verify signatures ($S_i$) produced by the voter entities and conforming with said scheme and included in ballot papers ($B_i$);
- said system comprising a control module (MCT) capable of verifying that the re-identified public keys in said appeals list ($L_5$) are all included in said electoral list ($\mathcal{LE}$).

13. Electronic voting system (SYS), comprising at least:

- a system (DPS) for preparing a ballot according to Claim 8;
- a voter entity ($V_i$) according to Claim 9;
- an electronic count system (SDE) comprising:

  - a plurality of assessor modules ($M_i$) of a virtual polling station that are configured to receive a partial decryption private key ($SK_{M_i}$, $\widetilde{SK_{M_i}}$ ) for at least one threshold encryption algorithm;
  - said assessor modules ($M_i$) being configured, after a ballot has closed, to obtain at least one ballot paper ($B_i$) collected by a virtual private ballot box (UPV), each ballot paper ($B_i$) comprising at least one commitment (

53

$C_1^i$ )to a vote ($v_i$), a cipher (( $C_1^i$ , $C_2^i$ )) of said vote ($v_i$), and a traceable anonymous signature ($S_i$) of a voter entity ($V_i$);

- said assessor modules ($M_i$) being configured to obtain a cipher ($\ddot{C}$) of the result of the ballot;
- said assessor modules ($M_i$) being configured to partially decrypt said cipher ($\ddot{C}$) using their partial decryption private key ($SK_{M_i}$);
- said assessor modules *(Mi)* being configured to cooperate, as soon as a predetermined number (s) of them corresponding to said threshold have carried out said partial decryption of said cipher ($\ddot{C}$), in order to jointly obtain a result *(Res)* of said ballot; and
- said assessor modules *(Mi)* being configured to publish said result *(Res);*
- a validation and archiving device (DVA) according to Claim 10;
- optionally an audit device (DA) according to Claim 11; and
- optionally a system of appeal (SR) according to Claim 12.

Fig. 1

Fig. 2

$v_i$

$(g_1, h_1), x_1$ — SC0

$(g_T, h_T), x_T$ — SC1

$(x_i, g_T^{x_i})$ — SC2

$v_i$ — SC4

$r_i$ — SC6

$$C_1^i = \text{Commit}(v_i, r_i) = g^{v_i} h_T{}^{r_i}$$ — SC8

$$(C_1^i = g^{v_i} h_T{}^{r_i}, C_2^i = g_T^{r_i})$$ — SC10

$$(C_3^i = (g^{r_i} h_T{}^{x_i}, g_T^{x_i}))$$ — SC12

$$ZKP_1, ZKP_2$$ — SC14

$$S_i = \text{SigA}_1(C_1^i, ZKP_1)$$ — SC16

$$B_i = (C_1^i, C_2^i, C_3^i, ZKP_1, ZKP_2, S_i) \rightarrow UPV$$ — SC18

Fig. 3

Fig. 4

Fig. 5

Fig. 6

Fig. 7

Fig. 8

Fig. 9

Fig. 10

$$v_i$$

$$l \in Z_p \qquad \text{H2}$$

$$w = u^l \qquad \text{H4}$$

$$w' = (u')^l \qquad \text{H6}$$

$$c_i = w^{s_i}$$
$$T = P_t^{s_i} \qquad \text{H8}$$

$$\sigma_i = (w, w', c_i, T, \Pi_i') \qquad \text{H10}$$

Fig. 11

DVS

$\sigma_i = (w,\ w',\ c_i,\ T,\ \Pi'_i)$

$w \neq 1,\ T \neq 1,\ \Pi'_i$

$e(w, h_0) \cdot e(c_i, h_1)$
$= e(w', h)$

OUI

$\sigma_i$   OK

Fig. 12

Fig. 13

Fig. 14

Fig. 15

$$v_i$$

$$\cdot l \in Z_p$$

VH2

$$w = u^l$$

VH4

$$w' = (u')^l$$

VH6

$$c_i = w^{s_i}$$

$$T = P_i^{s_i}$$

VH8

$$\sigma_i = (w, w', c_i, T_i, \text{VEP}\Pi'_i).$$

VH10

Fig. 16

DVS

VK2

$$\sigma_i = (w, \ w', \ c_i, \ T, \ \text{MT}'_j)$$

$$w \neq 1, \ T \neq 1, \ \text{VEP}\Pi'_j$$

$$e(w, \bar{h}_0) \cdot e(c_i, \bar{X}_1) = e(w', \bar{h})$$

OUI

VK4

$$\sigma_i \ \text{OK}$$

Fig. 17

$$\mathcal{O} \qquad \mathcal{A}$$

VZ2 — $\sigma_i$     VZ2 — $\sigma_i$

VZ4 — $T_1 = T^{(\alpha_x^{\mathcal{O}})^{-1}}$  →  VZ4 — $T_2 = T_1^{(\alpha_x^{\mathcal{A}})^{-1}}$

VZ6 — $VOP\Pi_x^i$

VZ8 — $C'_i : \{C_i, C'_i, x', P\Pi_i, ID_i, PK_i, Sig_{V_i}\}$

$VOP\Pi_i$, $VAP\Pi_i$
$C_i, C'_i, x', PK_i, Sig_{V_i}$
**?**

VZ10 — $\sigma_i$ = signature de $msg$ par $V_i$

Fig. 18

| 7 | 8 | 9 |
| 10 | COM | |

— ORD

Fig. 19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- On Some Incompatible Properties of Voting Schemes. **BENOÎT CHEVALLIER-MAMES** ; **PIERRE-ALAIN FOUQUE** ; **DAVID POINTCHEVAL** ; **JULIEN STERN** ; **JACQUES TRAORÉ**. Towards Trustworthy Elections - New Directions in Electronic Voting. Lecture Notes in Computer Science. Springer, 2010, 191-199